# EUROPÄISCHE PATENTSCHRIFT

(11) **EP 3 771 078 B1**
(45) Veröffentlichungstag und Bekanntmachung des Hinweises auf die Patenterteilung: **02.11.2022**
(21) Anmeldenummer: 20186912.0
(22) Anmeldetag: 21.07.2020
(51) Int. Cl.: H02K 15/04, H02K 15/06

(54) **KRANZANORDNUNGS- UND -FÜGEVORRICHTUNG SOWIE KRANZANORDNUNGS- UND -FÜGEVERFAHREN**
RANGING AND JOINING DEVICE AND CRANK ARRANGEMENT AND JOINING METHOD
DISPOSITIF DE COURONNE ET DISPOSITIF D'ASSEMBLAGE AINSI QUE DISPOSITIF DE COURONNE ET PROCÉDÉ D'ASSEMBLAGE

(30) Priorität: 26.07.2019 DE 102019120261
(43) Veröffentlichungstag der Anmeldung: 27.01.2021
(73) Patentinhaber: Grob-Werke GmbH & Co. KG, 87719 Mindelheim (DE)
(72) Erfinder: Dreher, Clemens, 87719 Mindelheim (DE)
(74) Vertreter: KASTEL Patentanwälte PartG mbB

(56) Entgegenhaltungen:
- WO-A1-2013/153594
- WO-A1-2019/026377
- US-A1- 2019 356 188

## Beschreibung

Die Erfindung betrifft eine Kranzanordnungs- und -fügevorrichtung zum Bilden und Einfügen einer Kranzanordnung aus wenigstens einem Kranz oder mehreren konzentrisch angeordneten Kränzen von vorzugsweise U-förmigen elektrischen Leitern in ein Bauteil einer elektrischen Maschine. Weiter betrifft die Erfindung ein Kranzanordnungs- und -fügeverfahren zum Bilden und Einfügen einer Kranzanordnung aus wenigstens einem Kranz oder mehreren konzentrisch angeordneten Kränzen von vorzugsweise U-förmigen elektrischen Leitern in ein Bauteil einer elektrischen Maschine.

Die Erfindung liegt auf dem Gebiet der Herstellung von Bauteilen von elektrischen Maschinen, wie insbesondere Motoren und Generatoren, und mehr insbesondere auf dem Gebiet der Herstellung von Spulenwicklungen für ein solches Bauteil, wie z.B. einen Stator. Es ist bekannt, derartige Spulenwicklungen aus einzelnen Leitern, z.B. I-Pins oder Hairpins, zu bilden, die in Nuten eines Gehäuses des Bauteils eingefügt werden, wobei die Leiterenden umgeformt und anschließend zu Spulenwicklungen verbunden werden. Zum Einfügen der Leiter ist es aus
WO 2018/233771 A1,
WO 2018/233774 A1 und
WO 2018/233769 A1
WO 2013/153564A1
bekannt, die Leiter zunächst zu einem Kranz anzuordnen und dann den Kranz in das Gehäuse einzufügen.

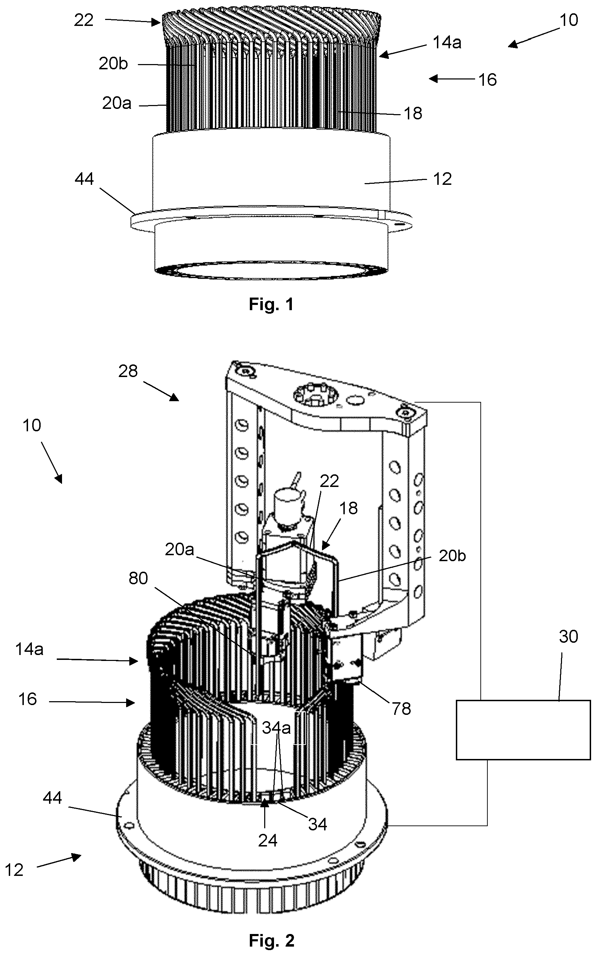

Gemäß [1] bis [4] werden die einzelnen Pins, nachdem sie gebogen worden sind, einzeln gegriffen und dann in ein Vorstecknest zu einem Kranz vorgesteckt. Dafür wird bei [1] bis [3] für jeden Kranz eines Stators ein kranzspezifisches Nest vorgesehen. Ein beispielhaftes Vorstecknest ist in [3], Fig. 1 dargestellt und besteht aus Nuten, deren Abmessungen größer dimensioniert sind als der jeweilige Kranz im Stator an Platzbedarf einnimmt. Nachdem jeder Kranz in ein eigens dafür vorgesehenes Vorstecknest vorgesteckt wurde, werden die Kränze nacheinander mit einer in [1] näher beschriebenen und gezeigten Fügeeinrichtung aus dem jeweiligen Vorstecknest ausgehoben und in einer Sammelaufnahme in Form eines Sammelnests vereint. Wenn z.B. eine Kranzanordnung aus einem ersten bis dritten Kranz zu bilden ist, kann mit dem Außenkranz begonnen werden, dann erfolgt ein Überführen des Mittelkranzes, dann des Innenkranzes. Das aus [1] und [2] bekannte Sammelnest ähnelt dem Vorstecknest - siehe [1] -, nur dass dessen Außen- bzw. Innendurchmesser so ausgelegt sind, dass alle Kränze darin Platz finden und nicht nur ein spezifischer (wie das beim Vorstecknest der Fall ist) - es ist also so dimensioniert, dass die Nuten des Sammelnestes in tangentialer als auch radialer Richtung größer sind, als alle Kränze gemeinsam an Platz im Stator benötigen. Wenn nacheinander Außen-, Mittel- und Innenkranz mit der Fügeeinrichtung im Sammelnest vereint sind, werden alle Kränze gemeinsam mit der Fügeeinrichtung aus dem Sammelnest ausgehoben und anschließen mit der Fügeeinrichtung in den Stator gefügt.

Bei der Literaturstelle [4] wird ein Vorstecknest mit beweglichen Stegen eingesetzt, auf dem die Kränze gebildet werden und von dem aus nacheinander die Kränze auf eine Kranzpositionierungseinrichtung mit nach außen schräg gerichteten Neigungsarmen überführt werden und dann in ein Sammelnest überführt werden, das eine Ringanordnung von nach außen offenen Nuten aufweist, die durch radiale Platten begrenzt werden, die an der Oberseite eine nach innen gerichtete Schräge aufweisen. Die Arme der Kranzpositioniereinrichtung sind axial und radial beweglich und können zur Übergabe zwischen die Platten gefahren werden. Beim Hängen auf den Armen der Kranzpositioniereinrichtung und beim Hängen auf den Platten haben die Leiter unterschiedliche axiale Positionen. Weiter ist an dem Sammelnest ein axial beweglicher Ringfuß vorgesehen, auf dem Enden der Leiter aufstützen, so dass die Kränze relativ zueinander im Sammelnest in der Höhe positioniert werden.

### Bei der Literaturstelle

WO 2019/026377 A1
werden Kränze auf einer rotierenden Trommel mit radial beweglichen Stegen gebildet, zwischen denen Aufnahmenuten für die Leiter gebildet sind. Auf dieser Trommel wird insgesamt eine Kranzanordnung gebildet, die dann unter radialem Zurückziehen der Stege und geführt durch eine gesonderte Führungseinrichtung zur Positionierung in einen Statorkern überführt wird.

Demnach wird im Stand der Technik nach der Literaturstelle [1] und [2] ein Kranzanordnungs- und -fügeverfahren mit folgenden Schritten durchgeführt:
1.1. Vorstecken der einzelnen Pins zu Außenkranz in einem (Außenkranz-) Vorstecknest;
1.2. Ausheben des Außenkranzes aus dem (Außenkranz-)Vorstecknest mit Fügeeinrichtung;
1.3. Fügen des Außenkranzes in das Sammelnest mit Fügeeinrichtung;
2. Analoges Vorgehen mit Mittelkranz;
3. Analoges Vorgehen mit Innenkranz.

Alle Kränze befinden sich dann in Sammelnest.
4. Ausheben aller Kränze aus Sammelnest mit Fügeeinrichtung;
5. Fügen aller Kränze in den Stator mit Fügeeinrichtung.

Die aus [1] bis [3] bekannten Verfahren und Vorrichtungen haben sich bewährt; es lassen sich Spulenwicklungen mit hoher Qualität effektiv herstellen.

Die Erfindung hat sich zur Aufgabe gestellt, die aus [1] bis [3] bekannten Vorrichtungen und Verfahren hinsichtlich geringeren apparativen und prozesstechnischen Aufwands zu verbessern.

Zum Lösen dieser Aufgabe schafft die Erfindung eine Kranzanordnungs- und -fügevorrichtung und ein Kranzanordnungs- und -fügeverfahren gemäß den unabhängigen Ansprüchen 1 und 8.

Vorteilhafte Ausgestaltungen sind Gegenstand der Unteransprüche.

Die Erfindung schafft gemäß einem ersten Aspekt davon eine Kranzanordnungs- und - fügevorrichtung zum Bilden und Einfügen einer Kranzanordnung aus wenigstens einem Kranz oder mehreren konzentrisch angeordneten Kränzen von vorzugsweise U-förmigen elektrischen Leitern in ein Bauteil einer elektrischen Maschine, umfassend eine Sammelaufnahme mit mehreren um eine Achse ringförmig angeordneten und durch radiale Stege begrenzten Nuten, eine Stegbewegungseinrichtung zum radialen Bewegen der Stege, eine Bauteilpositioniereinrichtung zum Positionieren des Bauteils in eine mit der Sammelaufnahme ausgerichteten Position und eine Kranzanordnungsfügeeinrichtung zum axialen Einfügen der Kranzanordnung bei zurückgezogenen Stegen aus der Sammelaufnahme in das Bauteil.

Mit der Vorrichtung und dem Verfahren gemäß Ausführungsbeispielen der Erfindung lassen sich insbesondere U-förmige elektrische Leiter (Hairpins) zu wenigstens einem Kranz anordnen und in ein Maschinenbauteil, wie insbesondere ein Statorgehäuse (z.B. Blechpaket) einfügen. Die Vorrichtung und Verfahren gemäß Ausführungsbeispielen der Erfindung sind alternativ auch für einschenkelige Leiter ohne U-Umbiegung (I-Pins, d.h. einschenkelige Pins) einsetzbar.

Es ist erfindungsgemäß vorgesehen, dass die Stege in eine Positionierungs-Stegposition, in der die Stege die Nuten zum Positionieren der Leiter zwecks Einführens in Bauteilnuten verengen, bewegbar sind.

Es ist bevorzugt, dass die Stege an Stegschiebern ausgebildet sind, die durch die Stegbewegungseinrichtung radial verschiebbar sind.

Es ist bevorzugt, dass die Stege radiale Bereiche unterschiedlicher Dicke aufweisen.

Es ist bevorzugt, dass die Stege ein radial inneres freies Ende aufweisen.

Es ist bevorzugt, dass die Stege Schrägflächen an einem Übergangsbereich zwischen Bereichen unterschiedlicher Dicke aufweisen.

Es ist bevorzugt, dass die Stege wenigstens eine sich in einer Umfangsrichtung erstreckende Umfangsfläche zum Begrenzen einer zugeordneten Nut in einer radialen Richtung und/oder zum Positionieren von sich in einer zugeordneten Nut befindlichen Leitern in radialer Richtung aufweisen.

Es ist bevorzugt, dass die Stege wenigstens eine Stufe an einer Seitenfläche aufweisen.

Es ist bevorzugt, dass die Stege in eine Steck-Stegposition, in der die Stege Nuten zum Stecken wenigstens eines Kranzes von Leitern in die Sammelaufnahme begrenzen, bewegbar sind.

Es ist bevorzugt, dass die Stege in eine zurückgezogene Stegposition, in der die Stege den axialen Weg zum Einführen der Leiter in die Bauteilnuten beim Einfügen der Kranzanordnung freigeben, bewegbar sind.

Es ist bevorzugt, dass die Nuten der Sammelaufnahme durch eine sich in Umfangsrichtung erstreckende Nutbegrenzung an einer ersten radialen Seite begrenzbar sind.

Es ist bevorzugt, dass die Nuten der Sammelaufnahme durch wenigstens einen äußeren Ringbereich an einer radial äußeren Seite begrenzt sind.

Es ist bevorzugt, dass die Nuten der Sammelaufnahme bei in einer Steck-Stegposition befindlichen Stegen an einer zweiten radialen Seite jeweils eine Öffnung aufweisen.

Es ist bevorzugt, dass die Nuten der Sammelaufnahme bei in einer Steck-Stegposition befindlichen Stegen durch wenigstens eine an den Stegen ausgebildete sich in einer Umfangsrichtung erstreckende Umfangsfläche oder Stufenfläche radial begrenzt sind.

Es ist bevorzugt, dass die Nuten der Sammelaufnahme durch Bewegung von Stegschiebern, an denen die Stege ausgebildet sind, in ihren radialen Abmessungen und/oder in ihren Abmessungen in Umfangsrichtung veränderbar sind.

Es ist bevorzugt, dass die Stegbewegungseinrichtung radial außen an der Sammelaufnahme angeordnet ist.

Es ist bevorzugt, dass eine Steuerung zur Steuerung der Stegbewegungseinrichtung, der Bauteilpositioniereinrichtung und der Kranzanordnungsfügeeinrichtung vorgesehen ist.

Eine bevorzugte Kranzanordnungs- und -fügevorrichtung weist eine Kranzpositioniereinrichtung zum relativen axialen Positionieren eines oder mehrerer der Kränze auf, wobei die Kranzpositioniereinrichtung eine Stützeinrichtung zum Stützen der elektrischen Leiter eines zu steckenden Kranzes in einer axialen Steckposition, bei der die Leiter aus der Sammelaufnahme weiter vorstehen, und eine Halteeinrichtung zum Halten der Leiter eines fertig gesteckten Kranzes in einer Lagerposition, in der die Leiter des fertig gesteckten Kranzes weiter in die Sammelaufnahme eingefahren sind, aufweist und dazu ausgebildet ist, mit der Stützeinrichtung die Leiter eines zu steckenden zweiten Kranzes zu stützen, während die Halteeinrichtung die Leiter eines fertig gesteckten ersten Kranzes in der Lagerposition hält.

Es ist bevorzugt, dass die Kranzpositioniereinrichtung in die Öffnung eingreifende radial und/oder axial bewegliche Kranzpositionier-Schieber aufweist, an der die Stützeinrichtung und/oder die Halteeinrichtung ausgebildet sind.

Es ist bevorzugt, dass die Stützeinrichtung an einer sich quer zur Achse erstreckenden Stirnfläche der einzelnen Kranzpositionier-Schieber ausgebildete Anschläge für die Leiter aufweist und/oder dass die Halteeinrichtung eine gegen eine Nutbegrenzung der Nut verfahrbare Mantelfläche an den einzelnen Kranzpositionier-Schiebern aufweist, so dass die Leiter zwischen der Mantelfläche und der Nutbegrenzung positioniert werden können.

Vorzugsweise sind die Kranzpositionier-Schieber so bewegbar, dass die Leiter zwischen der Mantelfläche und der Nutbegrenzung geklemmt werden können. Es muss aber nicht zwangsläufig ein Klemmen erfolgen; ein Positionieren mit geringeren, d. h. nicht klemmenden Kräften (d. h. kein Kraftschluss) oder auch mit geringem Spiel wäre grundsätzlich ebenso möglich.

Es ist bevorzugt, dass die Nuten an einer inneren radialen Seite offen ausgebildet sind und dass eine Kranzpositionier-Schieber-Bewegungseinrichtung zum radialen und/oder axialen Bewegen der Kranzpositionier-Schieber radial innerhalb der Sammelaufnahme anordenbar ist.

Bei einer derzeit bevorzugten Ausgestaltung ist vorgesehen, dass die Öffnungen der Nuten der Sammelaufnahme an einer inneren radialen Seite ausgebildet sind und dass eine Kranzpositionier-Schieber-Bewegungseinrichtung zum radialen und/oder axialen Bewegen der Kranzpositionier-Schieber radial innerhalb der Sammelaufnahme anordenbar ist. Die ganze Anordnung kann auch gespiegelt sein, d. h. die Öffnungen der Nuten sind dann an einer äußeren radialen Seite ausgebildet und die Kranzpositionier-Schieber-Bewegungseinrichtung ist radial außerhalb der Sammelaufnahme anordenbar. Z.B. wären dann im Inneren Nuten angeordnet, und Schieber außen drücken die Drähte in die innen angeordneten Nuten.

Es ist bevorzugt, dass die Lagerposition eine Anschlagposition ist, an der die vorzugsweise U-förmigen Leiter mit ihrem U-förmigen Ende an Stirnflächen der Stege der Sammelaufnahme anschlagen und dadurch positionierbar sind.

Es ist bevorzugt, dass eine Greifeinrichtung zum Greifen und Stecken der Leiter zu einem Kranz vorgesehen ist.

Es ist bevorzugt, dass die Steuerung zum Steuern der Kranzpositioniereinrichtung und der Greifeinrichtung ausgebildet ist.

Es ist bevorzugt, dass die Steuerung dazu ausgebildet ist, die Stegbewegungseinrichtung, die Bauteilpositioniereinrichtung und die Kranzanordnungsfügeeinrichtung anzusteuern zum Anordnen wenigstens eines Kranzes in Nuten einer Sammelaufnahme, die konzentrisch um eine Achse der Sammelaufnahme angeordnet sind und durch bewegbare radiale Stege begrenzt sind, zum Ausrichten des Bauteils zu der Sammelaufnahme, zum Wegbewegen der Stege, und zum axialen Einschieben der Kranzanordnung aus der Sammelaufnahme in das Bauteil.

Gemäß einem weiteren Aspekt schafft die Erfindung ein Kranzanordnungs- und -fügeverfahren zum Bilden und Einfügen einer Kranzanordnung aus wenigstens einem Kranz oder mehreren konzentrisch angeordneten Kränzen von vorzugsweise U-förmigen elektrischen Leitern in ein Bauteil einer elektrischen Maschine, umfassend die Schritte:
S1 Anordnen des wenigstens einen Kranzes in Nuten einer Sammelaufnahme, die konzentrisch um eine Achse der Sammelaufnahme angeordnet sind und durch bewegbare radiale Stege begrenzt sind,
S2 Ausrichten des Bauteils zu der Sammelaufnahme,
S3 Wegbewegen der Stege, und
S4 Axiales Einschieben der Kranzanordnung aus der Sammelaufnahme in das Bauteil.

Erfindungsgemäß umfasst das Kranzanordnungs- und -fügeverfahren den Schritt: Positionieren der Leiter in den Nuten vor dem Einschieben.

Hierzu umfasst das Kranzanordnungs- und -fügeverfahren gemäß der Erfindung den Schritt: Verengen der Abmessung der Nuten in Umfangsrichtung zum Positionieren der Leiter in Umfangsrichtung vor dem Einschieben.

Vorzugsweise umfasst das Kranzanordnungs- und -fügeverfahren den Schritt: radiales Bewegen einer sich in Umfangsrichtung erstreckenden Nutbegrenzung zum radialen Positionieren der Leiter in den Nuten vor dem Einschieben.

Vorzugsweise umfasst Schritt S1):
a) Stecken elektrischer Leiter in die Nuten der Sammelaufnahme an einer axialen Steckposition, an der die Leiter weiter aus der Sammelaufnahme axial vorstehen, um einen ersten Kranz zu bilden,
b) axiales Verlagern des ersten Kranzes aus der axialen Steckposition weiter in die Sammelaufnahme hinein in eine Lagerposition,
c) Stecken elektrischer Leiter in die Nuten der Sammelaufnahme an der axialen Steckposition, um einen zweiten Kranz zu bilden, während der erste Kranz an der Lagerposition gehalten wird, und
d) axiales Verlagern des zweiten Kranzes in die Lagerposition. Vorzugsweise umfasst Schritt S1):
e) Stecken elektrischer Leiter in die Nuten der Sammelaufnahme an der Steckposition, um einen dritten Kranz zu bilden, während der erste und der zweite Kranz an der Lagerposition gehalten wird, und
f) axiales Verlagern des dritten Kranzes in die Lagerposition.

Es ist bevorzugt, dass als erster Kranz ein äußerer Kranz gesteckt wird und der zweite Kranz weiter radial innen als der erste Kranz gesteckt wird.

Es ist bevorzugt, dass als zweiter Kranz ein mittlerer Kranz gesteckt wird.

Es ist bevorzugt, dass als dritter Kranz ein innerer Kranz gesteckt wird.

Es ist bevorzugt, dass die Leiter beim Stecken durch bewegliche Anschläge abgestützt werden, so dass sie beim Stecken an der Steckposition verbleiben.

Es ist bevorzugt, dass das axiale Verlagern durch Fallenlassen erfolgt.

Es ist bevorzugt, dass das Halten wenigstens eines bereits vorher gesteckten Kranzes an der Lagerposition durch Positionieren der Leiter zwischen einem Kranzanordnungs-Schieber und einem Ringbereich der Sammelaufnahme erfolgt.

Es ist bevorzugt, dass das axiale Verlagern mittels Schwerkraft durch Wegbewegen einer Stützeinrichtung erfolgt.

Es ist bevorzugt, dass das axiale Verlagern durch eine Relativbewegung zwischen der Sammelaufnahme und einer Kranzpositioniereinrichtung erfolgt.

Es ist bevorzugt, dass das axiale Verlagern des jeweiligen Kranzes aus der Steckposition in eine tiefere Anschlagsposition als Lagerposition erfolgt, in der die U-förmigen Enden der Leiter auf Stegen der Sammelaufnahme, welche die Nuten in Umfangsrichtung begrenzen, aufliegen.

Es ist bevorzugt, dass das Kranzanordnungs- und fügeverfahren mit einer Kranzanordnungs- und - fügevorrichtung nach einer der voranstehenden Ausgestaltungen durchgeführt wird.

Gemäß einem weiteren Aspekt schafft die Erfindung ein Computerprogrammprodukt, umfassend Steueranweisungen, die, wenn in eine Steuerung einer Kranzanordnungs- und -fügevorrichtung nach einer der voranstehenden Ausgestaltungen geladen, die Kranzanordnungs- und -fügevorrichtung veranlassen, das Kranzanordnungs- und -fügeverfahren nach einer der voranstehenden Ausgestaltungen durchzuführen.

Besonders bevorzugte Ausgestaltungen der Erfindung schaffen eine Vorrichtung und ein Verfahren zum Vorstecken und Fügen aller Kränze.

Bei dem bisherigen Vorgehen gemäß [1] und [2] nimmt der gesamte Ablauf anlagentechnisch gesehen zwei Stationen in Anspruch.

Eine bevorzugte Ausgestaltung eines Kranzanordnungs- und -fügeverfahrens weist insbesondere folgenden Ablauf auf:
1. Vorstecken der einzelnen Pins, vorzugsweise mit Hairpin-Greifer zu mehreren Kränzen, wie z.B. Außen-, Mittel- und Innenkranz in die Kranzanordnungs- und fügevorrichtung gemäß einer der voranstehenden Ausgestaltungen; somit befinden sich alle Kränze sich in dieser Vorrichtung;
2. Fügen aller Kränze gemeinsam und gleichzeitig aus der Vorrichtung in das Bauteil, insbesondere ein Gehäuse eines Stators.

Einige Vorteile bevorzugter Ausführungsformen der Erfindung sind:
- Einsparpotential einer kompletten Station (z.B. einer Fügestation)
- Sehr hohes Einsparpotential bei der Taktzeit
- Äußerst "schlanker" Ablauf
- Kompakterer Anlagenaufbau möglich
- Fügeeinrichtung entfällt
- eine Transporteinrichtung, z.B. Linearportal entfällt (wird zum Beispiel bei bekannten Verfahren zum Bewegen der Fügeeinrichtung zwischen einer Vorsteckstation und einer Fügestation eingesetzt)
- Sammelnest entfällt
- Vorstecknester entfallen
- Gesamtes Handling von Sammelnest und Vorstecknester entfällt

Besondere Vorteile bieten Ausgestaltungen, bei denen mehrere Kränze in einer Sammelaufnahme zusammen vorgesteckt werden. Das erfindungsgemäße gemeinsame Durchführen von Vorstecken einer Kranzanordnung und Einfügen der Kranzanordnung in das Bauteil bietet aber auch Vorteile, wenn die Kranzanordnung nur einen einzelnen Kranz enthält. Der einzelne Kranz lässt sich in der Kranzanordnungs- und -fügevorrichtung vorstecken und mit Hilfe dieser Kranzanordnungs- und - fügevorrichtung in das Bauteil einfügen. Das gemeinsame Vorstecken und Fügen mit nur einer Vorrichtung ist auch mit einem Kranz allein möglich und sinnvoll, da dann ein Kranz direkt in das Bauteil, z.B. den Stator, eingebracht werden kann, ohne den Kranz wie bei [1] und [2] zunächst mittels Greifelementen ausheben zu müssen.

Im Folgenden werden einige besondere Vorteile und Merkmale bevorzugter Ausgestaltungen der Erfindung näher erläutert:
Beim Vorstecken ist es sehr wünschenswert, dass der Kranz bzw. bereits vorgesteckte Pins des Kranzes aus dem Nest herausstehen. Dies liegt daran, dass sich bereits im Nest befindliche Hairpins (also bereits vorgesteckte Pins) durch die Vorsteckbewegung des aktuell im Vorsteckprozess befindlichen Pins (Pin der sich aktuell im Hairpin-Greifer befindet) leicht wegbewegen können sollen, um ein Vorstecken zu erleichtern oder gar zu ermöglichen. Die gewünschte "Bewegungsfreiheit" erhalten die bereits vorgesteckten Pins, wenn sie in einer definierten Höhe aus dem Vorstecknest herausstehen. Beim Vorstecken eines Kranzes stehen daher vorzugsweise bereits im Nest befindliche Leiter, wie insbesondere Hairpins, aus der Sammelaufnahme heraus.

Bei einer vorteilhaften Ausgestaltung der Erfindung ist vorgesehen, dass nun alle Kränze in eine Kranzanordnungs- und -fügevorrichtung vorgesteckt werden sollen - ohne mehrere spezifische Vorstecknester zu verwenden. Dabei wird bevorzugt derart vorgegangen, dass ein vollständig vorgesteckter erster Kranz (z.B. begonnen mit Außenkranz) in die Kranzanordnungs- und - fügevorrichtung aufgenommen wird - also von der für das Vorstecken vorgesehenen erhöhten Position in eine tiefere Position überführt wird-, um dann den daraufhin vorzusteckenden zweiten Kranz, z.B. Mittelkranz, bzw. dessen Leiter (z.B. Hairpins) wieder auf einer erhöhten Position in der Kranzanordnungs- und -fügevorrichtung vorzustecken. Beim Vorstecken des Mittelkranzes befindet sich zum Beispiel der bereits vorgesteckte Außenkranz in einer tieferen Position und der aktuell im Vorsteckprozess befindliche Mittelkranz in erhöhter Position. Zum Bilden der Kranzanordnung werden vorzugsweise alle Kränze dann in die tiefere Position überführt.

Nachdem alle Kränze (Außen-, Mittel-, Innenkranz) in die Vorrichtung vorgesteckt worden sind, und sich in der tieferen Position in der Vorrichtung befinden, ist es sehr vorteilhaft, die Kränze aus dieser Position direkt in das Bauteil, insbesondere den Stator, zu fügen.

Vorzugsweise wird hierzu das Bauteil, insbesondere der Stator, vorzugsweise mit Isolationspapier, unterhalb der Kranzanordnungs- und -fügevorrichtung angeordnet und die Kränze durch eine Relativbewegung zwischen Kranzanordnungs- und -fügevorrichtung und Bauteil (z.B. Stator) vorgefügt. Vorzugsweise werden die unterhalb der Kranzanordnungs- und -fügevorrichtung überstehenden Pins in die Gehäusenuten des Bauteils (z.B. Stator) eingeführt. Es ist vorteilhaft, die Leiter (z.B. Hairpins) hierzu sehr genau zu positionieren, um die Gehäusenut des Bauteils (z.B. Stators) zu treffen.

Um die Leiter, insbesondere Hairpins, auf Endtiefe in das Bauteil (insbesondere den Stator) fügen zu können, ist bei Ausgestaltungen der Erfindung vorgesehen, die Stege der Kranzanordnungs- und - fügevorrichtung entfernbar auszugestalten, so dass die Leiter (Pins) durch eine Kranzanordnungsfügeeinrichtung (z.B. eine Druckplatte) in das Bauteil (insbesondere den Stator) gefügt werden können.

Im Folgenden wird ein bevorzugter Aufbau der Kranzanordnungsvorrichtung beschrieben:
Die Kranzanordnungs- und -fügevorrichtung weist vorzugsweise eine Sammelaufnahme mit radial bewegbaren Stegen und eine Stegbewegungseinrichtung zum Bewegen der Stege auf. Vorzugsweise sind die Sammelaufnahme und die Stegbewegungseinrichtung durch eine äußere Zustelleinheit gebildet. In besonders bevorzugter Ausgestaltung weist die Kranzanordnungs- und -fügevorrichtung auch eine Kranzpositionierungseinrichtung, die ein gemeinsames Stecken mehrerer Kränze in die Kranzanordnungs- und -fügevorrichtung ermöglicht oder erleichtert, auf. Vorzugsweise ist die Kranzpositionierungseinrichtung durch eine innere Zustelleinheit gebildet. Bei anderen Ausgestaltungen kann die Anordnung der Zustelleinheiten gespiegelt sein, d.h. eine Kranzpositionierungseinrichtung ist durch eine äußere Zustelleinheit gebildet und eine Sammelaufnahme mit Stegbewegungseinrichtung ist durch eine innere Zustelleinheit gebildet. Im Folgenden werden die einzelnen Ausbildungen und
Funktionen und Vorteile anhand des Beispiels erörtert, bei dem die innere Zustelleinheit zur Kranzpositionierung beim Stecken dient und die äußere Zustelleinheit als Sammelaufnahme mit Möglichkeit der Stegbewegung zum Fügen dient; die entsprechenden Merkmale, Funktionen und Vorteile sind analog auch auf die gespiegelte Anordnung anwendbar.

Die insbesondere durch die innere Zustelleinheit gebildete Kranzpositioniereinrichtung besitzt vorzugsweise radial bewegliche Kranzpositionier-Schieber, die durch eine Mechanik betätigt werden (die Funktion der Mechanik kann unterschiedlich sein, vorzugsweise ist ein aktuatorisch bewegbares Kranzpositionier-Betätigungselement vorgesehen, dessen Bewegung durch ein Umsetzgetriebe in eine radiale Bewegung der Kranzpositionier-Schieber umsetzbar ist).

Die insbesondere durch die äußere Zustelleinheit gebildete Sammelaufnahme besitzt ebenfalls radial bewegliche Stegschieber, die durch eine Mechanik betätigt werden (die Funktion der Mechanik kann unterschiedlich sein, vorzugsweise ist ein aktuatorisch bewegbares Steg-Betätigungselement vorgesehen, dessen Bewegung durch ein Umsetzgetriebe in eine radiale Bewegung der Stegschieber umsetzbar ist).

Die Kranzpositioniereinrichtung befindet sich vorzugsweise im Zentrum der Sammelaufnahme. Insbesondere befindet sich die innere Zustelleinheit im Zentrum der äußeren Zustelleinheit.

Wenn bei einer Ausgestaltung die Kranzpositionier-Schieber radial nach innen eingefahren und die Stegschieber radial nach außen eingefahren sind, entsteht zwischen den beiden Zustelleinheiten ein ringförmiger/rohrförmiger Kanal, in den von oben eine Kranzanordnungsfügeeinrichtung, insbesondere eine rohrförmige Druckplatte, einfahren kann, ohne mit den Schiebern zu kollidieren. Bei einer anderen Ausgestaltung kann die Kranzpositioniereinrichtung mit ihren Kranzpositionierschiebern als Kranzanordnungsfügeeinrichtung dienen und den wenigstens einen fertig gesteckten Kranz bei wegbewegten Stegen mit ihren ausgefahrenen Kranzpositionier-Schiebern durch Relativbewegung zu der Sammelaufnahme in die Gehäusenuten des Bauteils einfügen.

Wenn die Kranzpositionier-Schieber radial nach außen ausgefahren sind, fahren sie vorzugsweise in den eben beschrieben ringförmigen Kanal ein und bilden dadurch für die Enden der Leiter, insbesondere Hairpins, eine Art Zwischenboden, bedingt durch die Geometrie der Kranzpositionier-Schieber. Beim Vorstecken werden die Leiter-Enden jedes einzelnen Kranzes vorzugsweise auf die Stirnflächen dieser Kranzpositionier-Schieber aufgestellt. Nachdem ein Kranz vorgesteckt wurde, werden die Kranzpositionier-Schieber vorzugsweise radial nach innen eingefahren, dadurch werden die Leiter-Enden des Kranzes von der Stirnfläche der Schieber geschoben und fallen in den ringförmigen Kanal hinein (den Leitern, z.B. Hairpins, wird der "Zwischenboden weggezogen"). Neben der Funktion des Zwischenbodens (insbesondere durch die Stirnflächen) übernehmen die Kranzpositionier-Schieber beim Vorstecken der einzelnen Leiter, z.B. Hairpins, zu Kränzen und beim Fügen der Kränze in das Bauteil (z.B. den Stator) die Funktion des Positionieren in radialer Richtung; dies kann insbesondere durch eine zu einer Ringbegrenzung hin verfahrbaren Mantelfläche der Kranzpositionier-Schieber erfolgen.

Bei einer bevorzugten Ausgestaltung der Kranzanordnungs- und -fügevorrichtung können gleichzeitig die Steg-Schieber radial nach innen ausgefahren werden. Die Steg-Schieber sind vorzugsweise derart ausgebildet, dass sie zwischen die Kranzpositionier-Schieber ebenfalls in den ringförmigen Kanal einfahren können und den ringförmigen Kanal in Nuten unterteilen. Die Steg-Schieber bilden vorzugsweise die Nutbegrenzung der Nuten der Sammelaufnahme. Die Nuten der Sammelaufnahme entsprechen vorzugsweise in ihrer Anzahl den Gehäusenuten des Bauteils, wie insbesondere eines Stators. In ihren Abmessungen sind die entstandenen Nuten der Sammelaufnahme jedoch vorzugsweise deutlich größer dimensioniert als die des Gehäuses. Zum Beispiel sind der Außendurchmesser größer, der Innendurchmesser kleiner und/oder die tangentiale Nutbreite beidseitig größer.

Vorzugsweise entspricht die eben beschriebene Stellung der Steg-Schieber einer Mittelstellung, die beim Vorstecken der Leiter zum Einsatz kommt - Beispiel für die Steck-Stegposition.

Beim Fügen der Kränze in das Bauteil, wie z.B. den Stator, werden vorzugsweise zunächst die Stegschieber maximal nach innen ausgefahren. Vorzugsweise sind die Stegschieber derart ausgebildet, dass in dieser Position - Beispiel für Positionier-Position - die Leiter in der Nut positioniert werden. So führt vorzugsweise, durch eine spezielle Geometrie der "Finger" oder Stege, das maximale Ausfahren der Steg-Schieber (hier z.B. radial nach innen) zu einer sehr genauen Positionierung der Pins in tangentialer Richtung (beidseitig) und in radialer Richtung nach außen. Vorzugsweise werden durch eine solche Bewegung aufgrund der Geometrie der Steg-Schieber die entstehenden Nuten der Sammelaufnahme in ihren Abmessungen verringert. Zum Beispiel werden der Außendurchmesser kleiner und/oder die tangentiale Nutbreite wird zumindest einseitig, vorzugsweise beidseitig, kleiner.

Vorzugsweise werden die Leiter, z.B. Hairpins, radial nach innen beim Fügen zunächst durch die Mantelfläche der Kranzpositionier-Schieber positioniert. Zum Beispiel wird durch ein Ausfahren der Kranzpositionier-Schieber der Innendurchmesser größer.

Durch wenigstens eine, mehrere oder vorzugsweise alle der vorbeschriebenen Maßnahmen werden die Nuten so verkleinert und derart ausgerichtet, dass sich darin befindliche Leiter exakt relativ zu den Gehäusenuten des Bauteils - z.B. Stator - ausrichten. Vorzugsweise erfolgt ein radiales Positionieren der Leiter beim Fügen in den Stator. Durch dieses Zusammenspiel sind die Leiter, z.B. Hairpins, so genau positioniert, dass ein Fügen in den Stator einfach möglich ist.

Vorzugsweise fahren die Kranzpositionier-Schieber auf einer definierten Höhe in die Nuten, die durch die Steg-Schieber entstanden sind, ein. Vorzugsweise weisen die Kranzpositionier-Schieber eine geringere Höhe auf als die Steg-Schieber.

Ausführungsbeispiele der Erfindung werden im Folgenden anhand der beigefügten Zeichnungen näher erläutert. Darin zeigt:
Fig. 1 eine perspektivische schematische Prinzipdarstellung einer Ausführungsform einer Kranzanordnungs- und -fügevorrichtung mit einem gesteckten Kranz von Leitern;
Fig. 2 eine perspektivische schematische Prinzipdarstellung der Kranzanordnungs- und - fügevorrichtung beim Stecken des Kranzes;
Fig. 3 eine weitere perspektivische Prinzipdarstellung der Kranzanordnungs- und -fügevorrichtung von
Fig. 1 und 2, wobei ein bereits vorher gesteckter erster Kranz in einer tieferen Lagerposition und ein danach gesteckter zweiter Kranz in einer angehobenen Steckposition gezeigt ist;

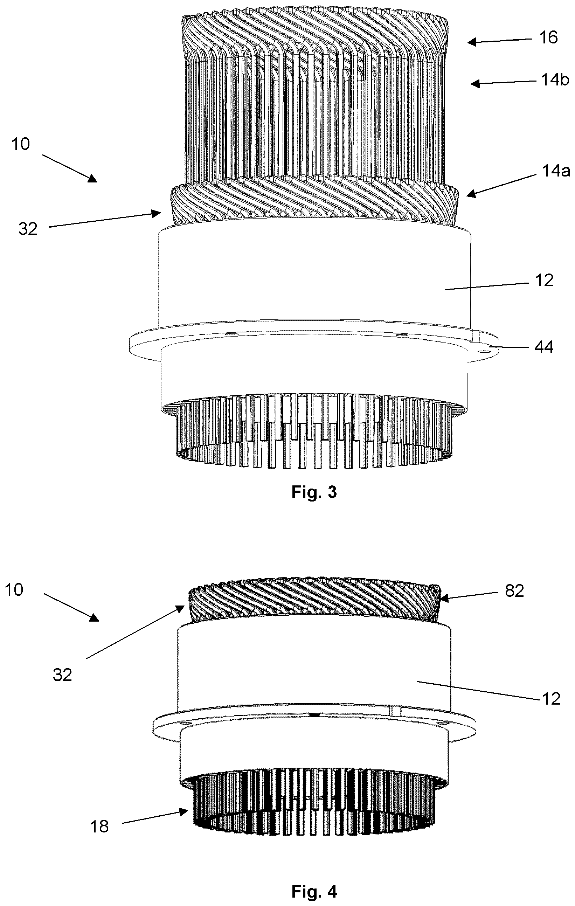

Fig. 4 eine weitere perspektivische Prinzipdarstellung der Kranzanordnungs- und -fügevorrichtung von
Fig. 1 bis 3, wobei ein erster bis dritter Kranz gesteckt sind und sich in der tieferen Lagerposition befinden und so eine in ein Gehäuse eines Bauteils einzufügende Kranzanordnung bilden;

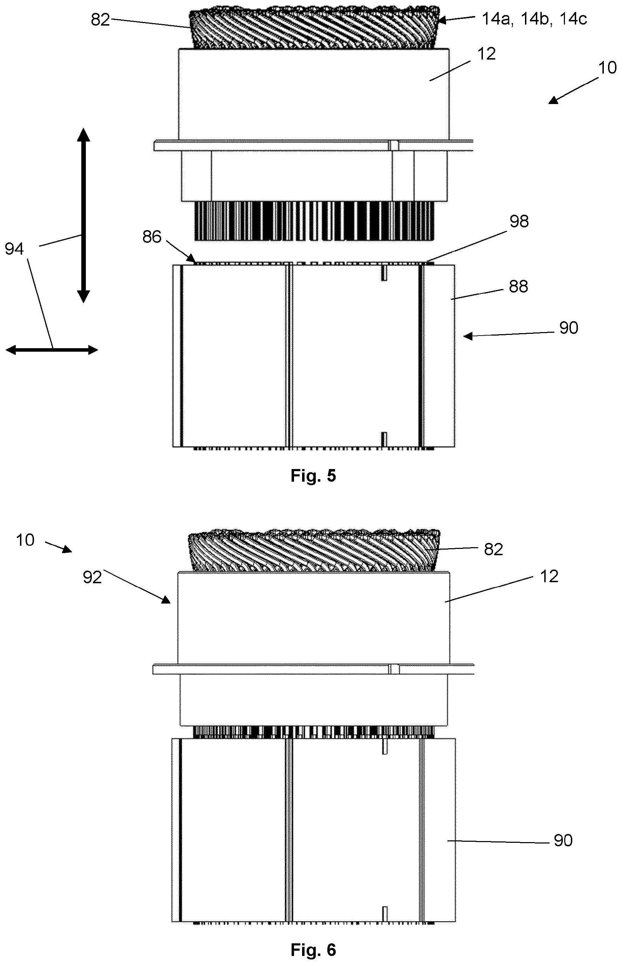

Fig. 5 die Kranzanordnungs- und -fügevorrichtung von Fig. 4, wobei das Gehäuse eines Stators als Beispiel für das Bauteil mit der Kranzanordnungs- und -fügevorrichtung ausgerichtet wird;
Fig. 6 die Anordnung aus Kranzanordnungs- und -fügevorrichtung und Gehäuse von Fig. 5 beim Vorfügen von Enden der Leiter in Gehäusenuten;

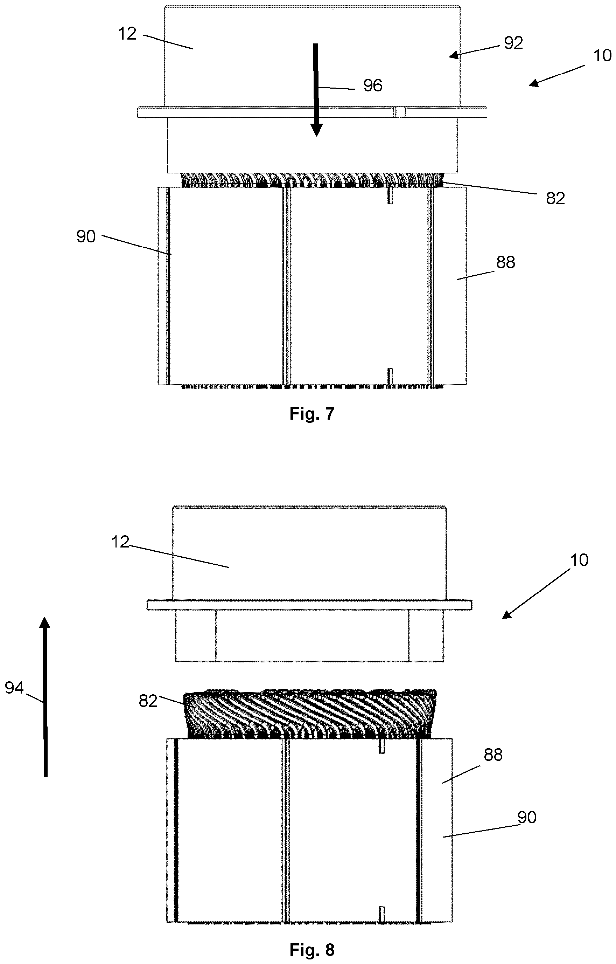

Fig. 7 die Anordnung aus Kranzanordnungs- und -fügevorrichtung und Gehäuse beim Überführen der Kranzanordnung - hierzu verwendete Kranzanordnungsfügeeinrichtung nicht dargestellt;
Fig. 8 die Anordnung von Fig. 7, wobei das Bauteil mit der eingefügten Kranzanordnung wieder relativ zu der Kranzanordnungs- und -fügevorrichtung wegbewegt wird;

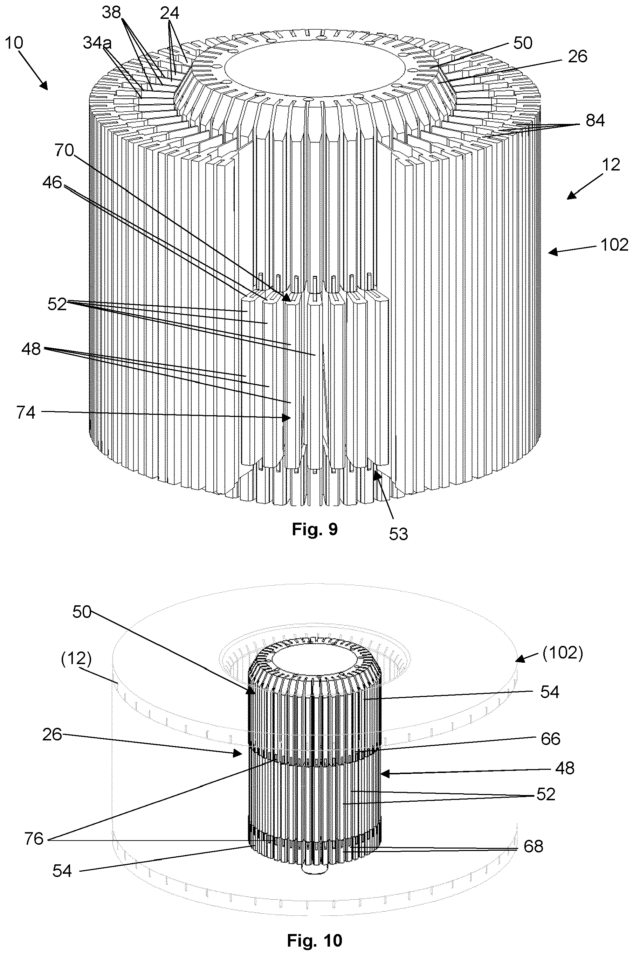

Fig. 9 eine perspektivische Ausführungsform einer Kranzanordnungs- und -fügevorrichtung mit einer durch eine innere Zustelleinheit gebildeten Kranzpositioniereinrichtung und einer durch eine äußere Zustelleinheit gebildeten Sammelaufnahme mit beweglichen Stegen und Stegbewegungseinrichtung, wobei Teile der Kranzanordnungs- und -fügevorrichtung zur Darstellungszwecken ausgeblendet sind;

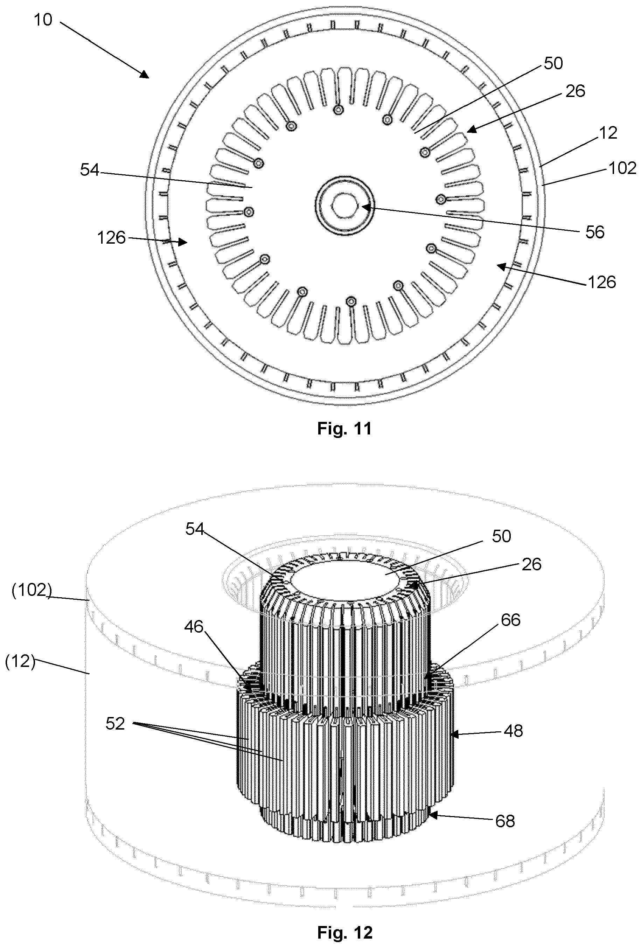

Fig. 10 und 11eine perspektivische Darstellung und eine Draufsicht in axialer Richtung der inneren Zustelleinheit mit eingefahrenen Kranzpositionier-Schiebern;

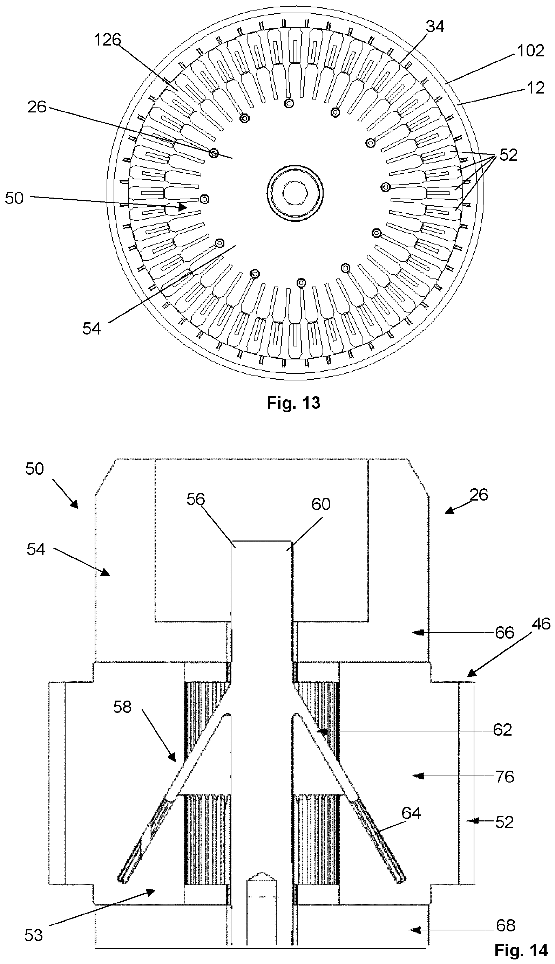

Fig. 12 und 13eine perspektivische Darstellung und eine Draufsicht in axialer Richtung der inneren Zustelleinheit mit ausgefahrenen Kranzpositionier-Schiebern;
Fig. 14 eine Schnittdarstellung durch die innere Zustelleinheit mit ausgefahrenen Kranzpositionierschiebern;

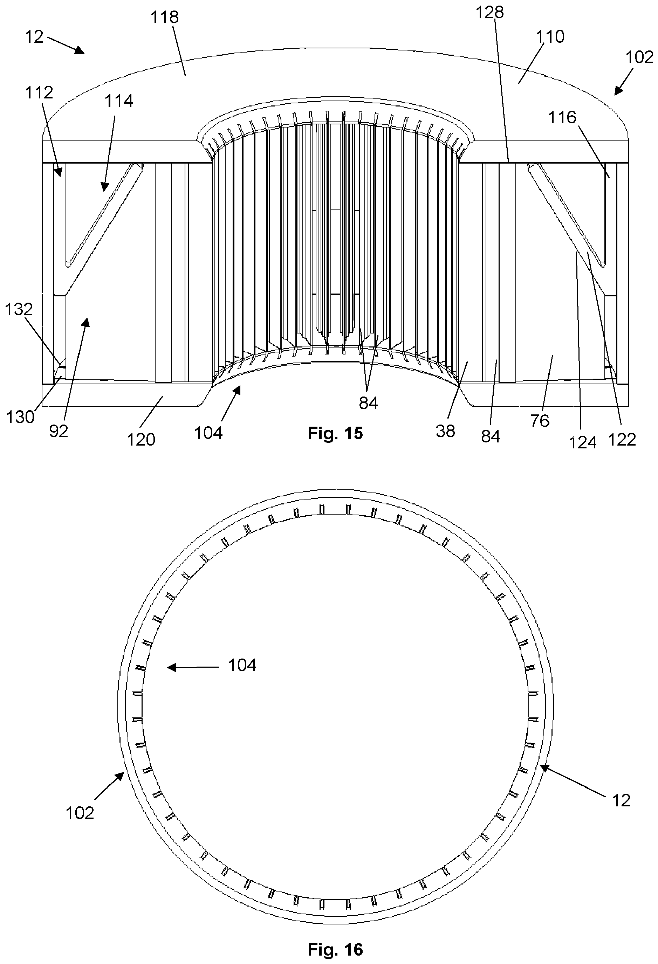

Fig. 15 und 16eine teils weggeschnittene perspektivische Darstellung und eine Draufsicht in axialer Richtung der äußeren Zustelleinheit mit in einer zurückgezogenen Stegposition befindlichen Stegschiebern;

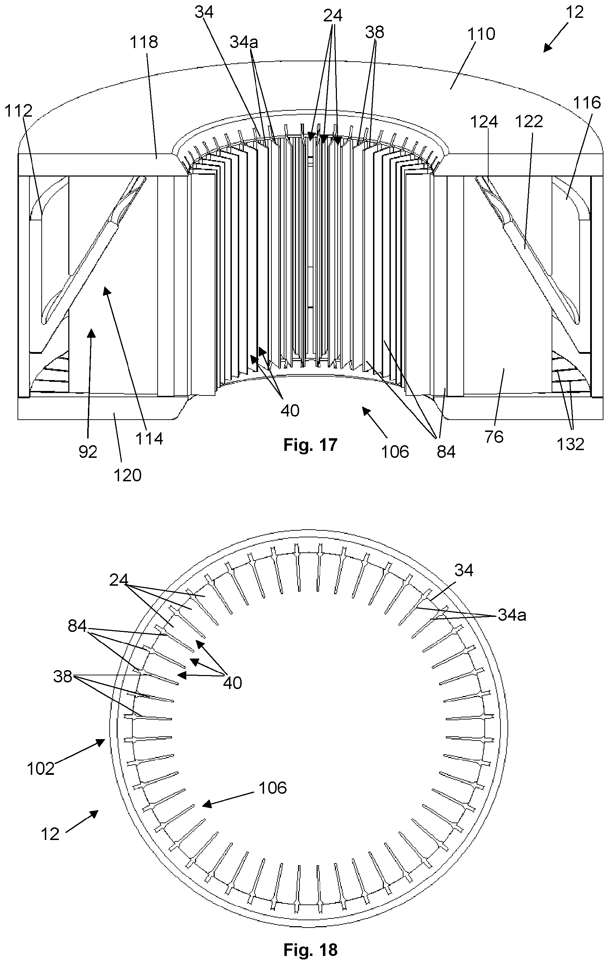

Fig. 17 und 18 eine teils weggeschnittene perspektivische Darstellung und eine Draufsicht in axialer Richtung der äußeren Zustelleinheit mit in einer Steck-Stegposition befindlichen Stegschiebern;

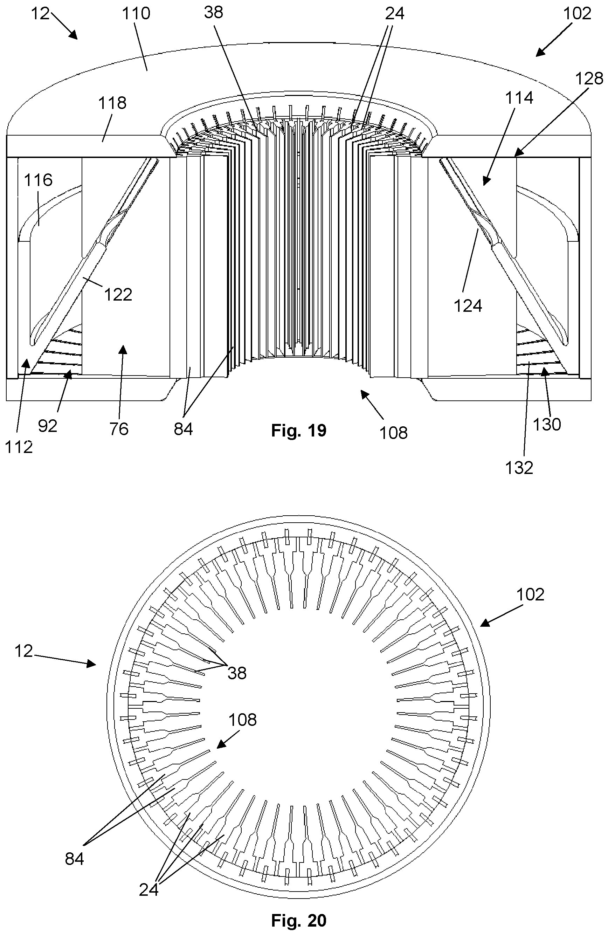

Fig. 19 und 20 eine teils weggeschnittene perspektivische Darstellung und eine Draufsicht in axialer Richtung der äußeren Zustelleinheit mit in einer Positionierungs-Stegposition befindlichen Stegschiebern;

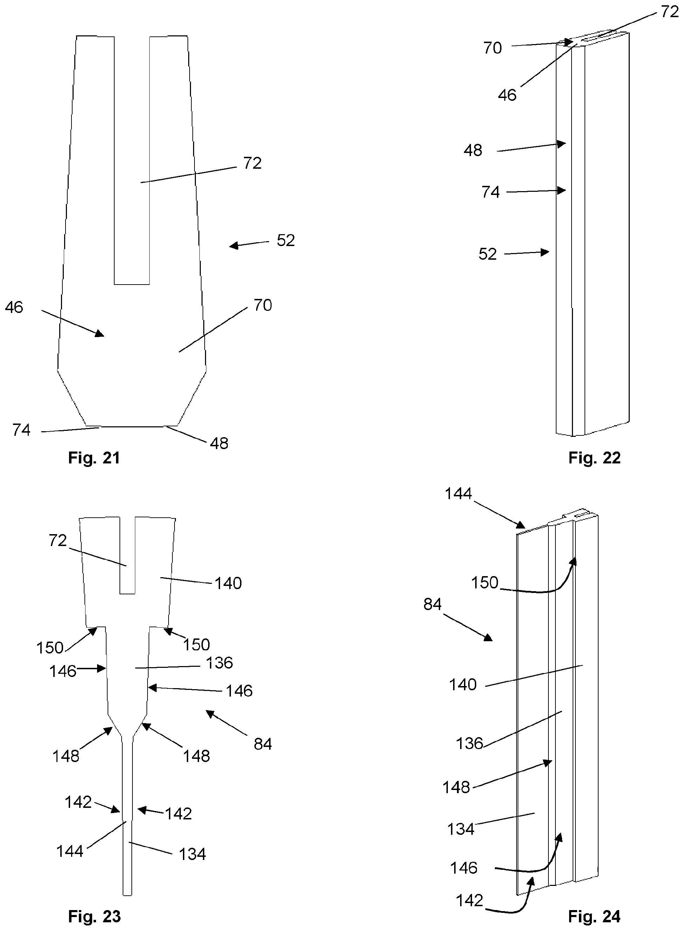

Fig. 21 und 22 eine Draufsicht und eine perspektivische Ansicht eines Kranzpositionier-Schiebers;
Fig. 23 und 24 eine Draufsicht und eine perspektivische Ansicht eines Stegschiebers;

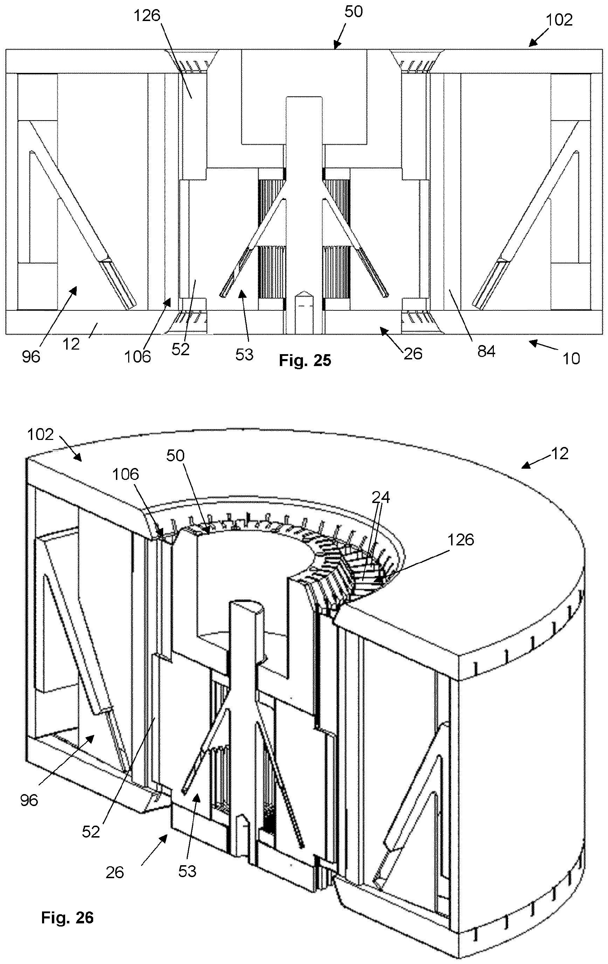

Fig. 25, 26 und 27 eine Schnittdarstellung, eine perspektivische Schnittdarstellung und eine Draufsicht der Kranzanordnungs- und -fügevorrichtung in einer Grundstellung;

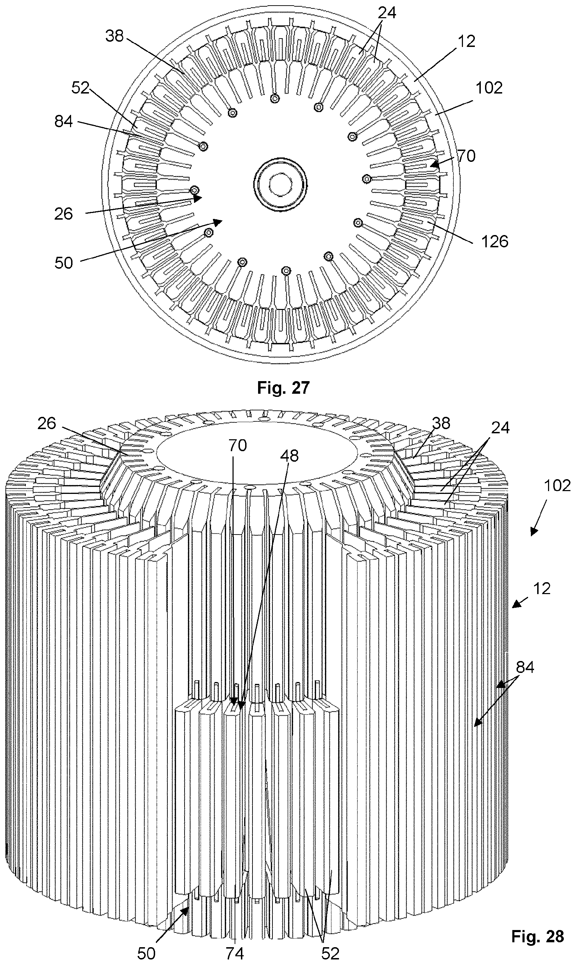

Fig. 28 eine perspektivische, teilweise weggebrochene Darstellung der Kranzanordnungs- und - fügevorrichtung in der Grundstellung;

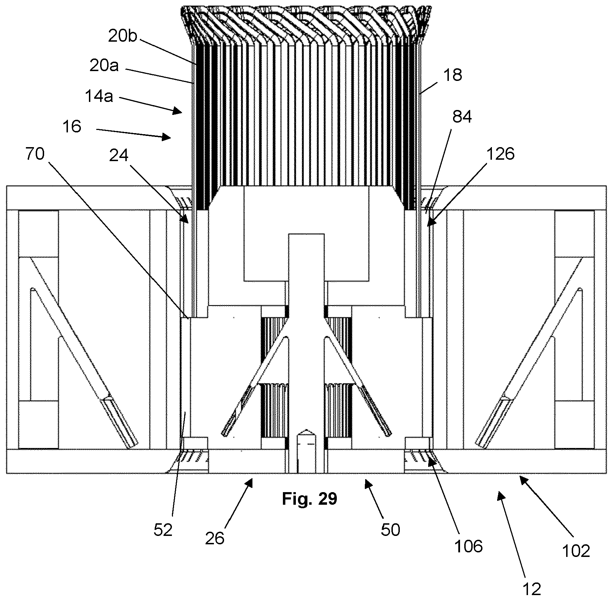

Fig. 29 die Kranzanordnungs- und -fügevorrichtung in der Grundstellung wie in Fig. 25 mit gestecktem ersten Kranz, z.B. Außenkranz, wobei sich der erste Kranz in einer Steckposition befindet;

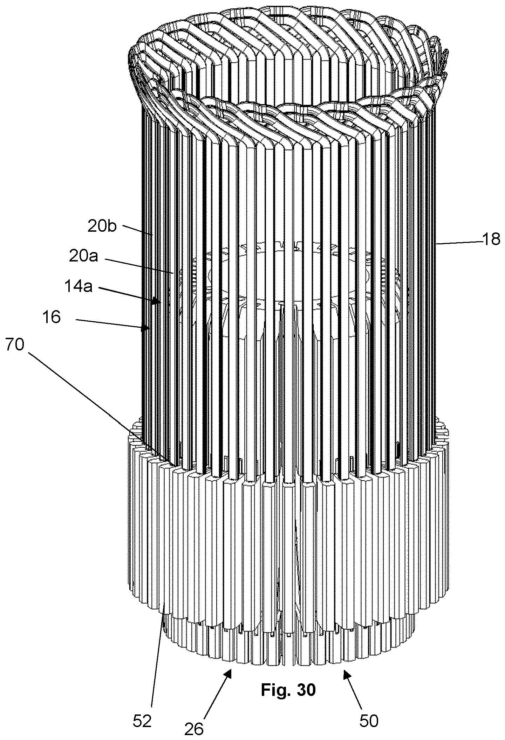

Fig. 30 eine perspektivische Darstellung der inneren Zustelleinheit der Kranzanordnungs- und - fügevorrichtung in dem Zustand von Fig. 28 und 29 mit gestecktem ersten Kranz;

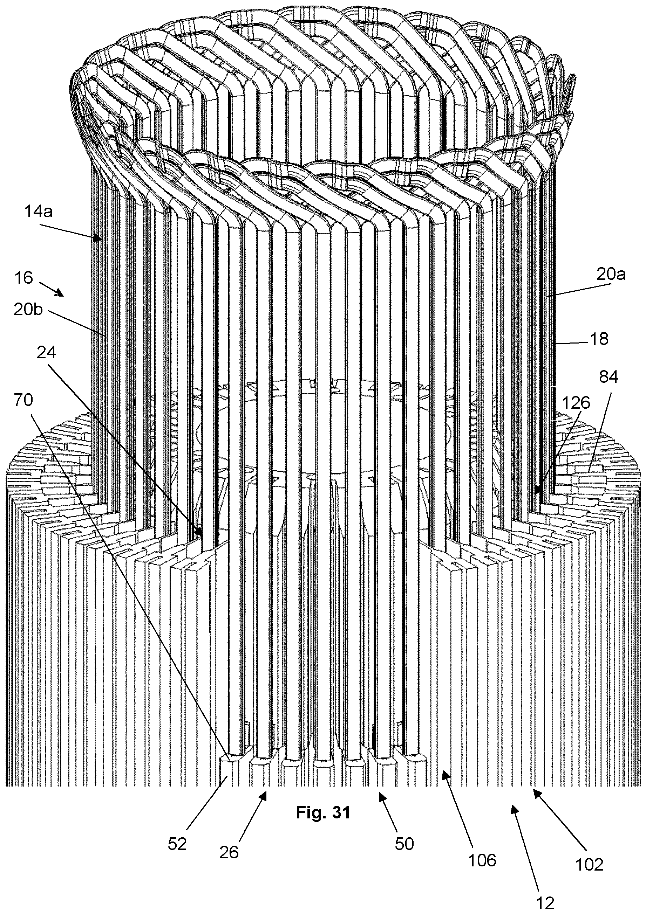

Fig. 31 eine perspektivische Teilansicht der Kranzanordnungs- und -fügevorrichtung in der Grundstellung wie in Fig. 28 mit gestecktem erstem Kranz in der Steckposition, wobei Teile ausgebildet sind;

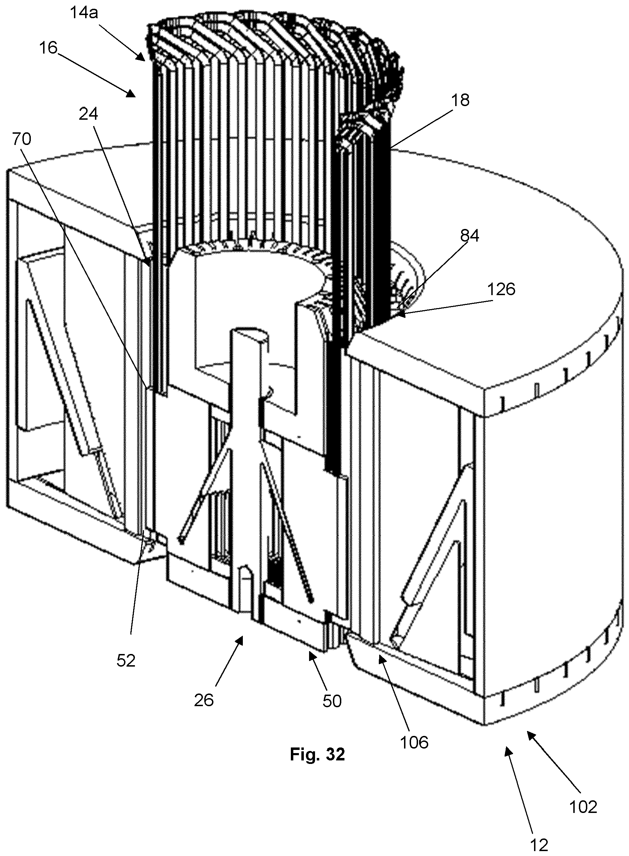

Fig. 32 eine perspektivische Ansicht der Kranzanordnungs- und -fügevorrichtung in der Grundstellung wie in Fig. 26 mit gestecktem ersten Kranz in der Steckposition;

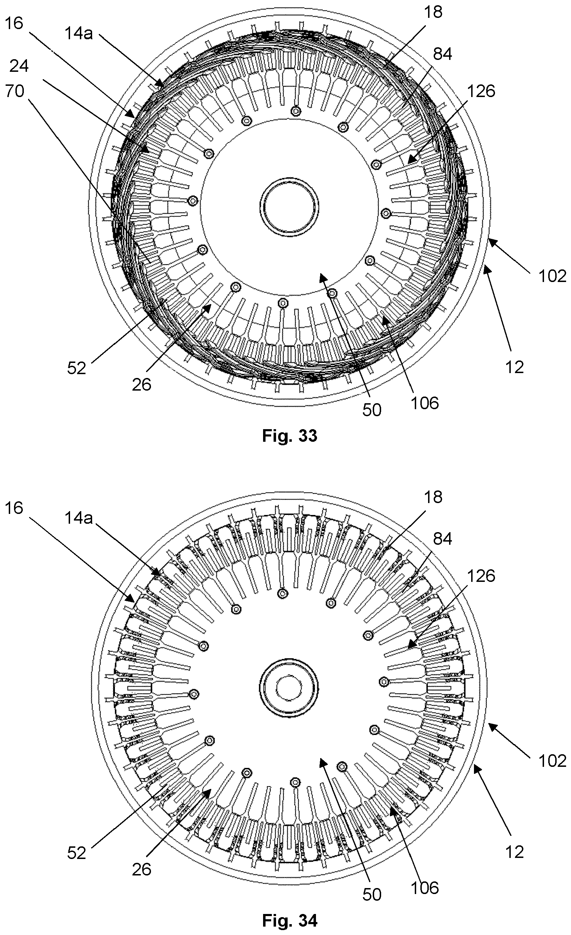

Fig. 33 und 34 die Kranzanordnungs- und -fügevorrichtung in der Grundstellung mit gestecktem ersten Kranz in der Steckposition in einer Ansicht von oben und von unten;

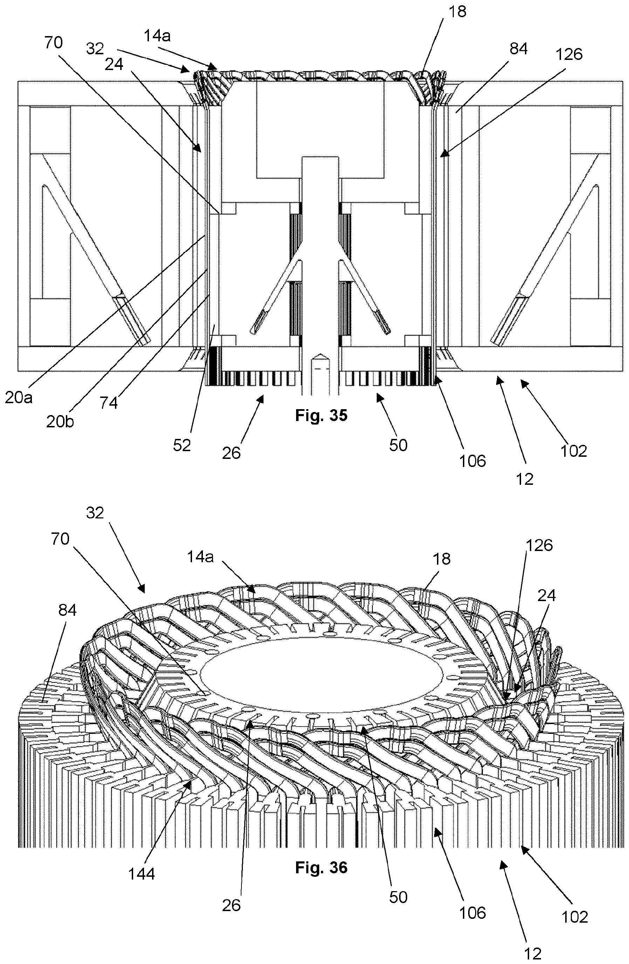

Fig. 35 eine Schnittdarstellung der Kranzanordnungs- und -fügevorrichtung mit eingefahrenen Kranzpositionierschiebern, wodurch sich der erste Kranz in einer tieferen Lagerposition befindet;
Fig. 36 eine perspektivische Darstellung eines oberen Bereichs der Kranzanordnungs- und - fügevorrichtung in dem Zustand von Fig. 35;

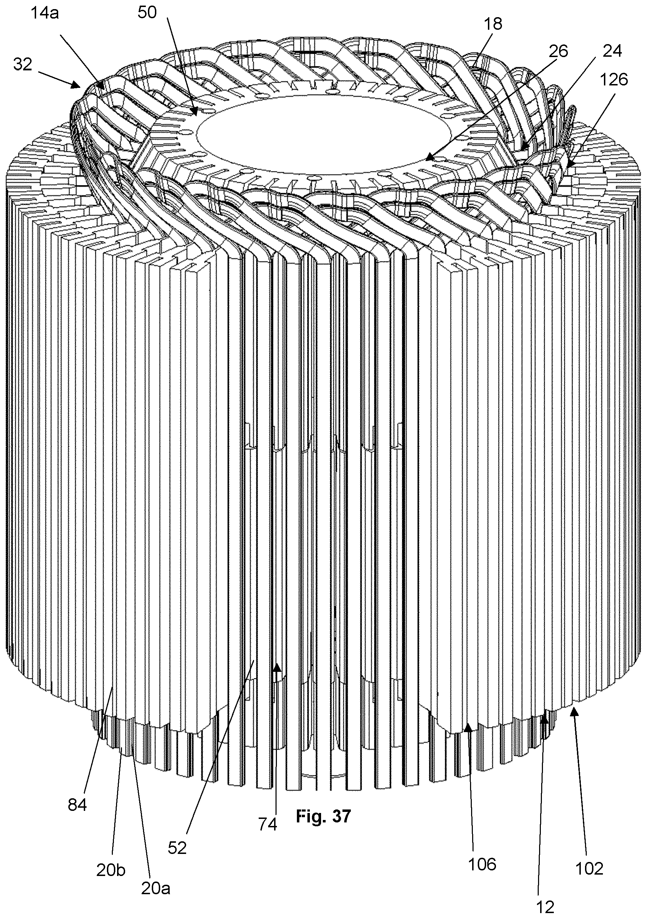

Fig. 37 eine perspektivische, teilweise weggebrochene Darstellung der Kranzanordnungs- und - fügevorrichtung in dem Zustand von Fig. 35;

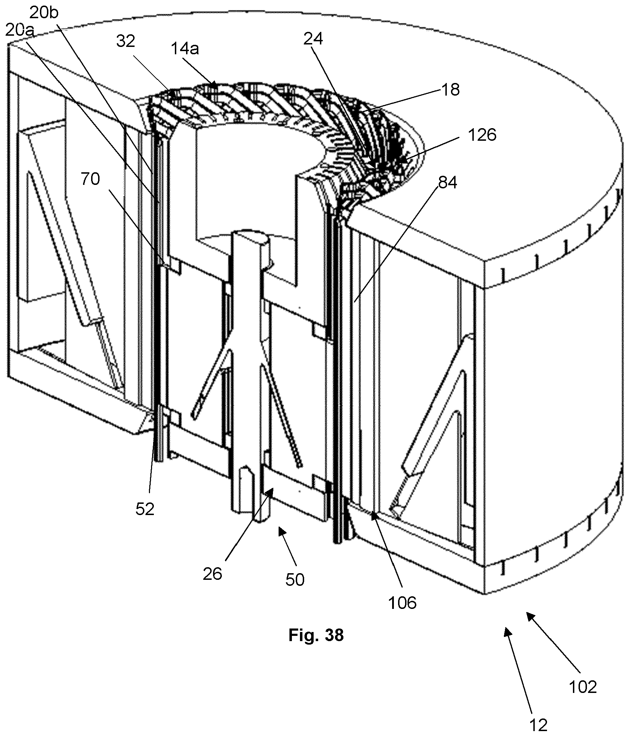

Fig. 38 eine perspektivische Schnittansicht der Kranzanordnungs- und -fügevorrichtung in dem Zustand von Fig. 35;

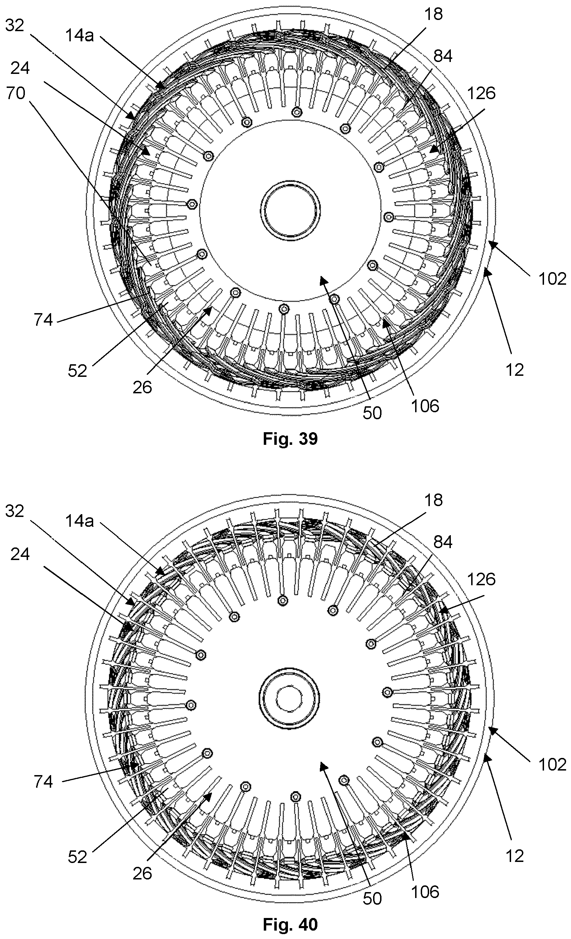

Fig. 39 und 40 die Kranzanordnungs- und -fügevorrichtung in dem Zustand von Fig. 35 in einer Ansicht von oben und von unten;

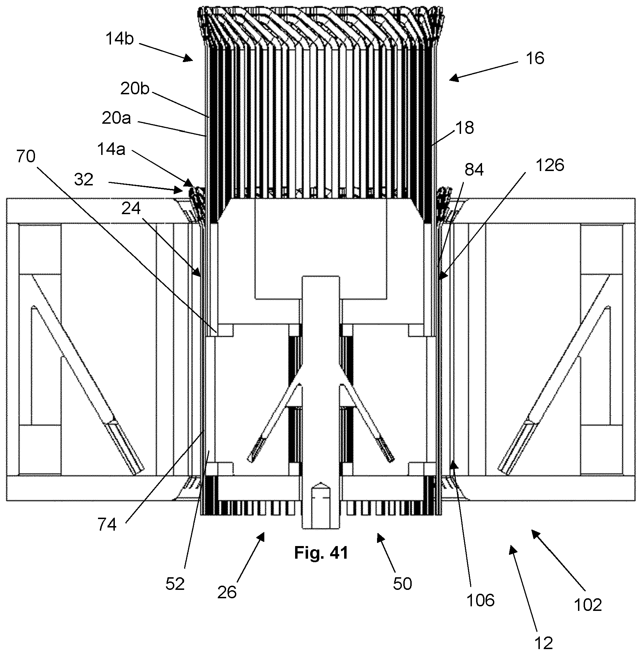

Fig. 41 eine Schnittdarstellung der Kranzanordnungs- und -fügevorrichtung beim Stecken eines zweiten Kranzes, z.B. eines Mittelkranzes, wobei sich der erste Kranz in der Lagerposition und der zweite Kranz in der Steckposition befindet;

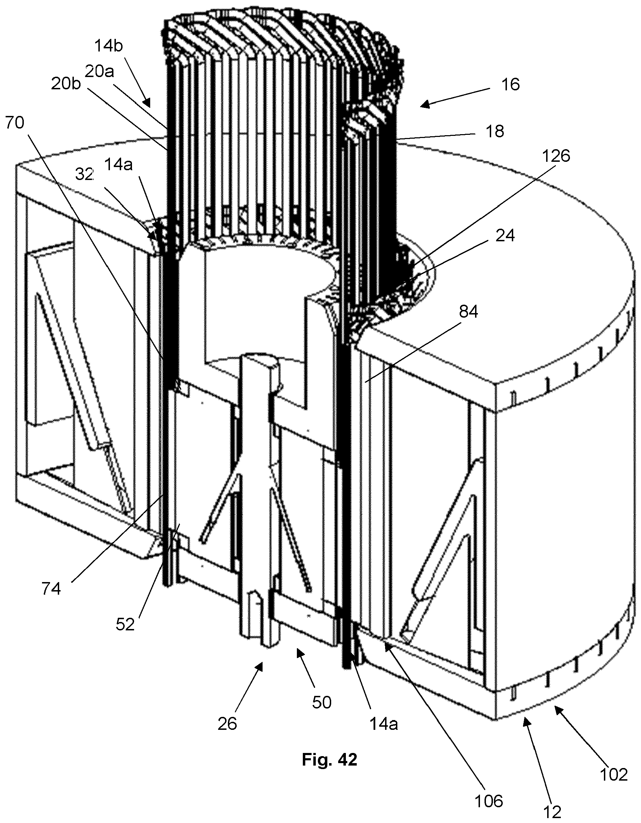

Fig. 42 eine perspektivische Schnittansicht der Kranzanordnungs- und -fügevorrichtung in dem Zustand von Fig. 41;

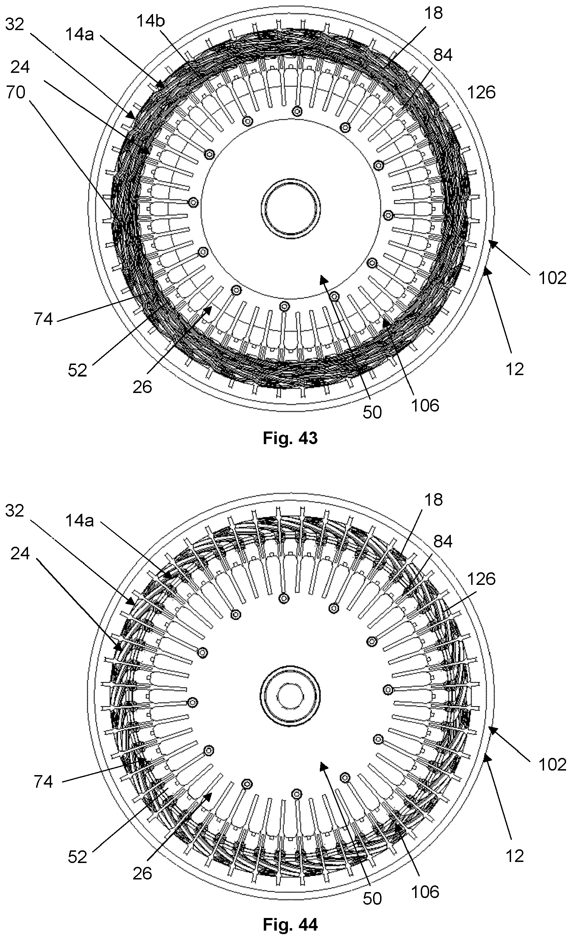

Fig. 43 und 44 die Kranzanordnungs- und -fügevorrichtung in dem Zustand von Fig. 41 in einer Ansicht von oben und von unten;

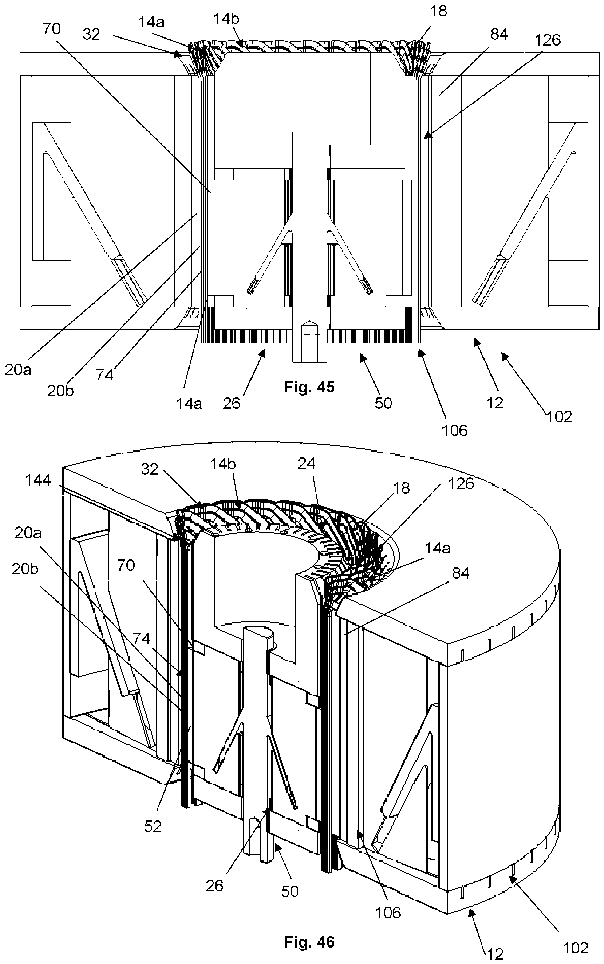

Fig. 45 eine Schnittdarstellung der Kranzanordnungs- und -fügevorrichtung mit eingefahrenen Kranzpositionierschiebern, wodurch sich der erste Kranz und der zweite Kranz in der tieferen Lagerposition befinden;
Fig. 46 eine perspektivische Schnittansicht der Kranzanordnungs- und -fügevorrichtung in dem Zustand von Fig. 45;

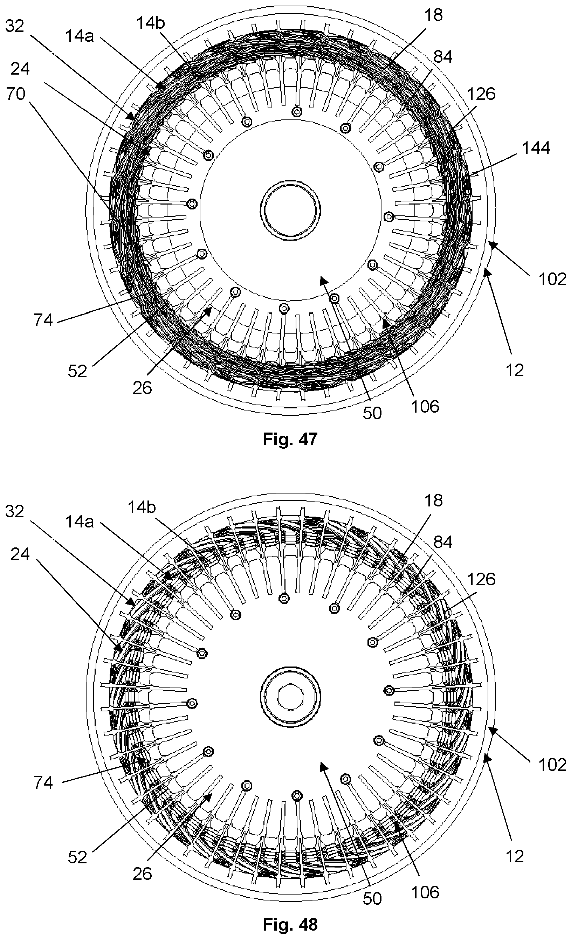

Fig. 47 und 48 die Kranzanordnungs- und -fügevorrichtung in dem Zustand von Fig. 45 in einer Ansicht von oben und von unten;

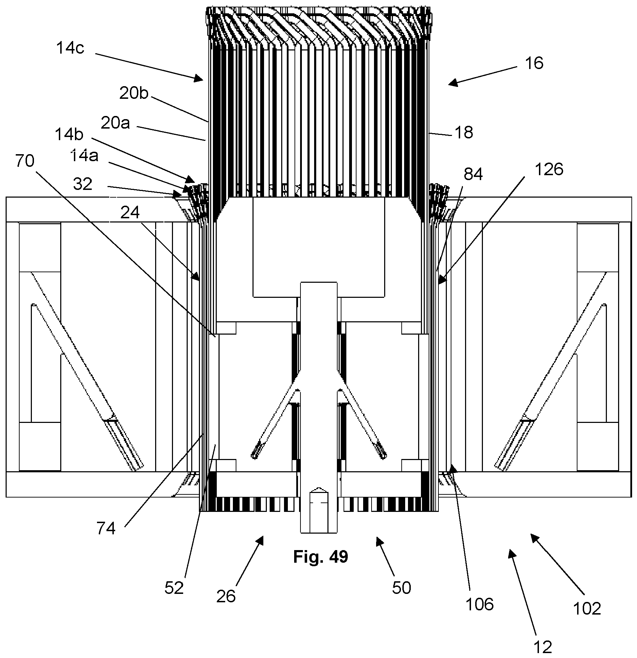

Fig. 49 eine Schnittdarstellung der Kranzanordnungs- und -fügevorrichtung beim Stecken eines dritten Kranzes, z.B. eines Innenkranzes, wobei sich der erste Kranz und der zweite Kranz in der Lagerposition und der dritte Kranz in der Steckposition befinden;

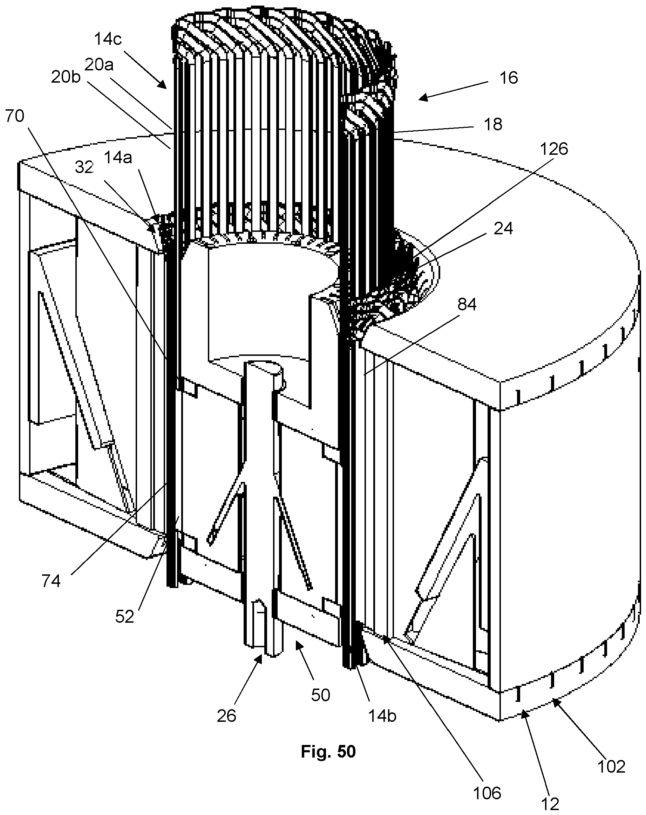

Fig. 50 eine perspektivische Schnittansicht der Kranzanordnungs- und -fügevorrichtung in dem Zustand von Fig. 49;

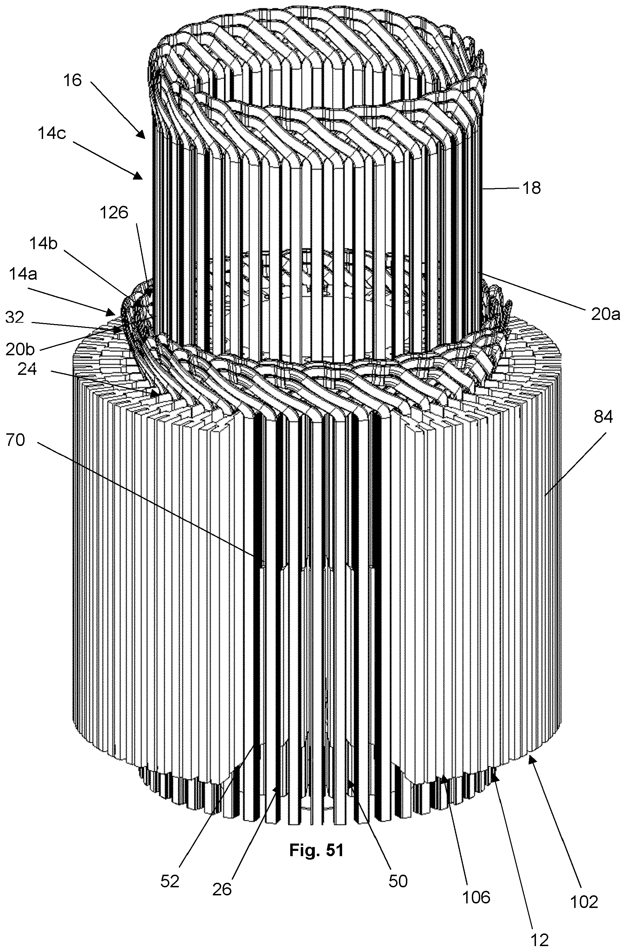

Fig. 51 eine perspektivische Ansicht der Kranzanordnungs- und -fügevorrichtung mit teilweise ausgeblendeter äußerer Zustelleinheit in dem Zustand von Fig. 49;

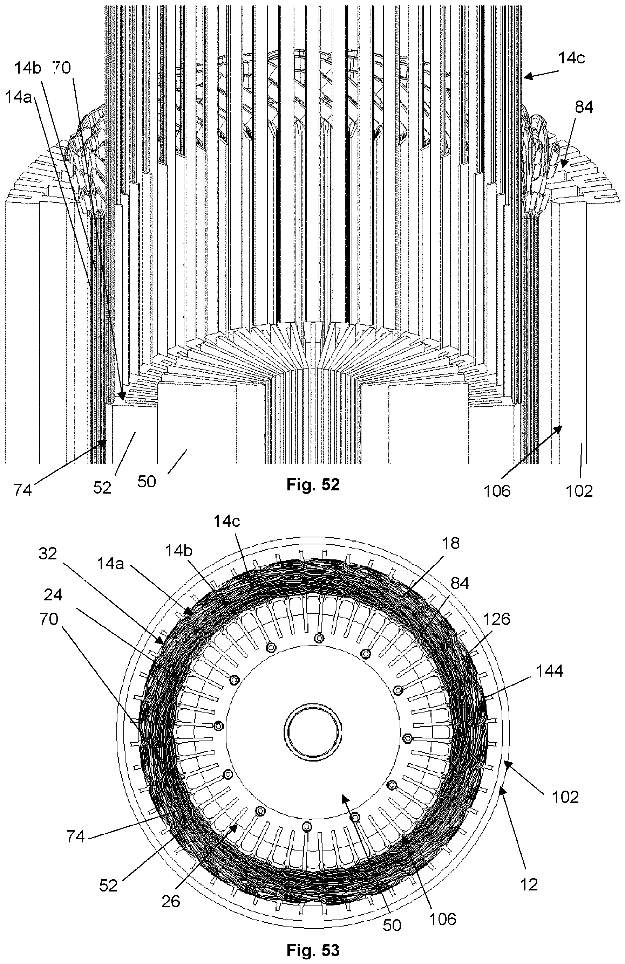

Fig. 52 eine perspektivische, teils geschnittene Ansicht der Kranzanordnungs- und -fügevorrichtung mit teilweise ausgeblendeter innerer Zustelleinheit in dem Zustand von Fig. 49, um das Stützen des dritten Kranzes durch eine durch die Kranzpositionier-Schieber gebildete Stützeinrichtung darzustellen;

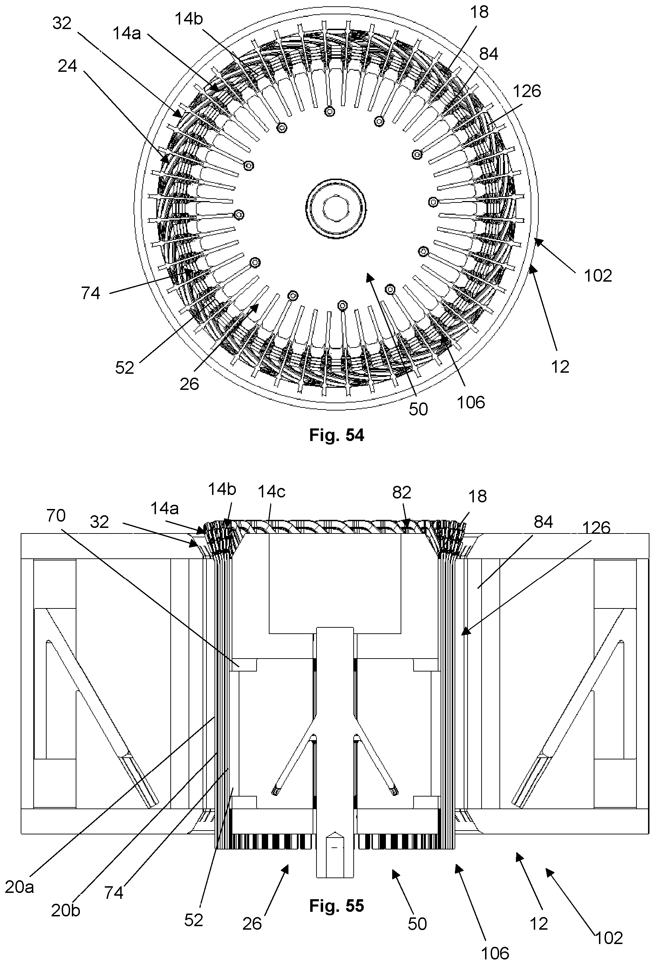

Fig. 53 und 54 die Kranzanordnungs- und -fügevorrichtung in dem Zustand von Fig. 49 in einer Ansicht von oben und von unten;
Fig. 55 eine Schnittansicht der Kranzanordnungs- und -fügevorrichtung mit eingefahrenen Kranzpositionierschiebern, so dass sich der erste bis dritte Kranz und somit die aus diesen Kränzen gebildete Kranzanordnung in der tieferen Lagerposition befinden;

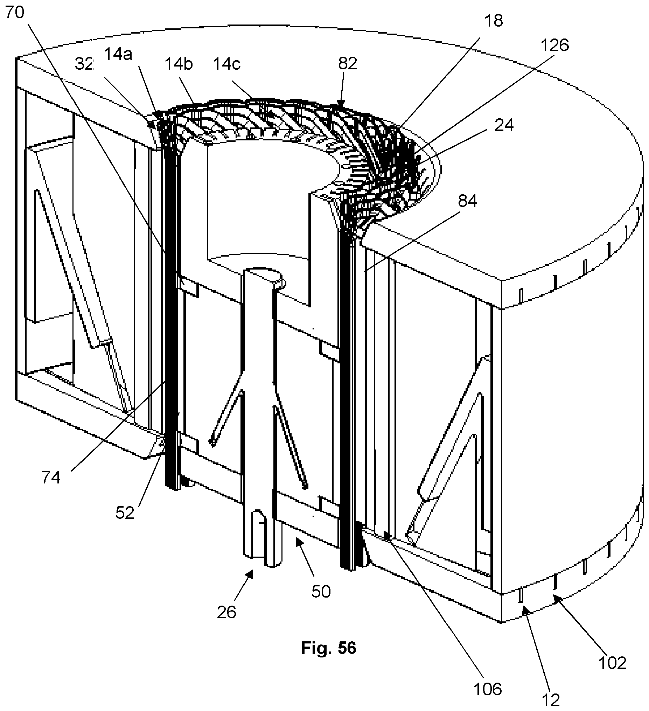

Fig. 56 eine perspektivische Schnittansicht der Kranzanordnungs- und -fügevorrichtung in dem Zustand von Fig. 55;

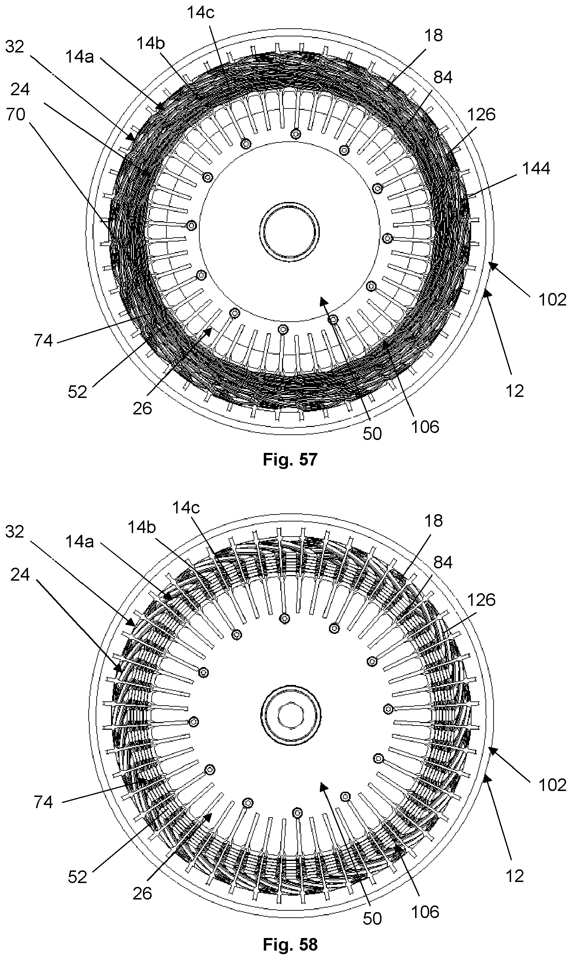

Fig. 57 und 58 die Kranzanordnungs- und -fügevorrichtung in dem Zustand von Fig. 55 in einer Ansicht von oben und von unten;

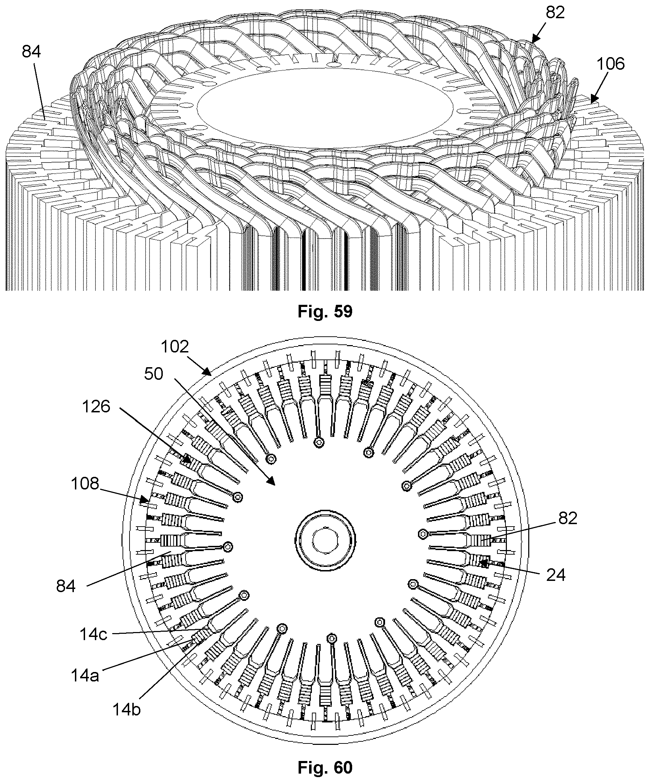

Fig. 59 eine teilweise weggebrochene perspektivische Ansicht des oberen Bereichs der Kranzanordnungs- und -fügevorrichtung in dem Zustand von Fig. 55, der den Ausgangszustand für ein Fügen der Kranzanordnung nach dem Vorsteckprozess darstellt;

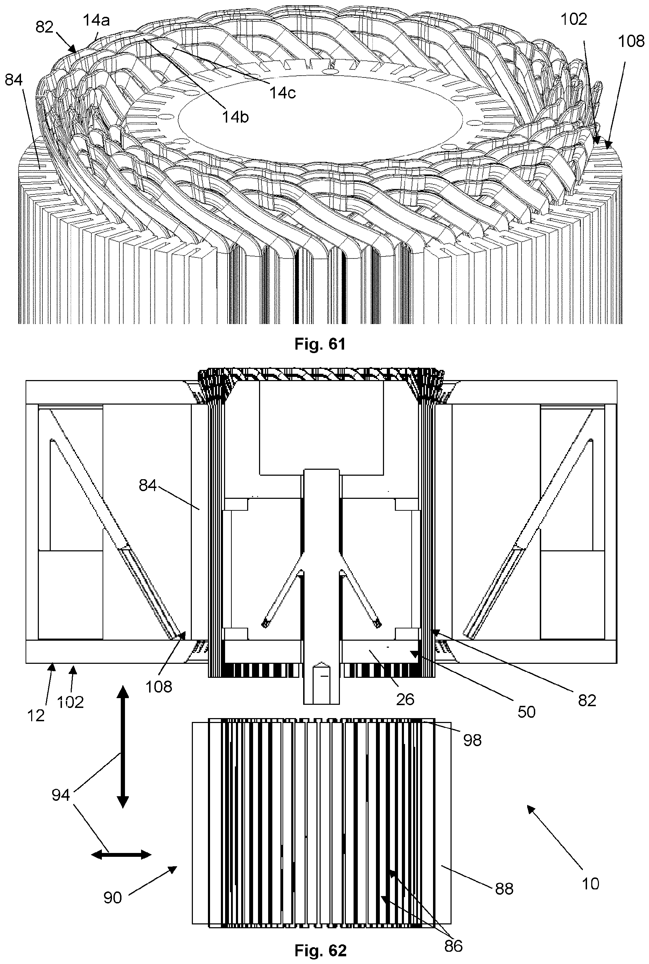

Fig. 60 und 61 die Kranzanordnungs- und -fügevorrichtung mit in einer Positionierposition vollständig ausgefahrenen Stegschiebern, in einer Ansicht von unten und in einer Ansicht wie in Fig. 59;

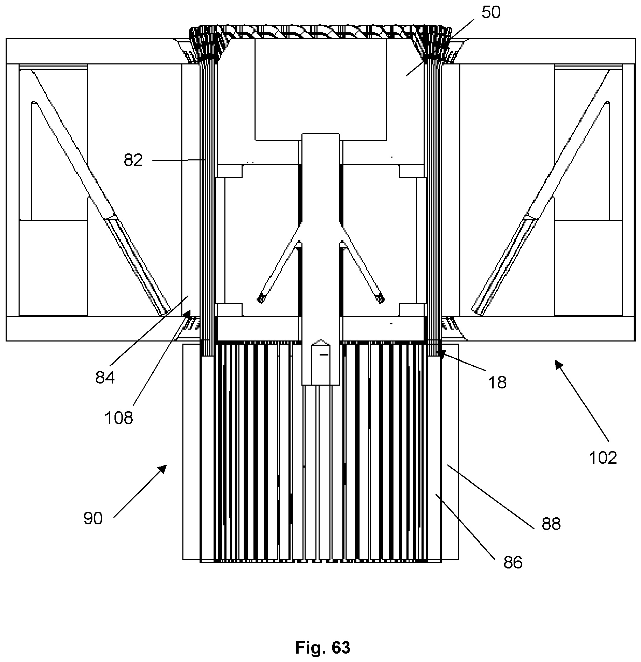

Fig. 62 und 63 eine Schnittansicht durch eine Anordnung aus der Kranzanordnungs- und -fügevorrichtung in dem Zustand der Fig. 60 und 61 und eines Gehäuses eines Stators als Beispiel für ein mit der Kranzanordnung zu versehendes Bauteil vor und bei dem Einfügen der Enden der Leiter der Kranzanordnung;

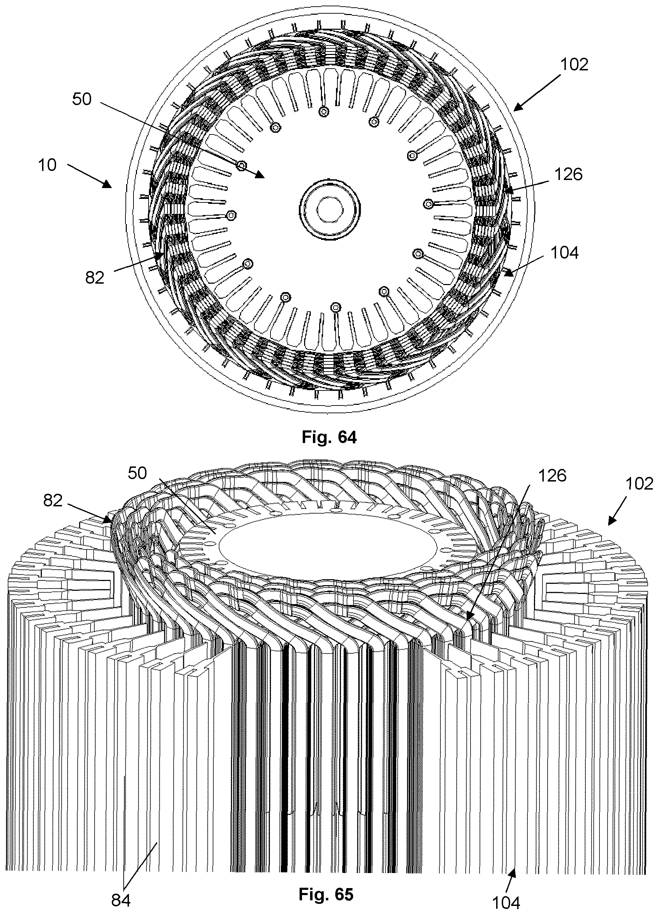

Fig. 64 und 65 die Kranzanordnungs- und -fügevorrichtung mit in eine Fügeposition vollständig eingefahrenen Stegschiebern in einer Ansicht von unten und in einer Ansicht wie in Fig. 59 und 61;

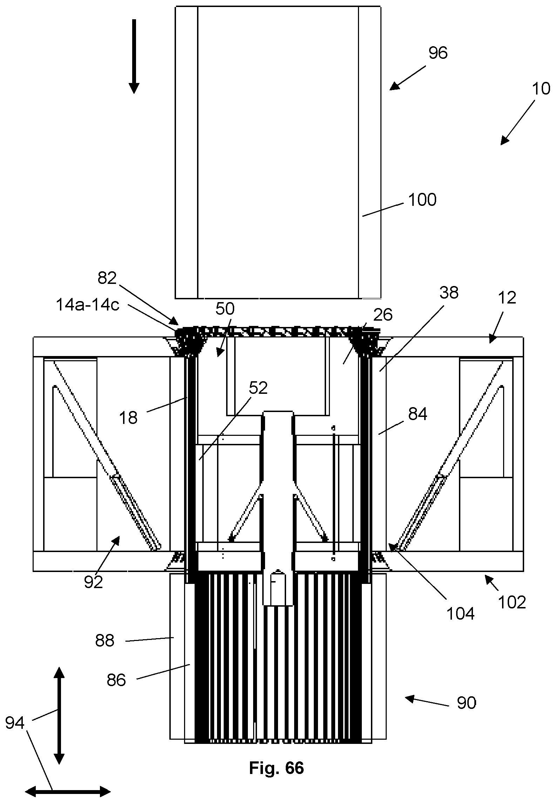

Fig. 66, 67 und 68 eine Schnittansicht durch eine Anordnung des Gehäuses, der Kranzanordnungs- und - fügevorrichtung in dem Zustand der Fig. 64 und 65, der Kranzanordnung und einer Kranzanordnungsfügeeinrichtung, z.B. Druckplatte, zum vollständigen Fügen der Kranzanordnung in das Gehäuse vor, während und nach dem Fügen;

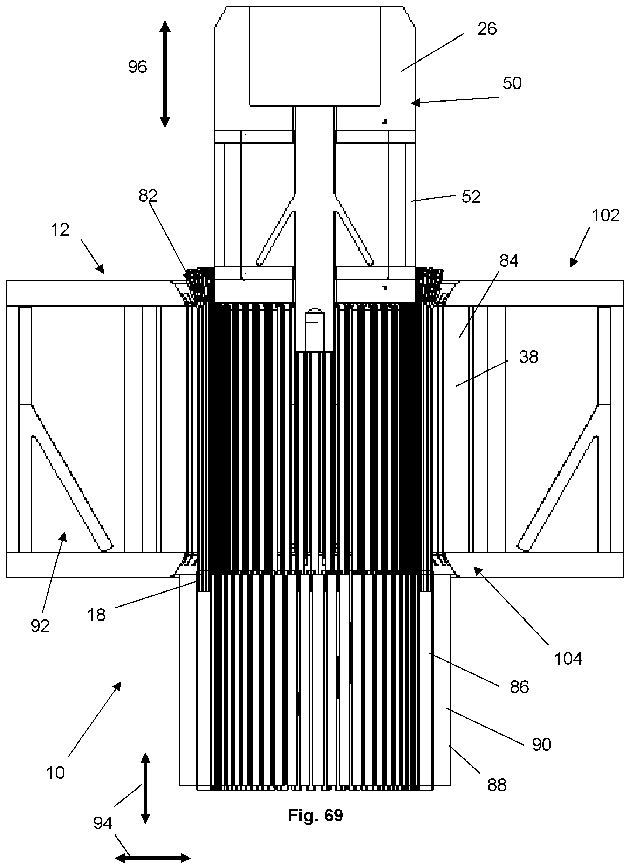

Fig. 69 eine Schnittansicht durch eine Anordnung aus Gehäuse, Kranzanordnungs- und - fügevorrichtung und Kranzanordnung bei einer alternativen Vorgehensweise zum Fügen, wobei die innere Zustelleinheit als Kranzanordnungsfügeeinrichtung verwendet wird, in einem nach dem Zustand von Fig. 63 vorliegenden Zustand mit über die Kranzordnung gefahrener innerer Zustelleinheit;

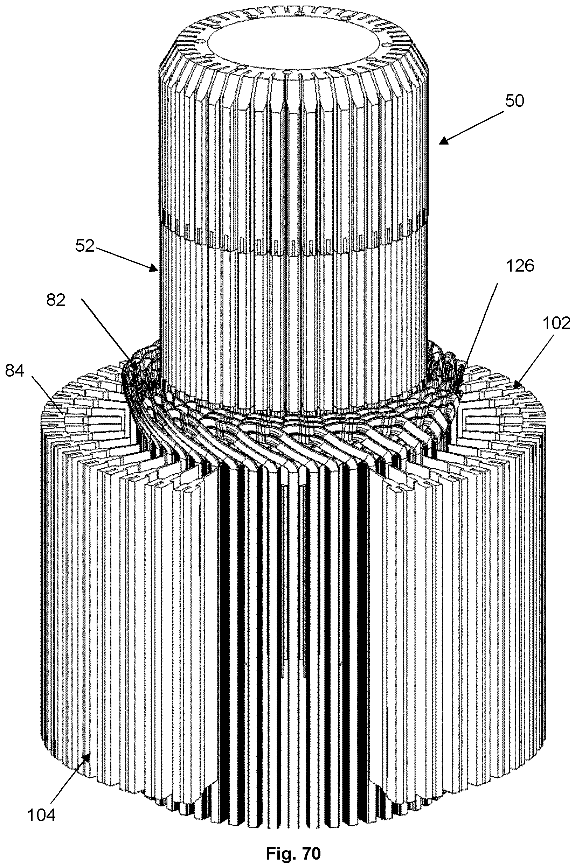

Fig. 70 eine perspektivische, teilweise weggebrochene Ansicht der Kranzanordnungs- und - fügevorrichtung in dem Zustand von Fig. 69;

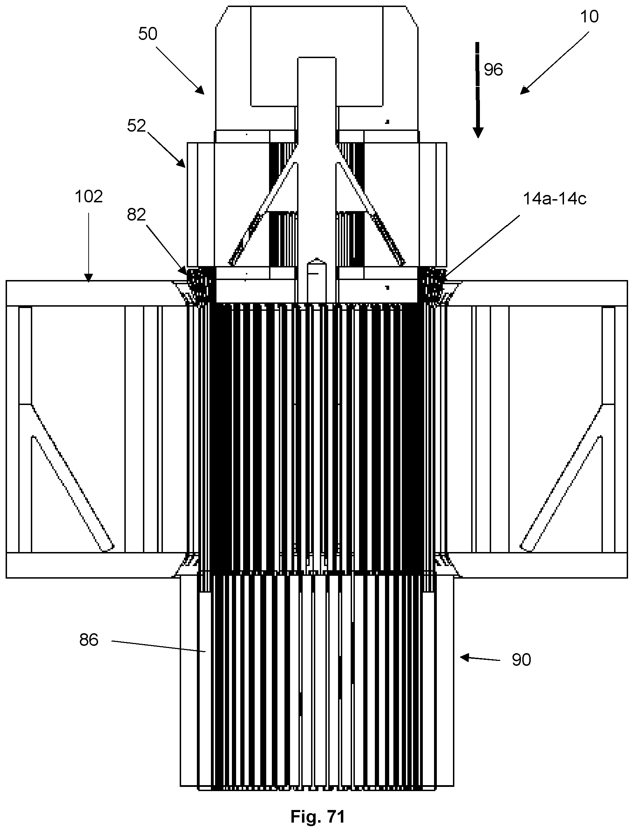

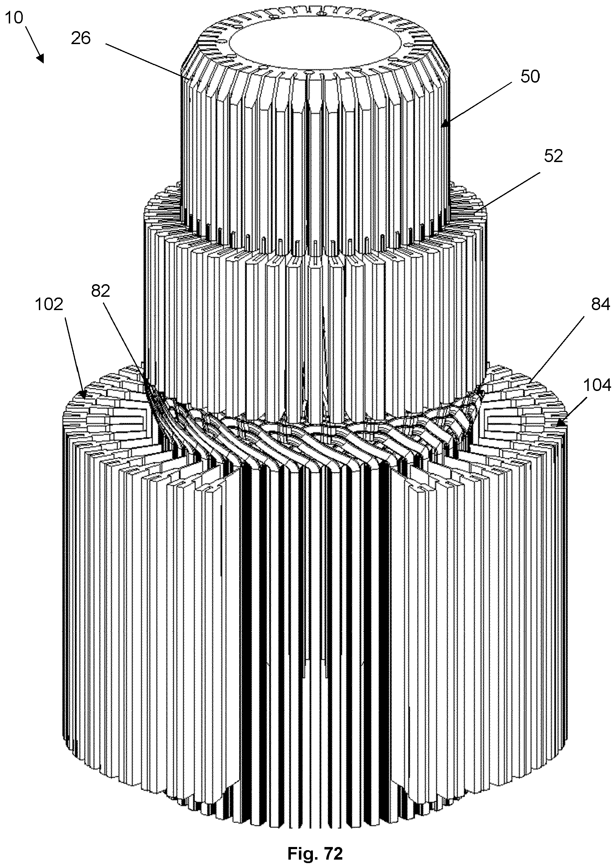

Fig. 71 und 72 eine Schnittansicht und eine perspektivische Ansicht der Kranzanordnungs- und - fügevorrichtung wie in Fig. 69 und 70, jedoch mit daraufhin ausgefahrenen Kranzpositionier-Schiebern;

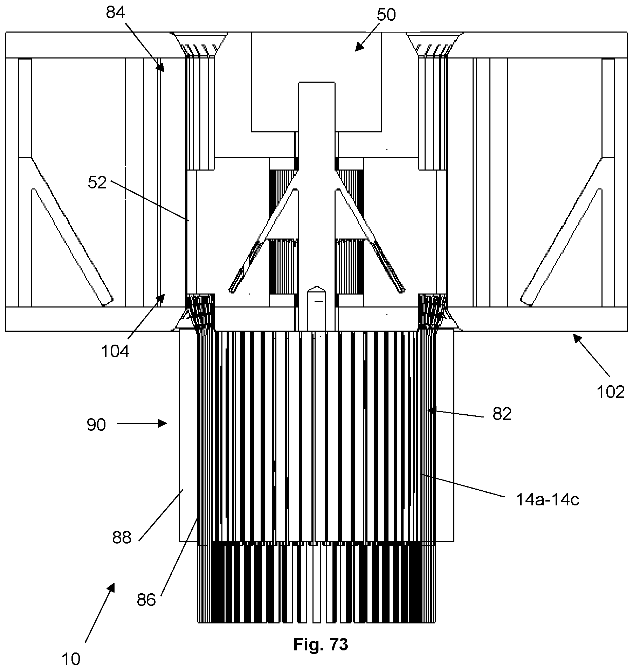

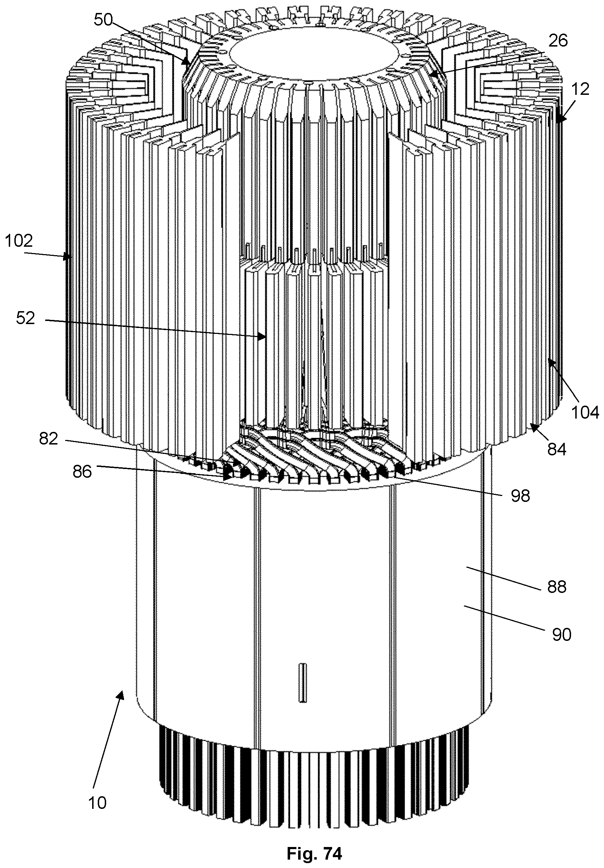

Fig. 73 und 74 eine Schnittansicht und eine perspektivische Ansicht der Kranzanordnungs- und - fügevorrichtung wie in Fig. 71 und 72 und des Gehäuses des Stators beim Fügen; und

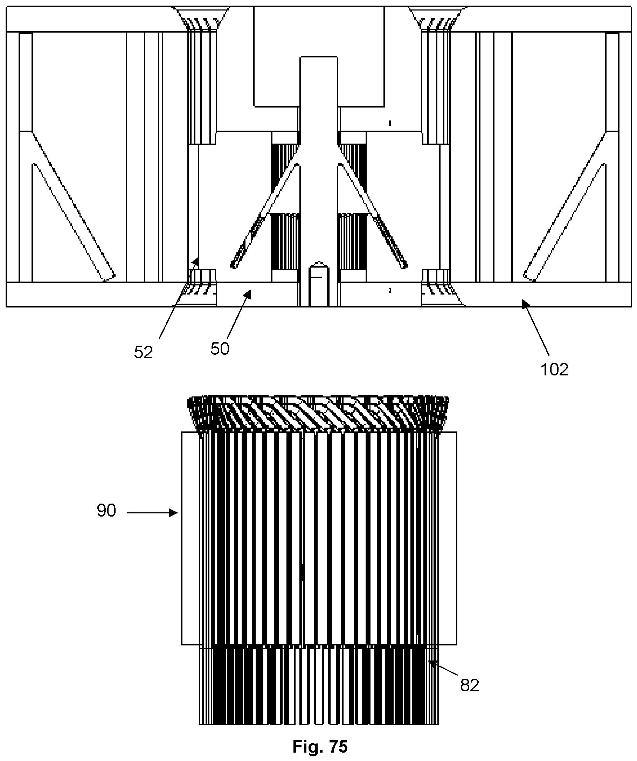

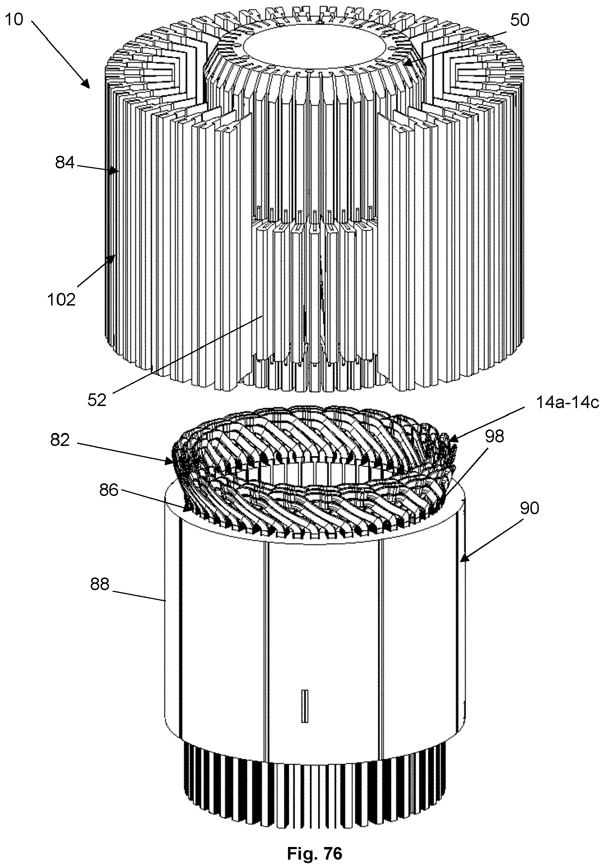

Fig. 75 und 76 eine Schnittansicht und eine perspektivische Ansicht der Kranzanordnungs- und - fügevorrichtung und des Gehäuses des Stators wie in Fig. 73 und 74 nach dem Fügen.

Die im Folgenden näher beschriebenen Ausführungsbeispiele werden anhand einer Herstellung eines Stators mit drei Kränzen von Hairpins (Außen-, Mittel- und Innenkranz) als Leiter beschrieben. Bei anderen hier nicht näher ausgeführten Ausgestaltungen sind auch weniger oder mehr Kränze vorgesehen. Auch können als Leiter anstelle von Hairpins I-Pins verwendet werden.

Im Folgenden wird anhand der Figuren 1 bis 28 zunächst eine erste Ausführungsform einer Kranzanordnungs- und -fügevorrichtung 10 zum Bilden einer Kranzanordnung 82 aus mehreren konzentrisch angeordneten Kränzen 14a, 14b, 14c von elektrischen Leitern und zum Einfügen der Kranzanordnung 82 in ein Bauteil einer elektrischen Maschine dargestellt. Anschließend werden anhand der Darstellung in den Figuren 29 bis 76 Ausführungsformen eines mit der Kranzanordnungs- und - fügevorrichtung 10 durchführbaren Kranzanordnungs- und -fügeverfahrens zum Bilden einer Kranzanordnung aus den mehreren konzentrisch angeordneten Kränzen elektrischer Leiter und zum Einfügen der Kranzanordnung in das Bauteil der elektrischen Maschine erläutert.

Fig. 1 zeigt eine perspektivische Darstellung einer Sammelaufnahme 12 der Kranzanordnungs- und -fügevorrichtung 10 mit einem vorgesteckten ersten Kranz 14a in einer axialen Steckposition 16, in der der erste Kranz 14a weiter aus der Sammelaufnahme 12 hervorsteht.

Der erste Kranz 14a ist - wie auch ein zweiter und dritter Kranz 14b, 14c - aus mehreren U-förmigen Leitern, im Folgenden Hairpins 18 genannt, gebildet. Jeder Hairpin 18 weist einen ersten Schenkel 20a, einen zweiten Schenkel 20b und eine Dachbiegung 22 zwischen den Schenkeln 20a, 20b auf. Die Schenkel 20a, 20b werden beim Stecken in Nuten 24 der Sammelaufnahme 12 eingesteckt. Der Vorgang des Steckens ist in Fig. 2 dargestellt. Gemäß Fig. 2 weist die Kranzanordnungs- und - fügevorrichtung 10 zusätzlich zu der Sammelaufnahme 12 eine Greifeinrichtung 28 und eine Steuerung 30 auf.

Mit der Greifeinrichtung 28 kann der erste Kranz 14a in der Sammelaufnahme 12 gesteckt werden.

Wie Fig. 3 zeigt, ist die Kranzanordnungs- und -fügevorrichtung 10 derart ausgebildet, dass sie den ersten Kranz 14a aus der axialen Steckposition 16, in der die Hairpins 18 des ersten Kranzes 14a weiter aus der Sammelaufnahme 12 nach oben vorstehen - angehobene Steckposition - in eine Lagerposition 32 überführt, in der die Hairpins des ersten Kranzes 14a weiter in die Sammelaufnahme 12 eingefahren sind, um dann einen zweiten Kranz 14b in der axialen Steckposition 16 in der gleichen Sammelaufnahme 12 vorzustecken. Die angehobene axiale Steckposition 16, in der die Hairpins 18 des jeweils zu steckenden Kranzes 14a, 14b weiter vorstehen, ist vorteilhaft, um genügend Bewegungsfreiraum für den Greifprozess zum exakten Stecken der Hairpins 18 in die Nuten 24 der Sammelaufnahme 12 zu schaffen. Hierzu weist die Kranzanordnungs- und -fügevorrichtung 10 weiter eine z. B. in Fig. 9 dargestellte Kranzpositioniereinrichtung 26 auf.

Die Kranzpositioniereinrichtung 26 dient zum Positionieren der jeweiligen Kränze 14a, 14b und ist im Einzelnen in den Fig. 10 bis 14 dargestellt. Die Fig. 15 bis 20 zeigen die Sammelaufnahme 12, die Fig. 21 und 22 zeigen einen Kranzpositionier-Schieber 52 der Kranzpositioniereinrichtung 26, und die Fig. 23 und 24 zeigen einen Stegschieber 84 einer Stegbewegungseinrichtung 92.

Wie am besten aus den Fig. 17 und 18 ersichtlich, können an der Sammelaufnahme 12 die mehreren um die Mittelachse herum ringförmig angeordneten Nuten 24 ausgebildet werden. Zum Bilden der Nuten 24 weist die Sammelaufnahme 12 eine sich in Umfangsrichtung erstreckende Nutbegrenzung 34 in Form eines Sammelaufnahme-Grundkörpers 110 auf. Von dem Sammelaufnahme-Grundkörper 110 aus stehen in eine radiale Richtung, hier nach innen, radiale Stege 38 beim Stecken vor, welche die Nuten 24 in Umfangsrichtung begrenzen und somit sich in radiale Richtung erstreckende Nutbegrenzungen 34a bilden. So weist jede Nut 24 an einer radialen Seite die sich in Umfangsrichtung erstreckende Nutbegrenzung 34 und an der anderen radialen Seite, hier an der inneren Seite, eine Öffnung 40 auf. In axialer Draufsicht sind die Nuten 24 somit, wie aus Fig. 18 ersichtlich, etwa U-förmig begrenzt. In dem dargestellten Ausführungsbeispiel sind die Nuten 24 in Draufsicht etwa rechtwinklig ausgebildet.

Die Nuten 24 sind in radialer Richtung sowie in Umfangsrichtung so dimensioniert, dass ihre Anzahl der Anzahl von Gehäusenuten 86 in einem Statorgehäuse 88, in welche die Kranzanordnung 82 gemäß den Fig. 5 bis 8 und genauer gemäß den Fig. 62 bis 76 später einzuführen ist, entspricht. Allerdings sind die Nuten 24 der Sammelaufnahme 12 in radialer Richtung sowie in tangentialer Richtung - Umfangsrichtung - größer dimensioniert als die Gehäusenuten 86 in dem Stator 90. Die Dimensionierung der Nuten 24 ist so, dass die Schenkel 20a, 20b der Hairpins 18 darin mit Spiel aufgenommen sind. Die Hairpins 18 sind vorzugsweise aus einem Rechteckdraht geformt.

Wie am besten aus Fig. 66 ersichtlich ist, weist die Kranzanordnungs- und fügevorrichtung 10 eine Stegbewegungseinrichtung 92 zum radialen Bewegen der Stege 38, eine lediglich durch Pfeile angedeutete Bauteilpositioniereinrichtung 94 zum Positionieren des hier als Bauteil einer elektrischen Maschine dargestellten Stators 90 in eine mit der Sammelaufnahme 12 ausgerichtete Position und eine Kranzanordnungs-Fügeeinrichtung 96 zum axialen Einfügen der Kranzanordnung 82 bei zurückgezogenen Stegen 38 aus der Sammelaufnahme in den Stator 90 auf.

Die radialen Stege 38 der Sammelaufnahme 12 sind also nicht feststehend, sondern durch die Stegbewegungseinrichtung 92 radial beweglich ausgebildet. Bei den dargestellten Ausführungsbeispielen sind die radialen Stege 38 an Stegschiebern 84 ausgebildet.

Die einzelnen Kränze 14a-14c werden somit, wie dies in den Fig. 1 bis 3, auf die nun erneut Bezug genommen wird, dargestellt ist, mittels der Greifeinrichtung 28 in einer Steckposition 16 gesteckt, wobei sie durch die Kranzpositioniereinrichtung 26 positioniert werden. Hierzu weist die Greifeinrichtung 28 einen ersten Greifer 78 und einen zweiten Greifer 80 auf.

Fig. 4 zeigt dann eine Prinzipdarstellung der fertiggesteckten Kranzanordnung 82 in der Sammelaufnahme.

Nachdem gemäß Fig. 4 alle Kränze 14a-14c, insbesondere ein äußerer erster Kranz 14a, im Folgenden auch als Außenkranz bezeichnet, ein mittlerer zweiter Kranz 14b - im Folgenden auch als Mittelkranz bezeichnet - und ein innerer dritter Kranz 14c - im Folgenden auch als Innenkranz bezeichnet - in die Sammelaufnahme 12 vorgesteckt worden sind und sich in der tieferen Lagerposition 32 in der Sammelaufnahme 12 befinden, wird es durch die Kranzanordnungs- und Fügevorrichtung 10 möglich, die Kränze 14a-14c aus dieser Lagerposition 32 direkt in das Bauteil, also insbesondere in den Stator 90, zu fügen.

Wie aus Fig. 5 ersichtlich wird hierzu der Stator 90 mit Isolationspapier 98 (genauer zu sehen in Fig. 74 und 76) durch die Bauteilpositioniereinrichtung 94 unterhalb der Sammelaufnahme 12 angeordnet und die Kränze 14a-14c durch eine Relativbewegung zwischen Sammelaufnahme 12 und Bauteil, insbesondere Stator 90, vorgefügt. Dabei werden die unterhalb der Sammelaufnahme 12 überstehenden Enden der Hairpins 18 in die Gehäusenuten 86 des Stators 90 eingeführt. Hierzu sollten die Hairpins 18 sehr genau positioniert sein, um jeweils die Gehäusenut 86 des Stators 90 zu treffen. Die Vorpositionierung ist in Fig. 6 dargestellt. Die Fig. 5 und 6 zeigen somit die Anordnung des Stators 90 unter der Sammelaufnahme 12 und das Vorfügen der Pin-Enden.

Um die Hairpins 18 auf Endtiefe in den Stator 90 fügen zu können, sind die Stege 38 der Sammelaufnahme entfernbar ausgestaltet, so dass die Hairpins 18 durch die beispielsweise eine Druckplatte 100 aufweisende Kranzanordnungsfügeeinrichtung 96 in den Stator 90 gefügt werden können.

Die Fig. 7 und 8 zeigen den Fügevorgang. Die Stege 38 der Sammelaufnahme 12, die beim Vorstecken benötigt werden, werden, um die Hairpins 18 auf Endtiefe zu fügen, mittels der Stegbewegungseinrichtung 92 entfernt. Die Druckplatte 100 ist in Fig. 7 und 8 nicht dargestellt; ein Ausführungsbeispiel der Kranzanordnungs- und Fügeeinrichtung 96 mit Druckplatte 100 ist in den Fig. 66 bis 68 zu sehen, wo der Fügevorgang genauer dargestellt ist, was auch später noch genauer beschrieben wird.

Im Folgenden wird die Kranzpositioniereinrichtung 26 anhand der Darstellungen in den Fig. 9 bis 14 näher beschrieben.

Fig. 9 zeigt dabei die Kranzpositioniereinrichtung 26 zusammen mit einem Teil der Stegschieber 84 der Sammelaufnahme 12. In den dargestellten Ausführungsbeispielen ist die Kranzpositioniereinrichtung 26 innen angeordnet, während die Sammelaufnahme 12 außen angeordnet ist. Die Kranzpositioniereinrichtung 26 ist als innere Zustelleinheit 50 ausgebildet, während die Sammelaufnahme 12 als äußere Zustelleinheit 102 ausgebildet ist. Bei anderen, hier nicht näher dargestellten Ausführungsformen ist die Anordnung umgekehrt, d. h. die Sammelaufnahme ist innen und die Kranzpositioniereinrichtung ist außen angeordnet.

Die Kranzpositioniereinrichtung 26 ist insbesondere axial relativ zu der Sammelaufnahme 12 beweglich. Beispielsweise ist die Kranzpositioniereinrichtung 26 an einem hier nicht näher dargestellten Axialaktor befestigt, mit der die Kranzpositioniereinrichtung 26 gesteuert über die Steuerung 30 entlang der in vertikaler Richtung ausgerichteten Mittelachse bewegbar ist. Bei einer anderen Ausgestaltung kann auch vorgesehen sein, dass die Sammelaufnahme 12 beweglich ist, während die Kranzpositioniereinrichtung 26 stationär angeordnet ist.

Die Kranzpositioniereinrichtung 26 weist eine Stützeinrichtung 46 zum Stützen der elektrischen Leiter - Hairpins 18 - eines zu steckenden Kranzes 14a, 14b in der Steckposition 16 und eine Halteeinrichtung 48 zum Halten der Leiter - Hairpins 18 - eines fertig gesteckten Kranzes 14a in der Lagerposition 32 auf.

Zum Bilden der Stützeinrichtung 46 und der Halteeinrichtung 48 weist die in dem hier dargestellten Ausführungsbeispiel als innere Zustelleinheit 50 ausgebildete Kranzpositioniereinrichtung 26 eine Reihe von Kranzpositionier-Schiebern 52 auf, die mittels einer Kranzpositionier-Schieber-Bewegungseinrichtung gesteuert durch die Steuerung 30 durch die Öffnungen 40 in die Nuten 24 vorgeschoben und daraus wieder zurückgezogen werden können. Vorzugsweise ist je ein Kranzpositionier-Schieber 52 pro Nut 24 vorgesehen. Die Kranzpositionier- Schieber 52 sind vorzugsweise in radialer Richtung bewegbar.

Wie oben bereits erwähnt ist bei der hier dargestellten Ausführungsform die Sammelaufnahme 12 als äußere Zustelleinheit 102 ausgebildet, und die Kranzpositioniereinrichtung 26 ist innen innerhalb der Sammelaufnahme 12 angeordnet. Bei einer anderen - nicht dargestellten - Ausgestaltung ist die Anordnung umgekehrt, d. h. die Sammelaufnahme 12 ist mit nach radial außen reichenden radialen Stegen 38 innen angeordnet, und die Kranzpositioniereinrichtung 26 ist als Außenring um die Sammelaufnahme 12 geführt. In diesem Falle können dann die Kranzpositionier-Schieber 52 radial nach innen in die Nuten 24 eingeschoben werden.

Zum Bewegen der Kranzpositionier-Schieber 52 weist die Kranzpositioniereinrichtung 26 wie aus den Fig. 9 bis 14 ersichtlich einen Kranzpositionier-Grundkörper 54, an dem die Kranzpositionier-Schieber 52 radial beweglich geführt sind, sowie ein relativ zu dem Kranzpositionier-Grundkörper 54 bewegbares Kranzpositionier-Betätigungselement 56 auf, das gesteuert durch die Steuerung 30 relativ zu dem Kranzpositionier-Grundkörper 54 beweglich ist. Ein Kranzpositionier-Umsetzgetriebe 58 wandelt die Bewegung des Kranzpositionier-Betätigungselements 56 in eine Radialbewegung der Kranzpositionier-Schieber 52 um. Demnach weist die Kranzpositionier-Schieber-Bewegungseinrichtung 53 z. B. einen nicht näher dargestellten Aktor, das hierdurch bewegbare Kranzpositionier-Betätigungselement 56 und das Kranzpositionier-Umsetzgetriebe 58 auf.

Der Aufbau von Kranzpositionier-Grundkörper 54, Kranzpositionier-Betätigungselement 56 und Kranzpositionier-Umsetzgetriebe 58 kann unterschiedlich ausgebildet sein, solange eine Relativbewegung vom Kranzpositionier-Betätigungselement 56 und Kranzpositionier-Grundkörper 54 in eine Radialbewegung der Kranzpositionier-Schieber 52 umsetzbar ist. Bei dem dargestellten Ausführungsbeispiel ist das Kranzpositionier-Betätigungselement 56 eine Kranzpositionier-Schubstange 60, die in dem Kranzpositionier-Grundkörper 54, der durch zwei Kranzpositionier-Ringplatten mit Radialführung dazwischen gebildet ist, in axialer Richtung beweglich ist. An der Kranzpositionier-Schubstange 60 greift ein Kranzpositionier-Kegelflansch 62 an, der in Schrägnuten 64 von Schiebeblechen 76 der Kranzpositionier-Schieber 52 eingreift. Anstelle dessen könnte zum Beispiel auch eine Kurvenscheibe zum Umsetzen der Relativbewegung des Kranzpositionier-Betätigungselements 56 in die Radialbewegung der Kranzpositionier-Schieber 52 vorgesehen sein.

Die Fig. 10 und 11 zeigen einen Zustand der Kranzpositioniereinrichtung 26 mit nach innen eingefahrenen Kranzpositionier-Schiebern 52. Die Fig. 9, 13 und 14 zeigen einen Zustand der Kranzpositioniereinrichtung 26 mit nach außen ausgefahrenen Kranzpositionier-Schiebern 52. In Fig. 14 sind eine obere Kranzpositionier-Schieberführung 66 (zum Beispiel Teil des Grundkörpers 54), der Kranzpositionier-Kegelflansch 62 als Antriebskegel für die Kranzpositionier-Schieber 52, die Kranzpositionier-Schieber 52 sowie die untere Kranzpositionier-Schieberführung 68 (zum Beispiel Teil des Grundkörpers 54) dargestellt. Somit zeigt Fig. 14 ein Ausführungsbeispiel für die Kranzpositionier-Schieber-Bewegungseinrichtung 53.

Im Folgenden wird der Aufbau der als äußere Zustelleinheit 102 ausgebildeten Sammelaufnahme 12 anhand der Darstellungen in den Fig. 15 bis 20 näher erläutert. Dabei zeigen die Fig. 15 und 16 die Sammelaufnahme 12 in einem Zustand, in dem die Stege 38 in eine zurückgezogene Stegposition 104 bewegt worden sind, in der die Stege 38 den axialen Weg zum Einführen der Hairpins in die Gehäusenuten 86 beim Einfügen der Kranzanordnung 82 freigeben. Die Fig. 17 und 18 zeigen die Sammelaufnahme 12 in einem Zustand, bei dem sich die Stege 38 in einer mittleren Steck-Stegposition 106 befinden, in der die Stege 38 die Nuten 24 zum Stecken der Kränze 14a-14c in die Sammelaufnahme 12 begrenzen. Die Fig. 19 und 20 zeigen die Sammelaufnahme 12 in einem Zustand, in dem sich die Stege 38 in einer voll ausgefahrenen Positionierungs-Stegposition 108 befinden, in der die Stege 38 die Nuten 24 verengen, um die Hairpins 18 zum Einführen der Pin-Enden in die Gehäusenuten 86 zu positionieren. Die Stege 38 sind, gesteuert über die Steuerung 30 mittels der Stegbewegungseinrichtung 92 zwischen diesen Stegpositionen 104, 106, 108 bewegbar. Hierzu sind die Stege 38 an den Stegschiebern 84 ausgebildet, die durch die Stegbewegungseinrichtung 92 radial bewegbar sind.

Zum Bewegen der Stegschieber 84 weist die Sammelaufnahme 12 wie aus den Fig. 15, 17 und 19 ersichtlich einen Sammelaufnahme-Grundkörper 110, an dem die Stegschieber 84 radial beweglich geführt sind, sowie ein relativ zu dem Sammelaufnahme-Grundkörper 110 bewegbares Stegbewegungs-Betätigungselement 112 auf, dass gesteuert durch die Steuerung 30 relativ zu dem Sammelaufnahme-Grundkörper 110 beweglich ist. Ein Stegbewegungs-Umsetzgetriebe 114 wandelt die Bewegung des Stegbewegungs-Betätigungselements 112 in eine Radialbewegung der Stegschieber 84 um.

Der Aufbau von Sammelaufnahme-Grundkörper 110, Stegbewegungs-Betätigungselement 112 und Stegbewegungs-Umsetzgetriebe 114 kann unterschiedlich ausgebildet sein, solange eine Relativbewegung zwischen Stegbewegungs-Betätigungselement 112 und Sammelaufnahme-Grundkörper 110 in eine Radialbewegung der Stegschieber 82 umsetzbar ist. Bei dem dargestellten Ausführungsbeispiel ist das Stegbewegungs-Betätigungselement 56 ein Stegbewegungs-Schubring 116, der in oder an dem Sammelaufnahme-Grundkörper 54, der durch zwei Stegbewegungs-Ringplatten 118, 120 mit Radialführung dazwischen gebildet ist, in axialer Richtung beweglich ist. An dem Stegbewegungs-Schubring 116 greift ein Stegbewegungs-Kegelflansch 122 an, der in Schrägnuten 124 in Schieberblechen 76 der Stegschieber 82 eingreift. Anstelle dessen könnte zum Beispiel auch eine Kurvenscheibe zum Umsetzen der Relativbewegung des Stegbewegungs-Betätigungselements 112 in die Radialbewegung der Stegschieber 82 vorgesehen sein.

Zum Stecken der Kränze 14a, 14b, 14c sind die Stegschieber 82 in die in den Fig. 17 und 18 dargestellte Steck-Stegposition 106 gefahren. Die Sammelaufnahme 12 hat eine ringförmige Außenkontur mit den dann radial zur Mitte zulaufenden Stegen 38. Bei der dargestellten Ausführungsform gibt es an der Sammelaufnahme 12 keine ringförmige Innenkontur, weil die Kranzpositionier-Schieber 52 der Kranzpositioniereinrichtung 26 radial von innen nach außen in die Nut 24 zwischen den Stegen 38 einfahren können. Hierdurch lässt sich, wie durch Fig. 9 und 12 bis 14 gezeigt, ein "Zwischenboden" bilden.

Ein einzelner Kranzpositionier-Schieber 52 ist in Draufsicht in Fig. 21 und in perspektivischer Ansicht in Fig. 22 dargestellt. Der Kranzpositionier-Schieber 52 weist eine nach oben gerichtete Stirnfläche 70, eine Schiebernut 72 zur Anbindung an die Mechanik und eine radial nach außen gerichtete Mantelfläche 74 auf.

Durch radiales Ausfahren der Kranzpositionier-Schieber 52 bewegt sich die Mantelfläche 74 in Richtung auf die sich in Umfangsrichtung erstreckende Nutbegrenzung 34 einer jeden Nut 24 zu.

Auf der Stirnfläche 70 stehen die Hairpinenden, d. h. die Enden der Schenkel 20a, 20b der Hairpins 18 beim Vorstecken auf. Diese Stirnflächen 70 dienen als Art "Zwischenboden" und sind somit ein Ausführungsbeispiel für die Stützeinrichtung 46.

Durch die Mantelfläche 74 werden die Hairpins 18, insbesondere deren Schenkel 20a, 20b, nachdem sie in die Kranzpositioniereinrichtung 26 aufgenommen worden sind und sich insbesondere in der Lagerposition 32 befinden, radial positioniert. Die Mantelflächen 74, der Sammelaufnahme-Grundkörper 110 und die radialen Stege 38 bilden ein Beispiel für die Halteeinrichtung 48.

Die Kranzpositionier-Schieber 52 lassen sich gesteuert durch die Steuerung 30 in eine vollständig eingefahrene Position und in eine Position zum Stützen des jeweiligen Kranzes, der gerade vorgesteckt werden soll, verfahren. Somit lassen sich die Schieber bei einer Anzahl von n Kränzen (beispielsweise n = 3 bei einem ersten bis dritten Kranz 14a, 14b, 14c) in n+1 Positionen einfahren.

Bei der hier dargestellten Ausgestaltung mit außen angeordneter Sammelaufnahme 12 und innen angeordneter Kranzpositioniereinrichtung 26 ist es vorteilhaft, als ersten Kranz 14a zunächst einen Außenkranz zu stecken, dann als zweiten Kranz 14b einen Mittelkranz zu stecken und schließlich als dritten Kranz 14c einen Innenkranz zu stecken. Zum Vorstecken des Außenkranzes sind die Kranzpositionier-Schieber 52 radial nach außen ausgefahren. Zum Vorstecken des Mittelkranzes werden die Kranzpositionier-Schieber 52 radial nach außen gefahren, vorzugsweise derart, dass sie an den Außenkranz, welcher sich in der Lagerposition 32 befinden, anliegen. Zum Vorstecken des Innenkranzes sind der Außenkranz und der Mittelkranz in der Lagerposition 32, und die Kranzpositionier-Schieber 52 sind radial nach außen ausgefahren, vorzugsweise anliegend an dem Mittelkranz. Um die Kranzanordnung 82 mit den drei konzentrischen Kränzen 14a, 14b, 14c zu bilden, sind die Kranzpositionier-Schieber 52 radial ganz nach innen eingefahren, so dass sich der erste bis dritte Kranz 14a-14c in der Lagerposition 32 zueinander ausrichten.

Bevorzugte Ausgestaltungen der Kranzanordnungs- und fügevorrichtung 10 haben somit den im Folgenden anhand der Darstellung der Fig. 25 bis 28 näher erläuterten Aufbau. Die Kranzanordnungs- und fügevorrichtung 10 weist die innere Zustelleinheit 50 und die äußere Zustelleinheit 102 auf.

Die innere Zustelleinheit 50 weist die radial beweglichen Kranzpositionier-Schieber 52 auf, die durch eine Kranzpositioniermechanik - Kranzpositionier-Schieber-Bewegungseinrichtung 53 - betätigt werden. Die Funktion und der Aufbau der Kranzpositioniermechanik kann unterschiedlich gestaltet sein.

Die äußere Zustelleinheit 102 weist ebenfalls radial bewegliche Schieber, die Stegschieber 84, auf, die durch eine Stegbewegungsmechanik - Stegbewegungseinrichtung 92 - betätigt werden. Der Aufbau und die Funktion der Stegschiebemechanik kann unterschiedlich sein. Die innere Zustelleinheit 50 befindet sich vorzugsweise im Zentrum der äußeren Zustelleinheit 102.

Wenn die Kranzpositionier-Schieber 52 der inneren Zustelleinheit 50 radial nach innen eingefahren und die Stegschieber 84 der äußeren Zustelleinheit 102 radial nach außen eingefahren sind, entsteht zwischen den Zustelleinheiten 50, 102 ein ringförmiger oder rohrförmiger Kanal 126, in den von oben eine rohrförmige Druckplatte 100 (dargestellt in den Fig. 66 bis 68) einfahren kann, ohne mit den Schiebern 52, 84 zu kollidieren. Bei einer anderen Ausgestaltung der Kranzanordnungs- und fügevorrichtung 10 - insbesondere deren Kranzanordnungsfügeeinrichtung 96 - die im Folgenden noch näher erläutert wird, weist die Kranzanordnungs- und -fügeeinrichtung 96 keine Druckplatte 100 auf, vielmehr werden die Kranzpositionier-Schieber 52 im ausgefahrenen Zustand zum Fügen der Kranzanordnung 82 bei entsprechender Relativbewegung der inneren Zustelleinheit 50 und dem Bauteil, also insbesondere dem Stator 90, verwendet.

Wenn gemäß den Fig. 25 bis 28, auf die nun wieder Bezug genommen wird, die Kranzpositionier-Schieber 52 der inneren Zustelleinheit 50 radial nach außen ausgefahren sind, fahren sie in den eben beschriebenen ringförmigen Kanal 126 ein und bilden dadurch für die Enden der Hairpins 18 eine Art Zwischenboden, bedingt durch die Geometrie der Kranzpositionier-Schieber 52. Beim Vorstecken werden die Hairpin-Enden jedes einzelnen Kranzes 14a-14c auf die Stirnflächen 70 der Kranzpositionier-Schieber 52 aufgestellt. Nachdem ein Kranz 14a vorgesteckt worden ist, werden die Kranzpositionier-Schieber 52 der inneren Zustelleinheit 50 radial nach innen eingefahren. Dadurch werden die Hairpin-Enden des vorgesteckten Kranzes 14a von der Stirnfläche 70 der Kranzpositionier-Schieber 52 geschoben und fallen in den ringförmigen Kanal 126 hinein. Den Hairpins 18 wird somit der Zwischenboden weggezogen. Neben der Funktion des Zwischenbodens durch die Stirnfläche 70 übernehmen die Kranzpositionier-Schieber 52 der inneren Zustelleinheit 50 beim Vorstecken der einzelnen Hairpins zu Kränzen 14a-14c und beim Fügen der Kränze 14a-14c in das Bauteil, insbesondere den Stator 90, die Funktion des Positionierens in radialer Richtung, wozu insbesondere die Mantelfläche 74 der Kranzpositionier-Schieber 52 dient.

Gleichzeitig können die Stegschieber 84 der äußeren Zustelleinheit 102 nach innen ausgefahren werden. Die Stegschieber 84 fahren zwischen die Kranzpositionier-Schieber 52 ebenfalls in den ringförmigen Kanal 126 und unterteilen den ringförmigen Kanal 126 in Nuten 24. Die Stegschieber 84 bilden somit die radialen Stege 38 und damit die sich in radialer Richtung erstreckenden Nutbegrenzungen 34a. Wie oben bereits beschrieben entsprechen die Nuten 24 in ihrer Anzahl den Gehäusenuten 86 des Stators 90. In ihren Abmessungen sind die Nuten 24 der Kranzanordnungs- und fügevorrichtung 10 jedoch deutlich größer dimensioniert als die Gehäusenuten 86 des Stators 90. Insbesondere sind der Außendurchmesser größer, der Innendurchmesser kleiner und die tangentiale Nutbreite beidseitig größer. Die eben beschriebene Steck-Stegposition 106 der Stegschieber 84 entspricht einer Mittelstellung, die beim Vorstecken der Hairpins 18 zum Einsatz kommt.

Beim Fügen der Kränze 14a-14c in den Stator 90 werden die Stegschieber 84 der äußeren Zustelleinheit 102 maximal nach innen ausgefahren. Dies führt durch die im Folgenden noch näher beschriebene spezielle Geometrie der Stegschieber 84 - könnten auch als Finger bezeichnet werden - zu einer sehr genauen Positionierung der Hairpins 18 beidseitig in tangentialer Richtung und in radialer Richtung nach außen. Die entstehenden Nuten 24 verringern sich in ihren Abmessungen. Insbesondere wird ihr Außendurchmesser kleiner, ihre tangentiale Nutbreite wird beidseitig kleiner. Radial nach innen werden die Hairpins 18 beim Fügen durch die Mantelfläche 74 der Kranzpositionier-Schieber 52 der inneren Zustelleinheit 50 positioniert. Dadurch wird der Innendurchmesser der Nuten 24 größer. Durch dieses Zusammenspiel der Schieber 52, 84 sind die Hairpins 18 so genau positioniert, dass ein Einfügen der Enden der Hairpins 18 in die Gehäusenuten 86 sehr leicht möglich ist.

Die Kranzpositionier-Schieber 52 fahren auf einer definierten Höhe in die Nuten 24, die durch die Stegschieber 84 entstanden sind, ein.

Die Fig. 9, 25-28 zeigen, wie die Kranzpositionier-Schieber 52 auf der definierten Höhe in die Nuten 24 einfahren, die durch die Stegschieber 84 entstanden sind. Die Kranzpositionier-Schieber 52 weisen eine geringere axiale Höhe auf als die Stegschieber 84.

Die Fig. 10 bis 13 stellen eine Übersicht über die Bewegung der Kranzpositionier-Schieber 52 dar. Dabei zeigen die Fig. 10 und 11 den Zustand in dem die Kranzpositionier-Schieber 52 der inneren Zustelleinheit 50 radial nach innen eingefahren sind. Die Fig. 12 und 13 zeigen den Zustand, in dem die Kranzpositionier-Schieber 52 der inneren Zustelleinheit 50 radial nach außen ausgefahren sind.

Fig. 14 zeigt einen Schnitt durch die Kranzpositioniereinrichtung 26 mit der oberen Kranzpositionierschieberführung 66, der Kranzpositionierschubstange 60 mit dem Kranzpositionierkegelflansch 62, der als Antriebskegel für die Kranzpositionier-Schieber 52 dient, dem Schieberblech 76, welches die Schrägnut 64, die mit dem Kranzpositionierkegelflansch 62 zusammenwirkt aufweist und dass in eine Schiebernut 72 der in Fig. 21 und 22 näher dargestellten Kranzpositionier-Schieber 52 eingreift, und der unteren Kranzpositionierschieberführung 68.

Die Fig. 15 bis 20 zeigen die äußere Zustelleinheit 102 in den unterschiedlichen Stellungen der Stegschieber 84. Fig. 21 und 22 zeigen den Kranzpositions-Schieber 52.

In den Fig. 23 und 24 ist ein einzelner Stegschieber 84 dargestellt. Die Stegschieber 84 haben alle dengleichen, aus Fig. 23 und 24 ersichtlichen Aufbau, der im Folgenden anhand der Fig. 19, 23 und 24 erläutert wird.

Fig. 19 zeigt den Aufbau der Kinematik der Stegbewegungseinrichtung 92 mit einer an der oberen Stegbewegungsringplatte 118 ausgebildeten oberen Stegbewegungsschieberführung 128, und einer an der unteren Stegbewegungsringplatte 120 ausgebildeten unteren Stegbewegungsschieberführung 130. Die Schieberführungen 66, 68, 128, 130 weisen insbesondere sich radial erstreckende Führungsnuten 132 für Schieberbleche 76 auf. In dem Schieberblech 76 der in Fig. 19 dargestellten Stegbewegungseinrichtung 92 ist die Schrägnut 124 vorgesehen, die mit dem Stegbewegungskegelflansch 122, der als Antriebskegel für die Stegschieber 84 wirkt. Eine axiale Bewegung des Stegbewegungsschubringes 116 bewirkt so eine radiale Bewegung des Schieberblechs 72 der Stegbewegungseinrichtung 92. Die Schieberbleche 72 der Stegbewegungseinrichtung 92 sind in Schiebernuten 72 der in Fig. 23 und 24 näher dargestellten Stegschieber 84 eingesetzt.

Wie ein Vergleich der Fig. 21 und 22 mit den Fig. 23 und 24 zeigt, sind die Kranzpositionier-Schieber 52 etwas breiter als die Stegschieber 84 ausgebildet. Die Schiebernut 72, die auch in den Fig. 23 und 24 zu sehen ist, dient lediglich der Anbindung des Stegschiebers 84 an die Stegbewegungseinrichtung 92 im Zentrum und hat keine weitere Funktion. Die Stegschieber 84 weisen gemäß den Fig. 23 und 24 einen ersten bis dritten radialen Bereich 134, 136, 140 unterschiedlicher Dicke auf.

Der erste radiale Bereich 134 weist erste Seitenflächen 142 und eine Stegstirnfläche 144 auf, auf der die Hairpins 18 der Kränze 14a-14c in der Lagerposition 32 aufliegen.

Der zweite radiale Bereich 136 ist dicker als der erste Bereich 134, so dass bei sich in der Positionierungs-Stegposition 108 befindlichen Stegschiebern 84, die Nut 24 zum Positionieren der Hairpins 18 verengt wird. Der zweite radiale Bereich 136 weist zweite Seitenflächen 146 auf. An dem Übergangsbereich zwischen dem ersten radialen Bereich 134 und dem zweiten radialen Bereich 136 ist zwischen der jeweiligen ersten Seitenfläche 142 und zweiten Seitenfläche 146 eine Schrägfläche 148 vorgesehen, die bei einer Bewegung des Stegschiebers 84 aus der Steck-Stegposition 106 in die Positionierungs-Stegposition 108 die Schenkel 20a, 20b der Hairpins 18 in die zum Einfügen in die Gehäusenuten 86 gewünschte Position führen.

Der dritte radiale Bereich 140 weist die Schiebernut 74 auf und dient zum Anbinden des Stegschiebers 84 an die Mechanik - Stegbewegungseinrichtung 92. Der dritte radiale Bereich 140 ist zum zweiten radialen Bereich 138 hin durch eine dritte Seitenfläche 150 begrenzt, die als sich in eine Umfangsrichtung erstreckende Umfangsfläche ausgebildet ist und zum Begrenzen der zugeordneten Nut 24 in einer radialen Richtung und zum Positionieren von sich in der zugeordneten Nut 24 befindlichen Schenkeln 20a, 20b der Hairpins 18 in radialer Richtung dienen.

Die Stegstirnfläche 144 wird in der Mittelstellung der Stegschieber 84, also der Steck-Stegposition 106 aktiv. Auf dieser Stegstirnfläche 144 hängen die Hairpins 18, nachdem sie in die Sammelaufnahme 12 aufgenommen worden sind.

Die erste Seitenfläche 142 wird ebenfalls in der als Steck-Stegposition 106 wirkenden Mittelstellung aktiv. In der Summe stellen alle Stegschieber 84 in der Steg-Steckposition 106 die Nuten 24 der Sammelaufnahme 12 dar, in die die Hairpins 18 zu Kränzen 14a-14c vorgesteckt werden können. Von ihren Abmessungen sind die entsprechenden Nuten 24 sowohl in radialer als auch in tangentialer Richtung größer als die Gehäusenuten 86 des Stators 90.

Die zweite Seitenfläche 146 wird aktiv, wenn die Stegschieber 84 maximal radial nach innen ausgefahren sind und sich somit in der Positionierungs-Stegposition 108 befinden. Die zweite Seitenfläche 146 dient der tangentialen Position der bereits vorgesteckten Kränze 14a-14c beim Fügen der Kranzanordnung 82 in den Stator 90.

Die als Umfangsfläche ausgebildete dritte Seitenfläche 150 wird aktiv, wenn die Stegschieber 84 maximal radial nach innen ausgefahren sind und sich somit in der Positionierungs-Stegposition 108 befinden. Die als Umfangsfläche ausgebildete dritte Seitenfläche 150 dient der radialen Positionierung am Außenumfang der bereits vorgesteckten Kränze 14a-14c beim Fügen in den Stator 90. Somit definiert diese dritte Seitenfläche 150 den Außendurchmesser der Hairpins 18 und der daraus gebildeten Kranzanordnung 82.

Die Stegschieber 84 haben somit folgende relevante Positionen:
Zum Vorstecken befinden sich die Stegschieber 84 radial nach innen ausgefahren in der als Mittelstellung vorgesehenen Steck-Stegposition 106. Durch die ersten Seitenflächen 142 aller Stegschieber 84 entstehen die Nuten 24. Die ersten Seitenflächen 142 bilden dabei die Nutbegrenzungen 34a in tangentialer Richtung. Der erste radiale Bereich 136 bildet die radialen Stege 38.

Bei einem ersten Teilvorgang eines Fügens der Kranzanordnung 82 in den Stator 90 werden die Stegschieber 84 maximal radial nach innen ausgefahren, um die Hairpins 18 vor dem eigentliche Fügevorgang zu positionieren. In diesem ersten Teilvorgang wird der Drahtüberstand der Hairpins auf der Unterseite der Sammelaufnahme 12 in den Stator 90 eingeführt.

Bei einem zweiten Teilvorgang des Fügens der Kranzanordnung 82 in den Stator 90 werden die Stegschieber 84 maximal nach außen eingefahren, um in dieser zurückgezogenen Stegposition 104 Platz für die rohrförmige Druckplatte 100 zu schaffen.

Im Folgenden werden eine Ausbildung einer Kranzanordnung 82 aus dem ersten bis dritten Kranz 14a-14c, beginnend mit dem Außenkranz als erster Kranz 14a und endend mit dem Innenkranz 14c, sowie ein Kranzanordnungs- und fügeverfahren zum Ausbilden einer solchen Kranzanordnung 82 und zum Fügen der Kranzanordnung 82 in den Stator 90 - Beispiel für ein Bauteil einer elektrischen Maschine - anhand der Darstellung in Fig. 2 und 25 bis 76 näher erläutert.

Die Fig. 25 bis 28 zeigen die Grundstellung, in der die Kranzpositionier-Schieber 52 der Kranzpositioniereinrichtung 26 maximal radial nach außen ausgefahren sind und somit den Zwischenboden - Stützeinrichtung 46 - für die Enden der Schenkel 20a, 20b der Hairpins 18 des ersten Kranzes 14a bilden. Die Schieberbleche 76, an denen die Schrägnuten 64 ausgebildet sind und auf welchen die Kranzpositionier-Schieber 52 mit ihren Schiebernuten 72 aufsitzen, sind durch das Kranzpositionier-Umsetzgetriebe 58 maximal nach außen gefahren. Die Kranzpositionier-Schubstange 60 ist maximal nach oben bewegt. Die Stegschieber 84 befinden sich in der Steg-Steckposition 106.

In dieser Grundstellung der Kranzpositioniereinrichtung 26 werden die Hairpins 18 einzeln mit der Greifeinrichtung 28 aufgenommen und wie in Fig. 2 dargestellt in die Nuten 24 gesteckt. Die bereits gesteckten Hairpins 18 stehen dabei mit ihren Schenkeln 20a, 20b auf den Stirnflächen 70 auf.

Die Greifeinrichtung 28 ist hierzu in einem hier nicht näher dargestellten Handhabungsgerät, wie insbesondere einem Roboterarm befestigt und greift mit einem ersten Greifer 78 und einem zweiten Greifer 80 die jeweiligen Schenkel 20a, 20b der Hairpins 18. Die Greifer 78, 80 sind hierzu relativ zueinander beweglich. Dies alles erfolgt über die Steuerung 30. Für nähere Einzelheiten eines derzeit bevorzugten Ausführungsbeispiels der Greifeinrichtung 28 wird auf die deutsche Patentanmeldung DE 10 2019 114 221.0 verwiesen.

In dieser Grundstellung befinden sich die Stegschieber 84 der äußeren Zustelleinheit 102 auf der Mittelstellung. Somit sind die Stegstirnfläche 144 und die erste Seitenfläche 142 aktiv, und der ringförmige Kanal 126 ist in den Nuten 24 unterteilt, wobei die ersten Seitenflächen 142 und der Innenrand der oberen Stegbewegungsringplatte 118 die Nutbegrenzung 34 bilden. Aufgrund der deutlich größeren Abmessungen der Nuten 24 gegenüber den Gehäusenuten 86 ist ein Vorstecken der Hairpins 18 leicht möglich.

Die Kranzpositionier-Schieber 52 der inneren Zustelleinheit 50 sind radial nach außen ausgefahren, so dass die Stirnflächen 70 aktiv sind und eine Art Zwischenboden bilden, auf welche die Enden der Hairpins 18 aufgestellt werden. Hierzu fahren die Kranzpositionier-Schieber 52 in die Nuten 24, die durch die Stegschieber 84 erzeugt werden und verschließen diese auf einer definierten Höhe.

Die Fig. 29 bis 34 zeigen den vorgesteckten Außenkranz - ersten Kranz 14a - wobei die Enden der Schenkel 20a, 20b der Hairpins 18 auf den Kranzpositionier-Stirnflächen 70 der Kranzpositionier-Schieber 52 aufstehen. Um dies zu verdeutlichen, ist in Fig. 30 die äußere Zustelleinheit 102 ausgeblendet, und in Fig. 31 sind nur ein Teil der Stegschieber 84 zu sehen. Fig. 33 zeigt die in Fig. 32 im Schnitt dargestellte Anordnung mit dem ersten Kranz 14a in der axialen Steckposition 16 von oben, und Fig. 34 zeigt die gleiche Anordnung von unten.

Anschließend wird der Außenkranz als erster Kranz 14a ganz in die Sammelaufnahme 12 aufgenommen und somit in die tiefere Lagerposition 32 überführt.

Die Fig. 35 bis 40 zeigen die Kranzanordnungs- und fügevorrichtung 10 in entsprechenden Darstellungen wie die Fig. 29 bis 34 mit dem Außenkranz - erster Kranz 14a - in der Lagerposition 32.

Hierzu werden die Kranzpositionier-Schieber 52 der inneren Zustelleinheit 50 radial nach innen eingefahren. Der Außenkranz - erster Kranz 14a - fällt somit in die Sammelaufnahme 12. Die Hairpins 18 des Außenkranzes hängen, wie dies am besten aus Fig. 36 ersichtlich ist, auf den Steg-Stirnflächen 144 auf, so dass diese Steg-Stirnflächen 144 der äußeren Zustelleinheit 102 aktiv werden.

Anschließend fahren die Kranzpositionier-Schieber 52 der inneren Zustelleinheit 50 radial nach außen, so dass die Mantelflächen 74 der Kranzpositionier-Schieber 52 der inneren Zustelleinheit 50 aktiv werden. Die Mantelflächen 74 der Kranzpositionier-Schieber 52 der inneren Zustelleinheit 50 positionieren - zum Beispiel durch Verschieben - den Außenkranz - erster Kranz 14a - so, dass als zweiter Kranz 14b der Mittelkranz vorgesteckt werden kann.

Das Vorstecken des Mittelkranzes ist in Fig. 41 bis 44 in den entsprechenden Darstellungen der Kranzanordnungs- und fügevorrichtung 10, wie sie zuvor für das Vorstecken des ersten Kranzes 14a in den Fig. 29 bis 34 gezeigt worden sind, dargestellt.

Demnach erfolgt nach dem in den Fig. 41 bis 44 gezeigten Vorstecken des Mittelkranzes - zweiter Kranz 14b - ein Aufnehmen des Mittelkranzes in die Sammelaufnahme 12. Der Mittelkranz - zweiter Kranz 14b - wird ebenfalls in die Lagerposition 32 überführt.

Die Fig. 45 bis 49 zeigen die Kranzanordnungs- und -fügevorrichtung 10 in den den Fig. 35 bis 40 entsprechenden Ansichten, wobei sowohl der Außenkranz - erster Kranz 14a - als auch der Mittelkranz - zweiter Kranz 14b - in der Lagerposition 32 aufgenommen sind.

Zum Aufnehmen des Mittelkranzes in die Lagerposition 32 werden die Kranzpositionierungs-Schieber 52 der inneren Zustelleinheit 50 radial nach innen eingefahren. Der Mittelkranz - zweiter Kranz 14b - fällt analog wie der Außenkranz - erster Kranz 14a - in die Lagerposition 32 in der Sammelaufnahme 12. Die Hairpins 18 des Mittelkranzes - zweiter Kranz 14b - hängen analog wie die Hairpins 18 des Außenkranzes - erster Kranz 14a - auf den Steg-Stirnflächen 144 der Stegschieber 84 der äußeren Zustelleinheit 102 auf.

Anschließend werden, wie dies in den Fig. 45 bis 49 im Schnitt, in der Perspektive, von oben und von unten dargestellt ist, die Kranzpositionier-Schieber 52 der inneren Zustelleinheit 50 radial nach außen ausgefahren. Die Mantelfläche 74 der Kranzpositionier-Schieber 52 werden jeweils aktiv und positionieren auch die Hairpins 18 des Mittelkranzes - zweiter Kranz 14b. Demnach positionieren die Mantelflächen 74 der Kranzpositionier-Schieber 52 den Mittelkranz - zweiter Kranz 14b - und den Außenkranz - erster Kranz 14a - so, dass als dritter Kranz 14c der Innenkranz vorgesteckt werden kann.

Das Vorstecken des Innenkranzes - dritter Kranz 14c - ist in den Fig. 49 bis 54 dargestellt. Dabei werden der Außenkranz - erster Kranz 14a - und der Mittelkranz - zweiter Kranz 14b - durch die Kranzpositioniereinrichtung 26 in der Lagerstellung 32 positioniert, während der Innenkranz - dritter Kranz 14c - durch die Greifeinrichtung 28 vorgesteckt wird (analog zu Fig. 2). In den Fig. 49 bis 54 ist der Innenkranz - dritter Kranz 14c bereits fertig vorgesteckt und noch in der axialen Steckposition 16 gezeigt. Dabei stehen die Hairpins 18 des Innenkranzes - dritter Kranz 14c - auf den Stirnflächen 70 der Kranzpositionier-Schieber 52 auf. Gleichzeitig positioniert die Mantelfläche 74 der Kranzpositionier-Schieber 52 den Mittelkranz und den Außenkranz.

Fig. 49 zeigt diesen Zustand im Querschnitt; Fig. 50 zeigt diesen Zustand in trimetrischer geschnittener Ansicht; Fig. 51 zeigt diesen Zustand in einer perspektivischen Darstellung, wobei von der äußeren Zustelleinheit 102 nur einige der Stegschieber 84 dargestellt sind; Fig. 52 zeigt einen Mittelschnitt durch die Anordnung gemäß der Ansicht von Fig. 51; Fig. 53 zeigt diesen Zustand von oben und Fig. 54 zeigt diesen Zustand von unten.

Anschließend wird auch der Innenkranz - dritter Kranz 14c - vollständig in die Sammelaufnahme 12 aufgenommen und somit in die Lagerposition 32 überführt.

Hierzu werden wiederum Kranzpositionier-Schieber 52 der inneren Zustelleinheit 50 radial nach innen eingefahren. Hierdurch fällt der Innenkranz - dritter Kranz 14c - in die Sammelaufnahme 12. Die Hairpins 18 des Innenkranzes - dritter Kranz 14c - hängen auf den Stegstirnflächen 144 der Stegschieber 84 der äußeren Zustelleinheit 102 auf.

Anschließend werden die Kranzpositionier-Schieber 52 der inneren Zustelleinheit 50 radial nach außen ausgefahren. Die Mantelfläche 74 der Kranzpositionier-Schieber 52 werden aktiv. Dabei verschieben die Mantelflächen 74 der Kranzpositionier-Schieber 52 den Innenkranz, Mittelkranz und Außenkranz - erster bis dritter Kranz 14a-14c - und positionieren die Kränze 14a-14c so, dass die so gebildete Kranzanordnung 82 insgesamt in den Stator 90 gefügt werden kann. Dieser Zustand ist in den Fig. 55 bis 59 entsprechend dargestellt.

Im Folgenden wird eine Prozessfolge für das Fügen der Kranzanordnung 82 mit dem gleichzeitigen Fügen aller Kränze 14a-14c in den Stator 90 anhand der Darstellungen in den Fig. 60 bis 76 näher erläutert.

Zunächst werden in einem ersten Teilvorgang die Hairpins 18 der Kranzanordnung 82 für den Fügeprozess positioniert.

Nach dem Bilden der Kranzanordnung 82 durch Überführung des dritten Kranzes 14c in die Lagerposition 32 befinden sich die Kranzpositionier-Schieber 52 der inneren Zustelleinheit 50 wie in den Fig. 55 bis 59 gezeigt bereits auf ihrer korrekten Position für diesen ersten Teilvorgang. Die Kranzpositionier-Schieber 52 sind radial nach außen ausgefahren, so dass die Mantelfläche 74 die Kränze 14a-14c der Kranzanordnung 82 positioniert.

Anschließend fahren die Stegschieber 84 der äußeren Zustelleinheit 102 von der Mittelstellung, d. h. der Steck-Stegposition 106, in der sich die Stegschieber 84 während des gesamten Vorsteckens befunden haben, radial nach innen aus. Die sich in den Nuten 24 befindlichen Schenkel 20a, 20b der Hairpins 18 der Kranzanordnung 82 werden dann entlang der ersten Seitenflächen 142 geführt und durch die Schrägflächen 148 positioniert, bis sie zwischen den zweiten Seitenflächen 146 jeweils benachbarter Stegschieber 84 in entsprechend verengten Nuten 24 angeordnet sind. Die Stegschieber 84 sind dann in der Positionierungs-Stegposition 108. Dieser Zustand mit positionierten Hairpins 18 der Kranzanordnung 82 ist in den Fig. 60 und 61 dargestellt. Entsprechend sind die Hairpins 18 für den Fügevorgang radial und tangential positioniert.

In einem zweiten Teilprozess werden dann die nach unten überstehenden Enden der Hairpins 18 in die Gehäusenuten 86 des Stators 90 eingeführt. Dieser Vorgang ist in den Fig. 62 und 63 dargestellt.

Gemäß Fig. 62 wird das Statorgehäuse 88 mit den Gehäusenuten 86 durch die Bauteilpositioniereinrichtung 94 konzentrisch zu der Anordnung aus innerer Zustelleinheit 50 und äußerer Zustelleinheit 102 positioniert. Diese Anordnung 50, 102 kann beispielsweise an einem Maschinenbett axial bewegbar aufgehängt sein, während das Statorgehäuse 88 durch ein nicht dargestelltes Fördermittel in die Einfügeposition unterhalb der Anordnung aus innerer Zustelleinheit 50 und äußerer Zustelleinheit 102 gebracht wird.

Anschließend werden gemäß Fig. 63 die Anordnung aus innerer Zustelleinheit 50 und äußerer Zustelleinheit 102 und das Statorgehäuse 88 axial zueinander relativ bewegt. Beispielsweise wird die Anordnung 50, 102 axial auf das Statorgehäuse 88 zu bewegt.

Gemäß den Fig. 62 und 63 stehen die Hairpins 18 mit einer definierten Länge nach unten aus der Anordnung aus innerer Zustelleinheit 50 und äußerer Zustelleinheit 102 heraus (Überstand). Durch eine Relativbewegung zwischen der hier beschriebenen Anordnung 50, 102 und des Statorgehäuses 88 aufeinander zu werden die Hairpins 18 um die Länge des Überstandes in den Stator 90 eingefügt.

Anschließend erfolgt als zweiter Teilprozess ein vollständiges Fügen der Kranzanordnung 82 in den Stator 90. Nach dem in den Fig. 62 und 63 dargestellten Teilprozess befinden sich die Enden der Hairpins 18 der Kranzanordnung 82 bereits in den Gehäusenuten 86 des Statorgehäuses 88.

Anschließend fahren die Kranzpositionier-Schieber 52 der inneren Zustelleinheit 50 radial nach innen in eine vollständig zurückgezogene Position ein. Die Stegschieber 84 der äußeren Zustelleinheit 102 fahren radial nach außen ein, bis sie sich in der vollständig zurückgezogenen Stegposition 104 befinden. Durch das Freifahren der Schieber 52, 84 wird der ringförmige Kanal 126 zwischen der äußeren Zustelleinheit 102 und der inneren Zustelleinheit 50 frei. Der entsprechende Zustand ist in den Fig. 64 und 65 dargestellt.

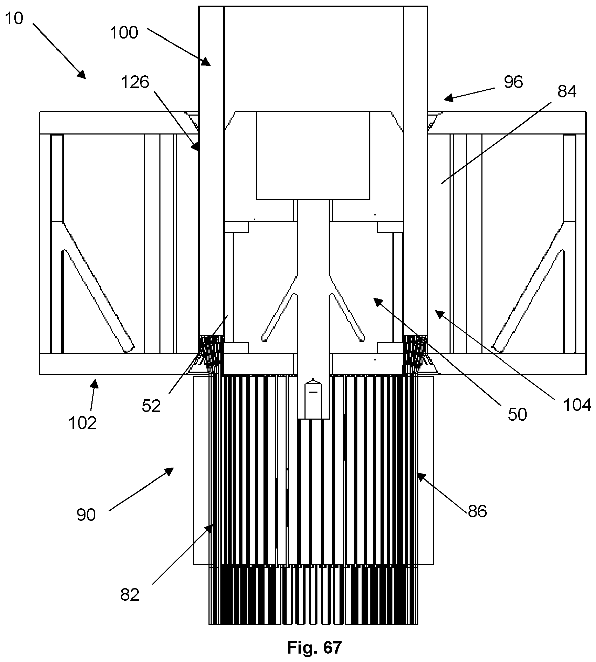

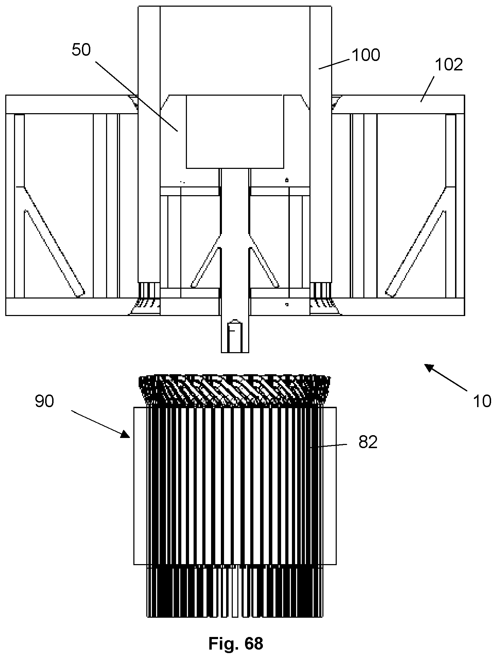

Wie in Fig. 66 gezeigt, wird anschließend die ringförmige Druckplatte 100 durch die Kranzanordnungsfügeeinrichtung 96 zugestellt und, wie in Fig. 67 dargestellt, durch den ringförmigen Kanal 126 geführt. Somit werden die Kränze 14a-14c direkt aus der Anordnung aus innerer Zustelleinheit 50 und äußerer Zustelleinheit 102 in den Stator 90 gefügt. Fig. 68 zeigt dann den fertig gefügten Stator 90 mit der Kranzanordnung 82 in einer Schnittansicht. Die Anordnung aus innerer Zustelleinheit 50 und äußerer Zustelleinheit 102 wird relativ zu dem Stator 90 wieder entfernt. Nach dem Entfernen der Druckplatte 100 kann diese Anordnung wieder ihre in den Fig. 26 bis 28 gezeigte Grundstellung zur Aufnahme eines Kranzes der nächsten Kranzanordnung einnehmen.

Im Folgenden wird noch anhand der Fig. 69 bis 76 eine Alternative zu dem zweiten Teilvorgang des vollständigen Fügens der Kranzanordnung erläutert.

Bei der Vorgehensweise gemäß den Fig. 66 bis 68 wird die Kranzanordnung 82 mittels einer Druckplatte 100 in den Stator 90 gefügt. Die alternative Verfahrensweise des vollständigen Fügens gemäß den Fig. 69 bis 76 kommt ohne eine solche Druckplatte 100 aus. Ausgangssituation ist auch hier wiederum die in Fig. 63 gezeigte Situation, wo sich überstehenden Enden der Hairpins 18 bereits in den Gehäusenuten 86 des Stators 90 befinden. Ausgehend von dieser in Fig. 63 gezeigten Situation werden die Kranzpositionier-Schieber 52 der inneren Zustelleinheit 50 radial nach innen eingefahren, und die Stegschieber 84 der äußeren Zustelleinheit 102 fahren radial nach außen ein. Durch dieses Freifahren der Schieber 52, 84 wird der ringförmige Kanal 126 zwischen der äußeren Zustelleinheit 102 und der inneren Zustelleinheit 50 frei.

Zum Durchführen dieser alternativen Vorgehensweise des zweiten Teilvorganges sind die Zustelleinheiten 50, 102 relativ zueinander axial beweglich ausgebildet. Beispielsweise ist die innere Zustelleinheit 50 axial beweglich ausgebildet ausgeführt.

Wie in Fig. 69 und 70 gezeigt, wird die innere Zustelleinheit 50 axial nach oben bewegt. Anschließend werden, wie in den Fig. 71 und 72 gezeigt, die Kranzpositionier-Schieber 52 der inneren Zustelleinheit 50 radial nach außen ausgefahren. Die Kranzpositionier-Schieber 52 befinden sich dann oberhalb der Kranzanordnung 82. In dieser Stellung der Kranzpositionier-Schieber 52 wird die innere Zustelleinheit 50 relativ zu der äußeren Zustelleinheit 102 und dem sich darunter befindlichen Statorgehäuse 88 axial nach unten bewegt, wodurch die Kranzanordnung 82 auf Endtiefe in den Stator 90 gefügt werden. Die Kranzpositionier-Schieber 52 funktionieren somit als "Druckplatte". In den Fig. 73 und 74 ist die Endposition dieses Einfügens dargestellt.

Die Fig. 75 und 76 zeigen den fertig gefügten Stator 90 mit der Kranzanordnung 82, wobei die Anordnung aus innerer Zustelleinheit 50 und äußerer Zustelleinheit 102 nach oben wegbewegt wird und dann wiederum in ihre in den Fig. 26 bis 28 gezeigte Grundstellung zur Aufnahme des nächsten Kranzes der nächsten Kranzanordnung überführt wird.

### Bezugszeichenliste:

- 10: Kranzanordnungs- und -fügevorrichtung
- 12: Sammelaufnahme
- 14a: erster Kranz
- 14b: zweiter Kranz
- 14c: dritter Kranz
- 16: axiale Steckposition
- 18: Hairpin
- 20a: erster Schenkel
- 20b: zweiter Schenkel
- 22: Dachbiegung
- 24: Nut
- 26: Kranzpositioniereinrichtung
- 28: Greifeinrichtung
- 30: Steuerung
- 32: Lagerposition
- 34: sich in Umfangrichtung erstreckende Nutbegrenzung
- 34a: sich in radialer Richtung erstreckende Nutbegrenzung
- 38: radialer Steg
- 40: Öffnung
- 46: Stützeinrichtung
- 48: Halteeinrichtung
- 50: innere Zustelleinheit
- 52: Kranzpositionier-Schieber
- 53: Kranzpositionier-Schieber-Bewegungseinrichtung
- 54: Kranzpositionier-Grundkörper
- 56: Kranzpositionier-Betätigungselement
- 58: Kranzpositionier-Umsetzgetriebe
- 60: Kranzpositionier-Schubstange
- 62: Kranzpositionier-Kegelflansch
- 64: Schrägnut
- 66: obere Kranzpositionier-Schieberführung
- 68: untere Kranzpositionier-Schieberführung
- 70: Stirnfläche
- 72: Schiebernut
- 74: Mantelfläche
- 76: Schieberblech
- 78: erster Greifer
- 80: zweiter Greifer
- 82: Kranzanordnung
- 84: Stegschieber
- 86: Gehäusenuten
- 88: Statorgehäuse
- 90: Stator (Beispiel für ein Bauteil einer elektrischen Maschine)
- 92: Stegbewegungseinrichtung
- 94: Bauteilpositioniereinrichtung
- 96: Kranzanordnungsfügeeinrichtung
- 98: Isolationspapier
- 100: Druckplatte
- 102: äußere Zustelleinheit
- 104: zurückgezogene Stegposition
- 106: Steck-Stegposition
- 108: Positionierungs-Stegposition
- 110: Sammelaufnahme-Grundkörper
- 112: Stegbewegungs-Betätigungselement
- 114: Stegbewegungs-Umsetzgetriebe
- 116: Stegbewegungs-Schubring
- 118: obere Stegbewegungs-Ringplatte
- 120: untere Stegbewegungs-Ringplatte
- 122: Stegbewegungs-Kegelflansch
- 124: Schrägnut
- 126: ringförmiger Kanal
- 128: obere Stegbewegungs-Schieberführung
- 130: untere Stegbewegungs-Schieberführung
- 132: Führungsnuten
- 134: erster radialer Bereich
- 136: zweiter radialer Bereich
- 140: dritter radialer Bereich
- 142: erste Seitenfläche
- 144: Steg-Stirnfläche
- 146: zweite Seitenfläche
- 148: Schrägfläche
- 150: dritte Seitenfläche

## Patentansprüche

1. Kranzanordnungs- und -fügevorrichtung (10) zum Bilden und Einfügen einer Kranzanordnung (82) aus wenigstens einem Kranz oder mehreren konzentrisch angeordneten Kränzen (14a-14c) von vorzugsweise U-förmigen elektrischen Leitern in ein Bauteil einer elektrischen Maschine, umfassend eine Sammelaufnahme (12) mit mehreren um eine Achse ringförmig angeordneten und durch radiale Stege (38) begrenzten Nuten (24), eine Stegbewegungseinrichtung (92) zum radialen Bewegen der Stege (38), eine Bauteilpositioniereinrichtung (94) zum Positionieren des Bauteils in eine mit der Sammelaufnahme (12) ausgerichteten Position und eine Kranzanordnungsfügeeinrichtung (96) zum axialen Einfügen der Kranzanordnung (82) bei zurückgezogenen Stegen (38) aus der Sammelaufnahme (12) in das Bauteil, **dadurch gekennzeichnet, dass** die Stege (38) in eine Positionierungs-Stegposition (108), in der die Stege (38) die Nuten (24) zum Positionieren der Leiter zwecks Einführens in Bauteilnuten verengen, bewegbar sind.

2. Kranzanordnungs- und -fügevorrichtung (10) nach Anspruch 1, **dadurch gekennzeichnet, dass** die Stege (38)
2.1 an Stegschiebern (84) ausgebildet sind, die durch die Stegbewegungseinrichtung (92) radial verschiebbar sind, und/oder
2.2 radiale Bereiche (134, 136, 140) unterschiedlicher Dicke aufweisen, und/oder
2.3 ein radial inneres freies Ende aufweisen, und/oder
2.4 Schrägflächen (148) an einem Übergangsbereich zwischen Bereichen (134, 136) unterschiedlicher Dicke aufweisen, und/oder
2.5 wenigstens eine sich in einer Umfangsrichtung erstreckende Umfangsfläche (150) zum Begrenzen einer zugeordneten Nut (24) in einer radialen Richtung und/oder zum Positionieren von sich in einer zugeordneten Nut (24) befindlichen Leitern in radialer Richtung aufweisen, und/oder
2.6 wenigstens eine Stufe (146, 150) an einer Seitenfläche aufweisen, und/oder
2.7 in eine Steck-Stegposition (106), in der die Stege (38) Nuten (24) zum Stecken wenigstens eines Kranzes (14a-14c) von Leitern in die Sammelaufnahme (12) begrenzen, bewegbar sind, und/oder
2.8 in eine zurückgezogene Stegposition (106), in der die Stege (38) den axialen Weg zum Einführen der Leiter in die Bauteilnuten beim Einfügen der Kranzanordnung (82) freigeben, bewegbar sind.

3. Kranzanordnungs- und -fügevorrichtung (10) nach einem der voranstehenden Ansprüche, **dadurch gekennzeichnet, dass** die Nuten (24) der Sammelaufnahme (12)
3.1 durch eine sich in Umfangsrichtung erstreckende Nutbegrenzung (34) an einer ersten radialen Seite begrenzbar sind, und/oder
3.2 durch wenigstens einen äußeren Ringbereich an einer radial äußeren Seite begrenzt sind, und/oder
3.3 bei in einer Steck-Stegposition (106) befindlichen Stegen (38) an einer zweiten radialen Seite jeweils eine Öffnung (40) aufweisen, und/oder
3.4 bei in einer Steck-Stegposition (106) befindlichen Stegen (38) durch wenigstens eine an den Stegen (38) ausgebildete sich in einer Umfangsrichtung erstreckende Umfangsfläche (150) oder Stufenfläche radial begrenzt sind, und/oder
3.5 durch Bewegung von Stegschiebern (84), an denen die Stege (38) ausgebildet sind, in ihren radialen Abmessungen und/oder in ihren Abmessungen in Umfangsrichtung veränderbar sind.

4. Kranzanordnungs- und -fügevorrichtung (10) nach einem der voranstehenden Ansprüche, **dadurch gekennzeichnet**,
4.1 dass die Stegbewegungseinrichtung (92) radial außen an der Sammelaufnahme (12) angeordnet ist und/oder
4.2 dass eine Steuerung (30) zur Steuerung der Stegbewegungseinrichtung (92), der Bauteilpositioniereinrichtung (94) und der Kranzanordnungsfügeeinrichtung (96) vorgesehen ist.

5. Kranzanordnungs- und -fügevorrichtung (10) nach einem der voranstehenden Ansprüche, **gekennzeichnet durch** eine Kranzpositioniereinrichtung (26) zum relativen axialen Positionieren eines oder mehrerer der Kränze (14a-14c), wobei die Kranzpositioniereinrichtung (26) eine Stützeinrichtung (46) zum Stützen der elektrischen Leiter eines zu steckenden Kranzes (14a-14c) in einer axialen Steckposition (16), bei der die Leiter aus der Sammelaufnahme (12) weiter vorstehen, und eine Halteeinrichtung (48) zum Halten der Leiter eines fertig gesteckten Kranzes (14a, 14b) in einer Lagerposition (32), in der die Leiter des fertig gesteckten Kranzes (14a, 14b) weiter in die Sammelaufnahme (12) eingefahren sind, aufweist und dazu ausgebildet ist, mit der Stützeinrichtung (46) die Leiter eines zu steckenden zweiten Kranzes (14b) zu stützen, während die Halteeinrichtung die Leiter eines fertig gesteckten ersten Kranzes (14a) in der Lagerposition (32) hält.

6. Kranzanordnungs- und -fügevorrichtung (10) nach Anspruch 5, **gekennzeichnet durch** eines oder mehrere der folgenden Merkmale:
6.1 dass die Kranzpositioniereinrichtung (26) radial und/oder axial bewegliche Kranzpositionier-Schieber (52) aufweist, an der die Stützeinrichtung (46) und/oder die Halteeinrichtung (48) ausgebildet sind;
6.2 dass die Stützeinrichtung (46) an einer sich quer zur Achse erstreckenden Stirnfläche (70) der einzelnen Kranzpositionier-Schieber (52) ausgebildete Anschläge für die Leiter aufweist und/oder dass die Halteeinrichtung (48) eine gegen eine Nutbegrenzung (34) der Nut (24) verfahrbare Mantelfläche (74) an den einzelnen Kranzpositionier-Schiebern (52) aufweist, so dass die Leiter zwischen der Mantelfläche (74) und der Nutbegrenzung (34) positioniert werden können;
6.3 dass die Nuten (24) an einer inneren radialen Seite offen ausgebildet sind und dass eine Kranzpositionier-Schieber-Bewegungseinrichtung (53) zum radialen und/oder axialen Bewegen der Kranzpositionier-Schieber (52) radial innerhalb der Sammelaufnahme (12) anordenbar ist;
6.4 dass die Lagerposition (32) eine Anschlagposition ist, an der die vorzugsweise U-förmigen Leiter mit ihrem U-förmigen Ende an Steg-Stirnflächen (144) der Stege (38) der Sammelaufnahme (12) anschlagen und **dadurch** axial positionierbar sind;
6.5 dass eine Greifeinrichtung (28) zum Greifen und Stecken der Leiter zu einem Kranz vorgesehen ist,
6.6 dass die Steuerung (30) zum Steuern der Kranzpositioniereinrichtung (26) und der Greifeinrichtung (28) ausgebildet ist.

7. Kranzanordnungs- und -fügevorrichtung (10) nach Anspruch 4 oder nach einem der Ansprüche 5 oder 6, soweit auf Anspruch 4 zurückbezogen, **dadurch gekennzeichnet, dass** die Steuerung (30) dazu ausgebildet ist, die Stegbewegungseinrichtung (92), die Bauteilpositioniereinrichtung (94) und die Kranzanordnungsfügeeinrichtung (96) anzusteuern zum Anordnen des wenigstens einen Kranzes (14a, 14b, 14c) in Nuten (24) einer Sammelaufnahme (12), die konzentrisch um eine Achse der Sammelaufnahme (12) angeordnet sind und durch bewegbare radiale Stege (38) begrenzt sind, zum Ausrichten des Bauteils zu der Sammelaufnahme (12), zum Wegbewegen der Stege (38), und zum axialen Einschieben der Kranzanordnung (82) aus der Sammelaufnahme (12) in das Bauteil.

8. Kranzanordnungs- und -fügeverfahren (10) zum Bilden und Einfügen einer Kranzanordnung (82) aus wenigstens einem Kranz oder mehreren konzentrisch angeordneten Kränzen (14a-14c) von vorzugsweise U-förmigen elektrischen Leitern in ein Bauteil einer elektrischen Maschine, umfassend 8.1 Anordnen des wenigstens einen Kranzes (14a, 14b, 14c) in Nuten (24) einer Sammelaufnahme (12), die konzentrisch um eine Achse der Sammelaufnahme (12) angeordnet sind und durch bewegbare radiale Stege (38) begrenzt sind,
8.2 Ausrichten des Bauteils zu der Sammelaufnahme (12),
8.3 Wegbewegen der Stege, und
8.4 Axiales Einschieben der Kranzanordnung (82) aus der Sammelaufnahme (12) in das Bauteil, **gekennzeichnet durch** Verengen der Abmessung der Nuten (24) in Umfangsrichtung zum Positionieren der Leiter in Umfangsrichtung vor dem Einschieben.

9. Kranzanordnungs- und -fügeverfahren nach Anspruch 8, **gekennzeichnet durch** radiales Bewegen einer sich in Umfangsrichtung erstreckenden Nutbegrenzung (34, 150) zum radialen Positionieren der Leiter in den Nuten (24) vor dem Einschieben.

10. Kranzanordnungs- und -fügeverfahren nach einem der Ansprüche 8 oder 9, **dadurch gekennzeichnet, dass** Schritt 8.1 umfasst:
a) Stecken elektrischer Leiter in die Nuten (24) der Sammelaufnahme (12) an einer axialen Steckposition (16), an der die Leiter weiter aus der Sammelaufnahme (12) axial vorstehen, um einen ersten Kranz (14a) zu bilden,
b) axiales Verlagern des ersten Kranzes (14a) aus der axialen Steckposition (16) weiter in die Sammelaufnahme (12) hinein in eine Lagerposition (32),
c) Stecken elektrischer Leiter in die Nuten (24) der Sammelaufnahme (12) an der axialen Steckposition (16), um einen zweiten Kranz (14b) zu bilden, während der erste Kranz (14a) an der Lagerposition (32) gehalten wird, und
d) axiales Verlagern des zweiten Kranzes (14b) in die Lagerposition (32).

11. Kranzanordnungs- und -fügeverfahren nach Anspruch 10, **dadurch gekennzeichnet, dass** Schritt 8.1 weiter umfasst:
e) Stecken elektrischer Leiter in die Nuten (24) der Sammelaufnahme (12) an der Steckposition, um einen dritten Kranz (14c) zu bilden, während der erste und der zweite Kranz (14a, 14b) an der Lagerposition (32) gehalten wird, und
f) axiales Verlagern des dritten Kranzes (14c) in die Lagerposition (32).

12. Kranzanordnungs- und fügeverfahren nach einem der Ansprüche 10 oder 11, **dadurch gekennzeichnet**,
12.1 dass als erster Kranz (14a) ein äußerer Kranz gesteckt wird und der zweite Kranz (14b) weiter radial innen als der erste Kranz (14a) gesteckt wird und/oder
12.2 dass als zweiter Kranz (14b) ein mittlerer Kranz gesteckt wird und/oder
12.3 dass als dritter Kranz (14c) ein innerer Kranz gesteckt wird und/oder
12.4 dass die Leiter beim Stecken durch bewegliche Anschläge abgestützt werden, so dass sie beim Stecken an der Steckposition (16) verbleiben und/oder
12.5 dass das axiale Verlagern durch Fallenlassen erfolgt und/oder
12.6 dass das Halten wenigstens eines bereits vorher gesteckten Kranzes (14a, 14b) an der Lagerposition (32) durch Positionieren der Leiter zwischen einem Kranzpositionier-Schieber (52) und einem Ringbereich der Sammelaufnahme (12) erfolgt und/oder
12.7 dass das axiale Verlagern mittels Schwerkraft durch Wegbewegen einer Stützeinrichtung (46) erfolgt, und/oder
12.8 dass das axiale Verlagern durch eine Relativbewegung zwischen der Sammelaufnahme (12) und einer Kranzpositioniereinrichtung (26) erfolgt, und/oder
12.9 dass das axiale Verlagern des jeweiligen Kranzes aus der Steckposition in eine tiefere Anschlagsposition als Lagerposition (32) erfolgt, in der die U-förmigen Enden der Leiter auf Stegen (38) der Sammelaufnahme (12), welche die Nuten (24) in Umfangsrichtung begrenzen, aufliegen.

13. Kranzanordnungs- und -fügeverfahren nach einem der Ansprüche 9 bis 12, **dadurch gekennzeichnet, dass** das Kranzanordnungs- und fügeverfahren mit einer Kranzanordnungs- und - fügevorrichtung (10) nach einem der Ansprüche 1 bis 7 durchgeführt wird.

14. Computerprogrammprodukt, umfassend Steueranweisungen, die, wenn in eine Steuerung (30) einer Kranzanordnungs- und -fügevorrichtung (10) nach einem der Ansprüche 1 bis 7 geladen, die Kranzanordnungs- und -fügevorrichtung (10) veranlassen, das Kranzanordnungs- und -fügeverfahren nach einem der Ansprüche 8 bis 13 durchzuführen.

## Claims

1. Ring assembly and inserting device (10) for forming and inserting a ring assembly (82) of at least one ring or a plurality of concentrically arranged rings (14a-14c) of preferably U-shaped electrical conductors into a component of an electrical machine, comprising a collecting receptacle (12) having a plurality of grooves (24) arranged annularly about an axis and bounded by radial webs (38), a web moving device (92) for radially moving the webs (38), a component positioning device (94) for positioning the component in a position aligned with the collecting receptacle (12), and a ring assembly inserting device (96) for axially inserting the ring assembly (82) into the component with the webs (38) retracted from the collecting receptacle (12), **characterized in that** the webs (38) are movable to a positioning web position (108) in which the webs (38) narrow the grooves (24) for positioning the conductors for insertion into component grooves.

2. Ring assembly and inserting device (10) according to claim 1, **characterized in that** the webs (38)
2.1 are formed on web sliders (84) which are radially displaceable by the web moving device (92), and/or
2.2 have radial regions (134, 136, 140) of different thickness, and/or
2.3 have a radially inner free end, and/or
2.4 have inclined surfaces (148) at a transition region between regions (134, 136) of different thickness, and/or
2.5 have at least one circumferential surface (150) extending in a circumferential direction for delimiting an associated groove (24) in a radial direction and/or for positioning conductors located in an associated groove (24) in a radial direction, and/or
2.6 have at least one step (146, 150) on a side face, and/or
2.7. are movable into a plug-in web position (106) in which the webs (38) define grooves (24) for plugging at least one ring (14a-14c) of conductors into the collecting receptacle (12), and/or
2.8 are movable into a retracted web position (106) in which the webs (38) clear the axial path for insertion of the conductors into the component grooves during insertion of the ring assembly (82).

3. Ring assembly and inserting device (10) according to any of the preceding claims, **characterized in that** the grooves (24) of the collecting receptacle (12) 3.1 can be delimited by a circumferentially extending groove boundary (34) on a first radial side, and/or
3.2 are delimited by at least one outer annular region on a radially outer side, and/or
3.3 each have an opening (40) on a second radial side, with the webs (38) in a plug-in web position (106), and/or
3.4 are radially delimited by at least one circumferential surface (150) or step surface formed on the webs (38) and extending in a circumferential direction, with the webs (38) in a plug-in web position (106), and/or
3.5 are variable in their radial dimensions and/or in their dimensions in the circumferential direction by movement of web sliders (84) on which the webs (38) are formed.

4. Ring assembly and inserting device (10) according to any of the preceding claims, characterized
4.1 in that the web moving device (92) is arranged radially on the outside of the collecting receptacle (12) and/or
4.2 in that a controller (30) is provided for controlling the web moving device (92), the component positioning device (94) and the ring assembly inserting device (96).

5. Ring assembly and inserting device (10) according to any of the preceding claims, **characterized by** a ring positioning device (26) for relatively axially positioning one or more of said rings (14a-14c), said ring positioning device (26) comprising a support device (46) for supporting the electrical conductors of a ring (14a-14c) to be formed in an axial plug-in position (16) in which the conductors protrude further from the collecting receptacle (12), and a holding device (48) for holding the conductors of a finished plugged ring (14a, 14b) in a storage position (32), in which the conductors of the finished plugged ring (14a, 14b) are retracted further into the collecting receptacle (12), and designed to support the conductors of a second ring (14b) to be plugged with the supporting device (46), while the holding device holds the conductors of a finished plugged ring (14a) in the storage position (32).

6. Ring assembly and inserting device (10) according to claim 5, **characterized by** one or more of the following features:
6.1 that the ring positioning device (26) has radially and/or axially movable ring positioning sliders (52) on which the supporting device (46) and/or the holding device (48) are formed;
6.2 that the supporting device (46) has stops for the conductors which are formed on an end face (70) of the individual ring positioning sliders (52) extending transversely to the axis and/or in that the holding device (48) has a lateral surface (74) on the individual ring positioning sliders (52) which can be moved against a groove boundary (34) of the groove (24), so that the conductors can be positioned between the lateral surface (74) and the groove boundary (34);
6.3 that the grooves (24) are formed open on an inner radial side and that a ring positioning slider movement direction (53) for radial and/or axial movement of the ring positioning sliders (52) can be arranged radially within the collecting receptacle (12);
6.4 that the storage position (32) is a stop position at which the preferably U-shaped conductors abut with their U-shaped end against web end faces (144) of the webs (38) of the collecting receptacle (12) and can thereby be positioned axially;
6.5 that a gripping device (28) is provided for gripping and plugging the conductors to form a ring;
6.6 that the controller (30) is designed to control the ring positioning device (26) and the gripping device (28).

7. Ring assembly and inserting device (10) according to claim 4 or according to one of claims 5 or 6, as far as referred back to claim 4, **characterized in that** the controller (30) is adapted to control the web moving device (92), the component positioning device (94) and the ring assembly inserting device (96) for arranging the at least one ring (14a, 14b, 14c) in grooves (24) of a collecting receptacle (12) arranged concentrically about an axis of the collecting receptacle (12) and defined by movable radial webs (38), for aligning the component with the collecting receptacle (12), for moving the webs (38) away, and for axially inserting the ring assembly (82) from the collecting receptacle (12) into the component.

8. Ring assembly and inserting method (10) for forming and inserting a ring assembly (82) of at least one ring or a plurality of concentrically arranged rings (14a-14c) of preferably U-shaped electrical conductors into a component of an electrical machine, comprising
8.1 arranging the at least one ring (14a, 14b, 14c) in grooves (24) of a collecting receptacle (12), which grooves are arranged concentrically about an axis of the collecting receptacle (12) and are delimited by movable radial webs (38),
8.2 aligning the component with respect to the collecting receptacle (12),
8.3 moving the webs away and
8.4 axial insertion of the ring assembly (82) from the collecting receptacle (12) into the component, **characterized by** narrowing the dimension of the grooves (24) in the circumferential direction for positioning the conductors in the circumferential direction prior to insertion.

9. Ring assembly and inserting method according to claim 8, **characterized by** radially moving a circumferentially extending groove boundary (34, 150) for radially positioning the conductors in the grooves (24) prior to insertion.

10. Ring assembly and inserting method according to any of claims 8 or 9, **characterized in that** step 8.1 comprises:
a) plugging electrical conductors into the grooves (24) of the collecting receptacle (12) at an axial plug-in position (16) where the conductors project axially further from the collecting receptacle (12) to form a first ring (14a),
b) axially displacing the first ring (14a) from the axial plug-in position (16) further into the collecting receptacle (12) to a storage position (32),
c) plugging electrical conductors into the grooves (24) of the collecting receptacle (12) at the axial plug-in position (16) to form a second ring (14b) while holding the first ring (14a) at the storage position (32), and
d) axially displacing the second ring (14b) to the storage position (32).

11. Ring assembly and inserting method according to claim 10, **characterized in that** step 8.1 further comprises:
e) plugging electrical conductors into the grooves (24) of the collecting receptacle (12) at the plug-in position to form a third ring (14c) while holding the first and second rings (14a, 14b) at the storage position (32); and
f) axially displacing the third ring (14c) to the storage position (32).

12. Ring assembly and inserting method according to any of claims 10 or 11, **characterized in**
12.1 that an outer rim is plugged to form the first ring (14a) and the second ring (14b) is plugged further radially inwards than the first ring (14a) and/or
12.2 that a central ring is plugged to form the second ring (14b) and/or
12.3 that an inner ring is plugged to form the third ring (14c) and/or
12.4 that the conductors are supported by movable stops during plugging so that they remain in the plug-in position (16) during plugging and/or
12.5 that the axial displacement is effected by dropping and/or
12.6 that at least one previously plugged ring (14a, 14b) is held at the storage position (32) by positioning the conductors between a ring positioning slider (52) and an annular region of the collecting receptacle (12) and/or
12.7 that the axial displacement is effected by means of gravity by moving away a supporting device (46) and/or
12.8 that the axial displacement is effected by a relative movement between the collecting receptacle (12) and a ring positioning device (26) and/or
12.9 that the axial displacement of the respective ring from the plugged position into a lower connection position as a storage position (32), in which the U-shaped ends of the conductors rest on webs (38) of the collecting receptacle (12) which delimit the grooves (24) in the circumferential direction, is effected.

13. Ring assembly and inserting method according to any of claims 9 to 12, **characterized in that** ring assembly and inserting method is carried out with a ring assembly and inserting device (10) according to any of claims 1 to 7.

14. A computer program product comprising control instructions which, when loaded into a controller (30) of a ring assembly and inserting device (10) according to any of claims 1 to 7, cause the ring assembly and inserting device (10) to perform the ring assembly and inserting method according to any one of claims 8 to 13.

## Revendications

1. Dispositif d'agencement et d'assemblage de couronne (10) pour former et insérer un ensemble de couronnes (82) constitué d'au moins une couronne ou de plusieurs couronnes (14a-14c) disposées de manière concentrique de conducteurs électriques de préférence en forme de U dans un composant d'une machine électrique, comprenant un logement collecteur (12) avec plusieurs rainures (24) disposées de manière annulaire autour d'un axe et délimitées par des entretoises radiales (38), un dispositif de déplacement de l'entretoise (92) pour déplacer radialement les entretoises (38), un dispositif de positionnement du composant (94) pour positionner le composant dans une position alignée avec le logement collecteur (12) et un dispositif de positionnement de l'ensemble de couronne (96) pour insérer axialement l'ensemble de couronne (82) dans le composant lorsque les entretoises (38) sont rétractées du logement collecteur (12), **caractérisé en ce que** les entretoises (38) sont mobiles vers une position de positionnement de l'entretoise (108), dans laquelle les entretoises (38) rétrécissent les rainures (24) pour positionner les conducteurs afin de les insérer dans des rainures de composant.

2. Dispositif d'agencement et d'assemblage de couronne (10) selon la revendication 1, **caractérisé en ce que** les entretoises (38)
2.1 sont formées sur des poussoirs de l'entretoise (84) qui peuvent être déplacés radialement par le dispositif de déplacement de l'entretoise (92), et/ou
2.2 présentent des zones radiales (134, 136, 140) d'épaisseur différente, et/ou
2.3 présentent une extrémité libre radialement intérieure, et/ou
2.4 présentent des surfaces inclinées (148) dans une zone de transition entre des zones (134, 136) d'épaisseur différente, et/ou
2.5 présentent au moins une surface circonférentielle (150) s'étendant dans une direction circonférentielle pour délimiter une rainure associée (24) dans une direction radiale et/ou pour positionner des conducteurs se trouvant dans une rainure associée (24) dans la direction radiale, et/ou
2.6 présentent au moins un gradin (146, 150) sur une surface latérale, et/ou
2.7 peuvent être déplacées dans une position d'enfichage de l'entretoise (106), dans laquelle les entretoises (38) délimitent des rainures (24) pour l'enfichage d'au moins une couronne (14a-14c) de conducteurs dans le logement collecteur (12), et/ou
2.8 peuvent être déplacées dans une position de l'entretoise rétractée (106), dans laquelle les entretoises (38) libèrent le trajet axial pour l'introduction des conducteurs dans les rainures des composants lors de l'insertion de l'ensemble de couronnes (82).

3. Dispositif d'agencement et d'assemblage de couronne (10) selon l'une des revendications précédentes, **caractérisé en ce que** les rainures (24) du logement collecteur (12)
3.1 peuvent être limitées sur un premier côté radial par une limite de rainure (34) s'étendant dans la direction circonférentielle, et/ou
3.2 peuvent être limitées par au moins une zone annulaire extérieure sur un côté radialement extérieur, et/ou
3.3 pour une entretoise (38) se trouvant dans une position d'enfichage (106), présentent chacune une ouverture (40) sur un deuxième côté radial, et/ou
3.4 pour une entretoise (38) se trouvant dans une position d'entretoise enfichable (106), sont limitées radialement par au moins une surface circonférentielle (150) ou une surface étagée formée sur les entretoises (38) et s'étendant dans une direction circonférentielle, et/ou
3.5 leurs dimensions radiales et/ou leurs dimensions dans la direction circonférentielle peuvent être modifiées par le mouvement des poussoirs d'entretoises (84) sur lesquels sont formées les entretoises (38).

4. Dispositif d'agencement et d'assemblage de couronne (10) selon l'une des revendications précédentes, **caractérisé en ce que**
4.1 le dispositif de déplacement de l'entretoise (92) est disposé radialement à l'extérieur du logement collecteur (12) et/ou
4.2 un dispositif de commande (30) est prévue pour commander le dispositif de déplacement de l'entretoise (92), le dispositif de positionnement du composant (94) et le dispositif d'assemblage de l'ensemble de couronne (96).

5. Dispositif d'agencement et d'assemblage de couronne (10) selon l'une des revendications précédentes, **caractérisé par** un dispositif de positionnement de couronne (26) pour positionner axialement de manière relative une ou plusieurs des couronnes (14a-14c), le dispositif de positionnement de couronne (26) comprenant un dispositif de support (46) pour supporter les conducteurs électriques d'une couronne (14a-14c) à enficher dans une position d'enfichage axiale (16) dans laquelle les conducteurs dépassent davantage du logement collecteur (12), et un dispositif de maintien (48) pour maintenir les conducteurs d'une couronne (14a, 14b) complètement enfichée dans une position de stockage (32) dans laquelle les conducteurs de la couronne (14a, 14b) complètement enfichée sont davantage rentrés dans le logement collecteur (12), et est conçu pour supporter avec le dispositif de support (46) les conducteurs d'une deuxième couronne (14b) à enficher, tandis que le dispositif de maintien maintient les conducteurs d'une couronne (14a) complètement enfichée dans la position de stockage (32).

6. Dispositif d'agencement et d'assemblage de couronne (10) selon la revendication 5, **caractérisé par** une ou plusieurs des caractéristiques suivantes:
6.1 que le dispositif de positionnement de couronne (26) présente des coulisseaux de positionnement de couronne (52) mobiles radialement et/ou axialement, sur lesquels sont formés le dispositif de support (46) et/ou le dispositif de maintien (48);
6.2 que le dispositif de support (46) présente des butées pour les conducteurs formées sur une surface frontale (70) s'étendant transversalement à l'axe des différents coulisseaux de positionnement de couronne (52) et/ou que le dispositif de maintien (48) présente une surface d'enveloppe (74) sur les différents coulisseaux de positionnement de couronne (52) pouvant être déplacée contre une limite de rainure (34) de la rainure (24), de sorte que les conducteurs peuvent être positionnés entre la surface d'enveloppe (74) et la limite de rainure (34);
6.3 que les rainures (24) sont réalisées ouvertes sur un côté radial intérieur et qu'un dispositif de déplacement des coulisseaux de positionnement de couronne (53) peut être disposé radialement à l'intérieur du logement collecteur (12) pour le déplacement radial et/ou axial des coulisseaux de positionnement de couronne (52);
6.4 que la position de stockage (32) est une position de butée dans laquelle les conducteurs, de préférence en forme de U, butent par leur extrémité en forme de U contre des surfaces frontales d'entretoises (144) des entretoises (38) du logement collecteur (12) et peuvent ainsi être positionnés axialement;
6.5 qu'il est prévu un dispositif de préhension (28) pour saisir et enficher les conducteurs en une couronne;
6.6 que le dispositif de commande (30) est conçue pour commander le dispositif de positionnement de couronne (26) et le dispositif de préhension (28).

7. Dispositif d'agencement et d'assemblage de couronne (10) selon la revendication 4 ou selon l'une des revendications 5 ou 6, dans la mesure où il est fait référence à la revendication 4, **caractérisé en ce que** le dispositif de commande (30) est adapté pour commander le dispositif de déplacement de l'entretoise (92), le dispositif de positionnement de composant (94) et le dispositif d'assemblage de l'agencement de couronne (96) pour mettre en place l'au moins une couronne (14a, 14b, 14c) dans des rainures (24) d'un logement collecteur (12) qui sont disposées concentriquement autour d'un axe du logement collecteur (12) et qui sont délimitées par des entretoises radiales mobiles (38), pour orienter le composant par rapport au logement collecteur (12), pour éloigner les entretoises (38) et pour insérer axialement l'agencement de couronnes (82) hors du logement collecteur (12) dans le composant.

8. Procédé d'agencement et d'assemblage de couronne (10) pour former et insérer un agencement de couronne (82) constitué d'au moins une couronne ou de plusieurs couronnes (14a-14c) disposées concentriquement de conducteurs électriques de préférence en forme de U dans un composant d'une machine électrique, comprenant
8.1 disposer l'au moins une couronne (14a, 14b, 14c) dans des rainures (24) d'un logement collecteur (12) qui sont disposées de manière concentrique autour d'un axe du logement collecteur (12) et sont délimitées par des entretoises radiales mobiles (38),
8.2 aligner le composant par rapport au logement collecteur (12),
8.3 éloigner les entretoises et
8.4 insérer axialement l'agencement de couronne (82) hors du logement collecteur (12) dans le composant,
**caractérisé par** le rétrécissement de la dimension des rainures (24) dans la direction circonférentielle pour positionner les conducteurs dans la direction circonférentielle avant l'insertion.

9. Procédé d'agencement et d'assemblage de couronne selon la revendication 8, **caractérisé par** le déplacement radial d'une limite de rainure (34, 150) s'étendant dans la direction circonférentielle pour positionner radialement les conducteurs dans les rainures (24) avant l'insertion.

10. Procédé d'agencement et d'assemblage de couronne selon l'une des revendications 8 ou 9, **caractérisé en ce que** l'étape 8.1 comprend:
a) enficher des conducteurs électriques dans les rainures (24) du logement collecteur (12) à une position axiale d'enfichage (16) à laquelle les conducteurs font davantage saillie axialement du logement collecteur (12) pour former une première couronne (14a),
b) déplacer axialement la première couronne (14a) de la position d'enfichage axiale (16) plus loin dans le logement collecteur (12) jusqu'à une position de stockage (32),
c) enficher des conducteurs électriques dans les rainures (24) du logement collecteur (12) à la position d'enfichage axiale (16) pour former une deuxième couronne (14b), tout en maintenant la première couronne (14a) à la position de stockage (32), et
d) déplacer axialement la deuxième couronne (14b) vers la position de stockage (32).

11. Procédé d'agencement et d'assemblage de couronne selon la revendication 10, **caractérisé en ce que** l'étape 8.1 comprend en outre:
e) enficher des conducteurs électriques dans les rainures (24) du logement collecteur (12) à la position d'enfichage pour former une troisième couronne (14c), tout en maintenant la première et la deuxième couronne (14a, 14b) à la position de stockage (32), et
f) déplacer axialement la troisième couronne (14c) vers la position de stockage (32).

12. Procédé d'agencement et d'assemblage de couronne selon l'une des revendications 10 ou 11, caractérisé en ce
12.1 qu'une couronne extérieure est mise comme première couronne (14a) et la deuxième couronne (14b) est mise radialement plus à l'intérieur que la première couronne (14a) et/ou
12.2 qu'une couronne centrale est mise comme deuxième couronne (14b) et/ou
12.3 qu'une couronne intérieure est mise comme troisième couronne (14c) et/ou
12.4 que les conducteurs sont soutenus par des butées mobiles lors de l'enfichage, de sorte qu'ils restent dans la position d'enfichage (16) lors de l'enfichage et/ou
12.5 que le déplacement axial s'effectue par chute et/ou
12.6 que le maintien d'au moins une couronne (14a, 14b) déjà enfichée auparavant dans la position de stockage (32) s'effectue par positionnement des conducteurs entre un coulisseau de positionnement de couronne (52) et une zone annulaire du logement collecteur (12) et/ou
12.7 que le déplacement axial s'effectue par gravité en éloignant un dispositif de support (46) et/ou
12.8 que le déplacement axial s'effectue par un mouvement relatif entre le logement collecteur (12) et un dispositif de positionnement de couronne (26) et/ou
12.9 que le déplacement axial de la couronne respective s'effectue de la position d'enfichage dans une position de raccordement plus basse que la position de stockage (32), dans laquelle les extrémités en forme de U des conducteurs reposent sur des entretoises (38) du logement collecteur (12), qui délimitent les rainures (24) dans le sens périphérique.

13. Procédé d'agencement et d'assemblage de couronne selon l'une des revendications 9 à 12, **caractérisé en ce que** le procédé d'agencement et d'assemblage de couronne est mis en œuvre avec un dispositif d'agencement et d'assemblage de couronne (10) selon l'une des revendications 1 à 7.

14. Produit programme d'ordinateur comprenant des instructions de commande qui, lorsqu'elles sont chargées dans un dispositif de commande (30) d'un dispositif d'agencement et d'assemblage de couronne (10) selon l'une quelconque des revendications 1 à 7, amènent le dispositif d'agencement et d'assemblage de couronne (10) à mettre en œuvre le procédé d'agencement et d'assemblage de couronne selon l'une quelconque des revendications 8 à 13.
